# EUROPEAN PATENT SPECIFICATION

(11) **EP 3 617 293 B1**
(45) Date of publication and mention of the grant of the patent: **29.03.2023**
(21) Application number: 19193351.4
(22) Date of filing: 23.08.2019
(51) Int. Cl.: C09K 19/44, C09K 19/04, C09K 19/30, C09K 19/12, C09K 19/54, C09K 19/34

(54) **LIQUID-CRYSTALLINE MEDIUM AND LIQUID-CRYSTAL DISPLAY**
FLÜSSIGKRISTALLINES MEDIUM UND FLÜSSIGKRISTALLANZEIGE
SUPPORT À CRISTAUX LIQUIDES ET AFFICHAGE À CRISTAUX LIQUIDES

(30) Priority: 28.08.2018 EP 18191059
(43) Date of publication of application: 04.03.2020
(73) Proprietor: Merck Patent GmbH, 64293 Darmstadt (DE)
(72) Inventor: Choi, Chang-Suk, ASAN-SI, CHUNGCHEONGNAM-DO 31575 (KR); Yun, Chang-Jun, HWASEONG-SI, GYEONGGI-DO 18476 (KR); Han, Yeon-Jeong, GUNPO-SI, GYEONGGI-DO 15866 (KR); Lee, Hee-Kyu, PYEONGTAEK 451-783 (KR); Yun, Yong-Kuk, 60486 FRANKFURT AM MAIN (DE)

(56) References cited:
- EP-A1- 3 375 842
- EP-A2- 3 246 374

## Description

### Field of the invention

The present invention relates to liquid-crystalline media and to liquid-crystal displays containing these media, especially to displays addressed by an active matrix and in particular to displays of the twisted nematic (TN), in-plane switching (IPS) or fringe-field switching (FFS) type.

### State of the art and problem to be solved

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is substantially perpendicular to the substrates or the liquid-crystal layer. Besides these modes, there are also electro-optical modes that utilise an electric field which is substantially parallel to the substrates or the liquid-crystal layer, such as, for example, the in-plane switching (IPS) mode (as disclosed, for example, in DE 40 00 451 and EP 0 588 568) and the fringe-field switching (FFS) mode, in which a strong "fringe field" is present, i.e. a strong electric field close to the edge of the electrodes and, throughout the cell, an electric field which has both a strong vertical component and a strong horizontal component. These latter two electro-optical modes in particular are used for LCDs in modern desktop monitors and are intended for use in displays for TV sets and multimedia applications. The liquid crystals in accordance with the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

For these displays, novel liquid-crystalline media having improved properties are required. The addressing times in particular have to be improved for many types of application. Thus, liquid-crystalline media having lower viscosities (η), especially having lower rotational viscosities (γ₁), are required. In particular for monitor applications, the rotational viscosity should be 80 mPa·s or less, preferably 60 mPa·s or less and especially 55 mPa·s or less. Besides this parameter, the media must have a nematic phase range of suitable width and position and an appropriate birefringence (Δn). In addition, the dielectric anisotropy (Δε) should be sufficiently high to allow a fairly low operating voltage. Δε should preferably be greater than 2 and more preferably greater than 3, but preferably not greater than 20 and in particular not greater than 17, as this would prevent an at least fairly high resistivity.

For applications as displays for notebooks or other mobile applications, the rotational viscosity should preferably be 120 mPa·s or less and particularly preferably 100 mPa·s or less. The dielectric anisotropy (Δε) here should preferably be greater than 8 and particularly preferably greater than 12.

The displays in accordance with the present invention are preferably addressed by an active matrix (active-matrix LCDs, AMDs for short), preferably by a matrix of thin-film transistors (TFTs). However, the liquid crystals according to the invention can also advantageously be used in displays having other known addressing means.

There are numerous different display modes which use composite systems of low-molecular-weight liquid-crystal materials together with polymeric materials. These are, for example, polymer dispersed liquid crystal (PDLC), nematic curvilinearly aligned phase (NCAP) and polymer network (PN) systems, as disclosed, for example, in WO 91/05 029, or axially symmetric microdomain (ASM) systems and others. In contrast to these, the modes that are especially preferred in accordance with the present invention use the liquid-crystal medium as such, oriented on surfaces. These surfaces are typically pretreated in order to achieve uniform alignment of the liquid-crystal material. The display modes in accordance with the present invention preferably use an electric field which is substantially parallel to the composite layer.

Liquid-crystal compositions which are suitable for LCDs and especially for IPS displays are known, for example, from JP 07-181 439 (A), EP 0 667 555, EP 0 673 986, DE 195 09 410, DE 195 28 106, DE 195 28 107, WO 96/23 851 and WO 96/28 521. However, these compositions have severe disadvantages. Amongst other deficiencies, most of them result in disadvantageously long addressing times, have inadequate values of the resistivity and/or require excessively high operating voltages. In addition, there is a need to improve the low-temperature behaviour of LCDs. Both an improvement in the operating properties and also in the shelf life and, in particular, in the stability to visible light and UV radiation, but also to heat and, in particular, to a combination of heat and light and/or UV radiation, are necessary here.

This relates not only to the usual life cycle of the displays, but also to individual steps in the production of the displays in which these are subjected to in some cases extreme loads compared with normal operation. Thus, for example, a process is frequently employed in the production of the bonding of the frame which causes very high thermal loads of the displays which already contain the liquid crystal. In order that the liquid crystal survives this strong thermal load as far as possible without damage, it is advantageous correspondingly to add one or more thermal stabilisers to the liquid-crystal formulation. In subsequent everyday operation of the displays, loads due to the light of the backlighting and due to the ambient light, typically daylight, and temperature loads from the environment may then occur as important load factors. This means that, in particular, the combination of various load quantities may have particular importance in practice.

Such a combination of various loads may occur both in a sequential time sequence and also in parallel in time. Thus, for example, displays which are used as electronic advertising panels may simultaneously be subjected to strong heating and insolation during operation and in the rest state, depending on the set-up location.

EP 3 246 374, amongst others, discloses dielectrically positive LC mixtures comprising

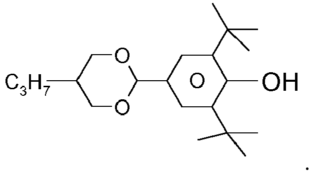

EP 3 112 441 also discloses dielectrically positive LC mixtures comprising 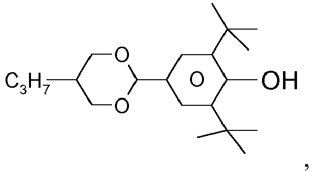 which, at the same time, preferably comprise 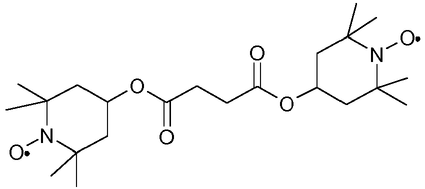 or alternatively

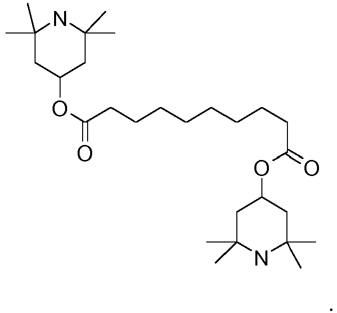

Many liquid-crystal media, particularly those having large polarities or high dielectric anisotropy, do not meet the high stability requirements necessary for practical applications.

There is therefore a considerable demand for liquid-crystalline media having suitable properties for practical applications, such as a broad nematic phase range, suitable optical anisotropy Δn corresponding to the display type used, a high Δε and particularly low viscosities for particularly short response times.

### Present invention

Surprisingly, it has now been found that it is possible to achieve liquid-crystalline media having a suitably high Δε, a suitable phase range and suitable Δn which do not have the disadvantages of the materials from the prior art, or at least only do so to a significantly reduced extent.

Surprisingly, it has been found here that the compounds of the formulae S1 and S2a as indicated below, result in considerable, in most cases adequate, stabilisation of liquid-crystal mixtures.

The invention relates to a liquid-crystal medium, as defined in claim 1 and indicated below, having positive dielectric anisotropy, characterised in that it comprises one or more compounds of the formulae S1 and S2a, one or more compounds selected from the group of the compounds of the formulae II and III, a plurality of compounds selected from the group of compounds of the formulae CY, PY, PYP and LY and one or more compounds of the formula IV in a total concentration in the range of from 40% to 60%, and with the condition, that the compositions M16 to M20 and M27 disclosed in EP 3 375 842 A1 are excluded.

Also described herein is a liquid-crystalline medium having a nematic phase and positive dielectric anisotropy which comprises
a) one or more compounds of the formula S1 and one or more compounds of formula S2, preferably in a concentration in the range from 1 ppm to 5,000 ppm each, more preferably in a concentration in the range from 100 ppm to 2,000 ppm each, 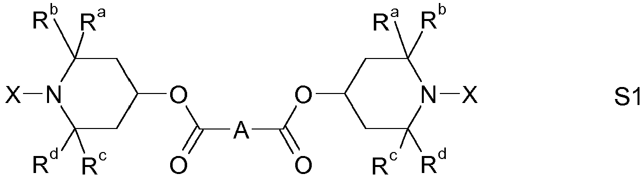 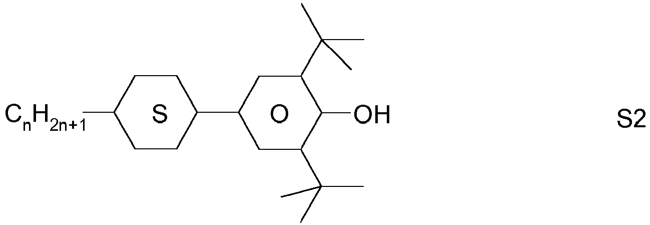 wherein the individual radicals, independently of each other and on each occurrence identically or differently, have the following meanings: 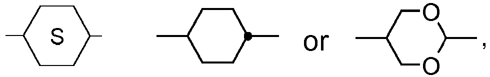
   - R^{a-d}: independently of each other, preferably identical to each other, straight chain or branched alkyl with 1 to 10 C atoms, preferably with 1 to 6 C atoms, very preferably with 1 to 4 C atoms, most preferably methyl,
   - X: independently of each other, preferably identical to each other, H, CH₃, OH or O•, preferably H,
   - A: straight-chain, branched or cyclic alkylene with 1 to 20 C-atoms which is optionally substituted, preferably -(CH₂)₈-, and
   - n: an integer from 1 to 6, preferably 3.
   and
b) one or more compounds selected from the group of the compounds of the formulae II and III 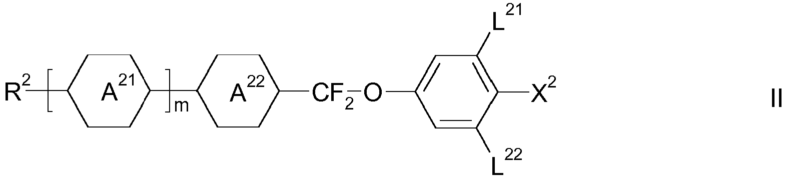 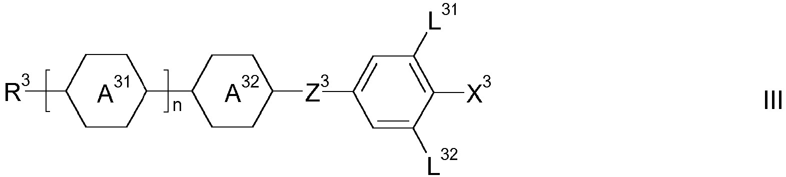 in which
   - R² and R³,: independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and preferably R²and R³ denote alkyl or alkenyl, 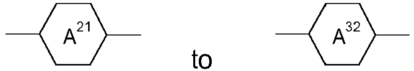 on each appearance, independently of one another, denote 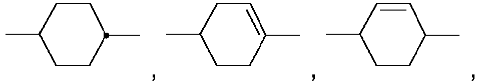 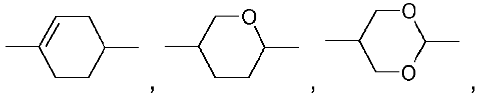 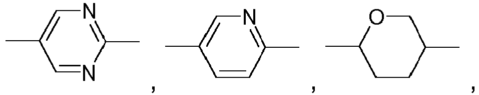 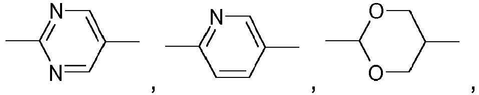 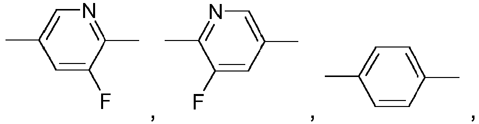 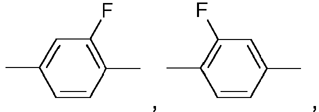 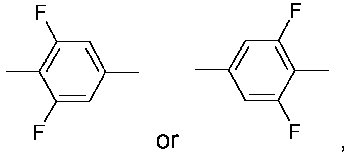 preferably 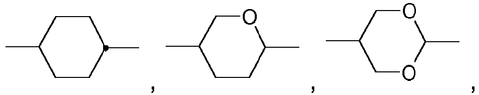 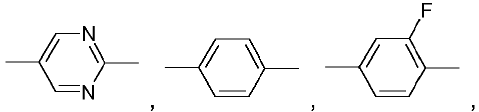 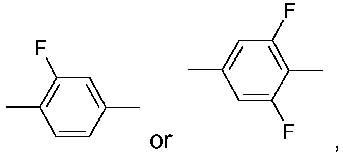
   - L²¹, L²², L³¹ and L³²,: independently of one another, denote H or F, preferably
   - L²¹ and/or L³¹: denote F,
   - X² and X³,: independently of one another, denote halogen, halogenated alkyl or alkoxy having 1 to 3 C atoms or halogenated alkenyl or alkenyloxy having 2 or 3 C atoms, preferably F, Cl, -OCF₃ or -O-CH=CF₂, -CF₃, especially F, -OCF₃ or -O-CH=CF₂,
   - Z³: denotes -CH₂CH₂-, -CF₂CF₂-, -COO-, *trans*-CH=CH-, *trans*-CF=CF-, -CH₂O- or a single bond, preferably -CH₂CH₂-, -COO-, *trans*-CH=CH- or a single bond and very preferably -COO-, *trans*-CH=CH- or a single bond, and
   - m and n,: independently of one another, denote 0, 1, 2 or 3,
   - m: preferably denotes 1, 2 or 3, and
   - n: preferably denotes 0, 1 or 2 and particularly preferably 1 or 2,
   and/or
c) one or more compounds of the formula IV 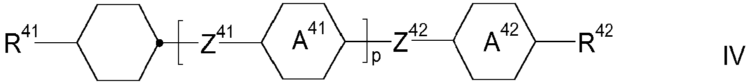 in which
   - R⁴¹ and R⁴²,: independently of one another, have the meaning indicated for R² above under formula II, preferably R⁴¹ denotes alkyl and R⁴² denotes alkyl or alkoxy or R⁴¹ denotes alkenyl and R⁴² denotes alkyl, 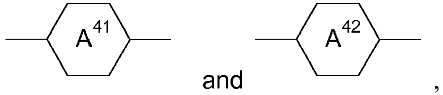 independently of one another, and, if 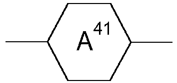 occurs twice, also these independently of one another, denote 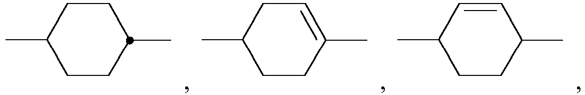 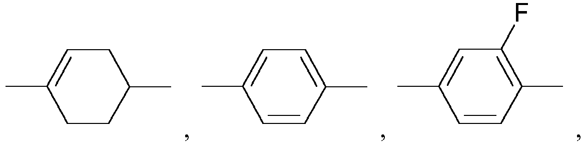 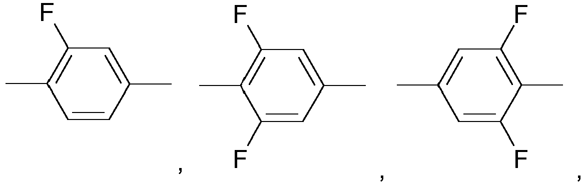 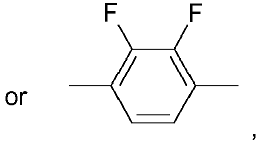 preferably one or more of 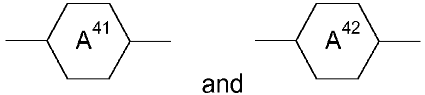 denote(s) 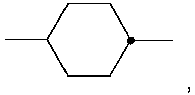
   - Z⁴¹ and Z⁴²,: independently of one another and, if Z⁴¹ occurs twice, also these independently of one another, denote -CH₂CH₂-, -COO-, *trans*-CH=CH-, *trans*-CF=CF-, -CH₂O-, -CF₂O-, -C=C- or a single bond, preferably one or more of them denote(s) a single bond, and
   - p: denotes 0, 1 or 2, preferably 0 or 1,
   and/or
d) one or more compounds of the formula VIII 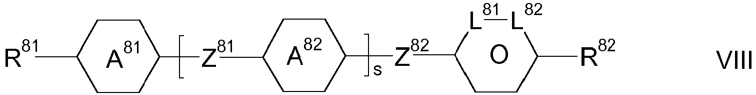 in which
   - R⁸¹ and R⁸²,: independently of one another, have the meaning indicated for R² above under formula II, and 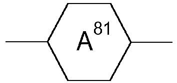 denotes 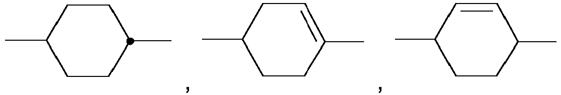 or 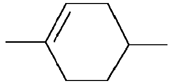 , preferably 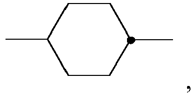 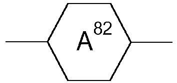 denotes 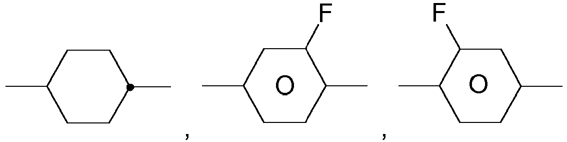 or 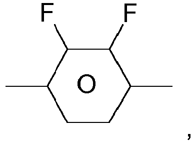
   - Z⁸¹ and Z⁸²,: independently of one another, denote -CH₂CH₂-, -C=C-, -COO-, *trans*-CH=CH-, *trans*-CF=CF-, -CH₂O-, -CF₂O- or a single bond, preferably one or more of them denote(s) a single bond and very preferably both denote a single bond,
   - L⁸¹ and L⁸²,: independently of one another, denote C-F or N, preferably one of L⁸¹ and L⁸² denotes or both denote C-F and very preferably both denote C-F, and
   - s: denotes 0 or 1 and
   - L⁸¹ and L⁸²,: independently of one another, denote C-F or N, preferably one of L⁸¹ and L⁸² or both denote(s) C-F and very preferably both denote C-F, and in case 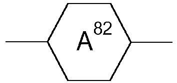 denotes 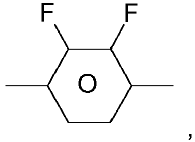 one of
   - L⁸¹ and L⁸²: or both alternatively may denote C-H

The invention furthermore relates to an LC medium as described above and below, which additionally comprises one or more polymerisable compounds.

In the present application, the elements all include their respective isotopes. In particular, one or more H in the compounds may be replaced by D, and this is also particularly preferred in some embodiments. A correspondingly high degree of deuteration of the corresponding compounds enables, for example, detection and recognition of the compounds. This is very helpful in some cases, in particular in the case of the compounds of the formulae S1 and S2.

In the present application,
- alkyl: particularly preferably denotes straight-chain alkyl, in particular CH₃-, C₂H₅-, *n*-C₃H₇-, *n*-C₄H₉- or *n*-C₅H₁₁-, and
- alkenyl: particularly preferably denotes CH₂=CH-, *E*-CH₃-CH=CH-, CH₂=CH-CH₂-CH₂-, *E*-CH₃-CH=CH-CH₂-CH₂- or *E*-(n-C₃H₇)-CH=CH-.

The liquid-crystalline media in accordance with the present application preferably comprise in total 1 ppm to 25,000 ppm, preferably 50 ppm to 20,000 ppm, even more preferably 100 to 15,000 ppm, preferably up to 10,000 ppm, and, very particularly preferably, 200 ppm to 10,000 ppm, of compounds of the formulae S1 and S2. In a further preferred embodiment, the liquid-crystalline media in accordance with the present application comprise in total 1 ppm to 2,000 ppm, preferably 10 ppm to 1,000 ppm, even more preferably 20 to 600 ppm, preferably up to 500 ppm, and, very particularly preferably, 50 ppm to 400 ppm, of compounds of the formulae S1 and S2.

The compounds of the formulae S1 and S2 are eminently suitable as stabilisers in liquid-crystal mixtures. In particular, they provide very efficient heat stabilisation of such mixtures. In contrast to these compounds, compounds known to date which provide good heat stabilisation result in a more or less considerable decrease in the "voltage holding ratio" (VHR or merely HR for short) on UV exposure. In comparison, the compounds of the formulae S1 and S2 exhibit a significant improvement. Although the HR of the mixtures after UV exposure frequently still decreases, this decrease in the HR on UV exposure is, however, significantly reduced compared to that which occurs in the case of the materials known to date.

Preferred compounds of formula S1 are selected from the following sub-formulae

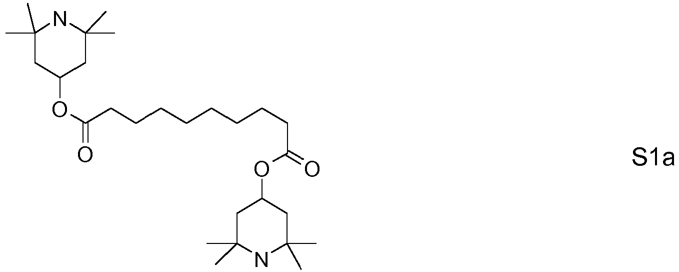

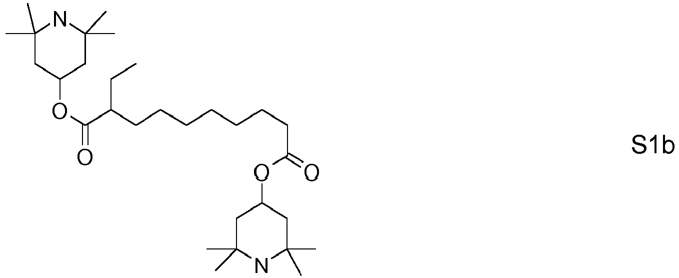

Most preferred are compounds of formula S1a.

Preferred compounds of formula S2 are selected from the following sub-formulae

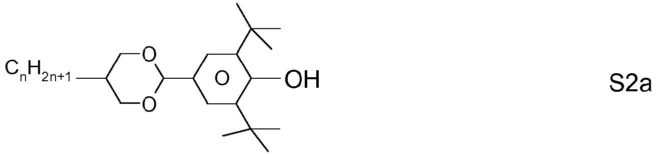

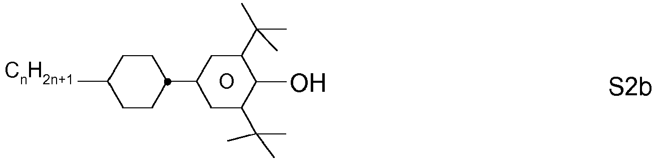

The media according to the invention comprise compounds of formula S2a.

Also described herein are media comprising
one or more compounds of the formulae S1 and S2, preferably selected from the respective preferred sub-formulae thereof,
   and
one or more compounds of the formula II, preferably selected from the preferred sub-formulae thereof,
   and/or
one or more compounds of the formula III, preferably selected from the preferred sub-formulae thereof,
   and/or
one or more compounds of the formula IV, preferably selected from the preferred sub-formulae thereof,
   and/or
one or more compounds of the formula VIII, preferably selected from the preferred sub-formulae thereof.

In addition to the compounds of the formulae S1 and S2 or preferred sub-formulae thereof, the media in accordance with the present invention preferably comprise one or more dielectrically neutral compounds of the formula IV in a total concentration in the range from 5% or more to 90% or less, preferably from 10% or more to 80% or less, particularly preferably from 20% or more to 70% or less.

The compounds of the formulae II and III are preferably dielectrically positive compounds, preferably having a dielectric anisotropy of greater than 3.

The compounds of the formula IV are preferably dielectrically neutral compounds, preferably having a dielectric anisotropy in the range from -1.5 to 3.

The compounds of the formulae S1 and S2 are eminently suitable as stabilisers in liquid-crystal mixtures. In particular, they provide very efficient heat stabilisation of mixtures. Materials to date which provide good heat stabilisation result in a more or less considerable decrease in the HR on UV exposure. In comparison, the compounds of the formulae S1 and S2 exhibit an improvement, i.e. the decrease in the HR on UV exposure is reduced.

The individual compounds of the formulae II and/or III are employed in a concentration of 1 to 20%, preferably 1 to 15%. These limits apply, in particular, if in each case two or more homologous compounds, i.e. compounds of the same formula, are employed. If only a single substance, i.e. only one homologue, of the compounds of a formula is employed, its concentration can thus be in the range from 2 to 20%, preferably from 3 to 14%.

In addition to the compounds of the formulae S1 and S2 or preferred sub-formulae thereof, the media according to the present invention preferably comprise one or more dielectrically positive compounds having a dielectric anisotropy of greater than 3, selected from the group of the formulae II and III.

In a preferred embodiment of the present invention, the media according to the invention comprise one or more compounds selected from the group of the compounds of the formulae II-1 to II-4, preferably of the formulae II-1 and/or II-2, 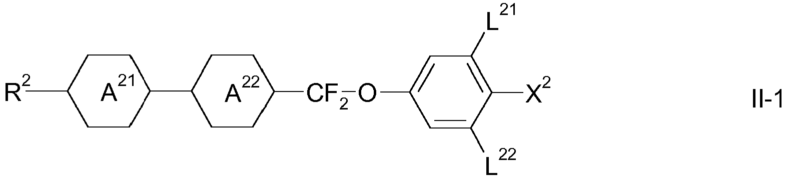 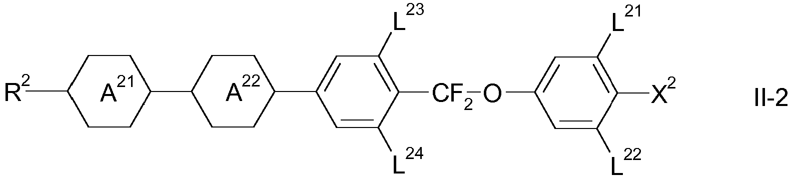 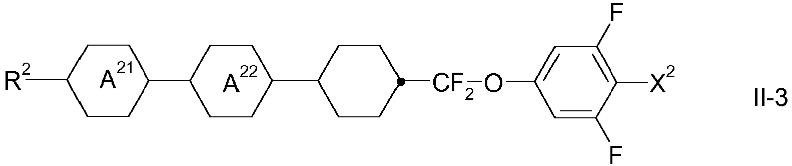 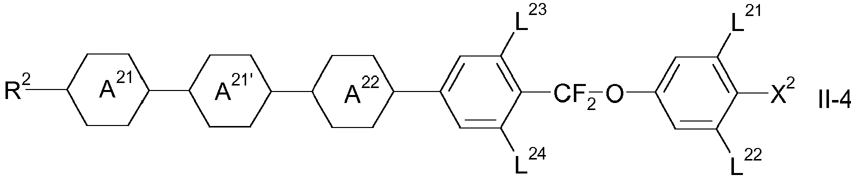 in which the parameters have the respective meanings indicated above under formula II, and L²³ and L²⁴, independently of one another, denote H or F, preferably L²³ denotes F, and 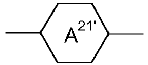 has one of the meanings given for 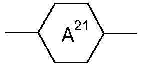 and, in the case of the formulae II-1 and II-4, X² preferably denotes F or OCF₃, particularly preferably F, and, in the case of the formula II-3, 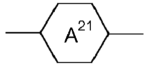 and 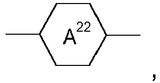 independently of one another, preferably denote 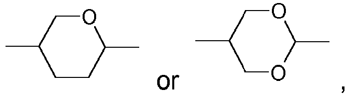 and/or are selected from the group of the compounds of the formulae III-1 and III-2: 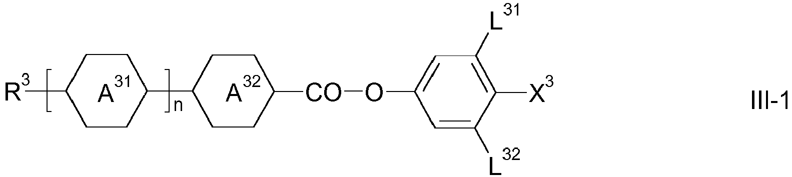 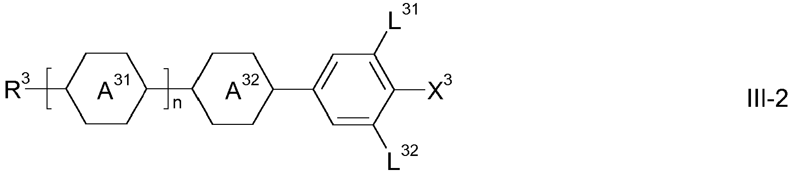 in which the parameters have the meaning given under formula III.

In a preferred embodiment, the media according to the present invention alternatively or in addition to the compounds of the formulae III-1 and/or III-2 comprise one or more compounds of the formula III-3 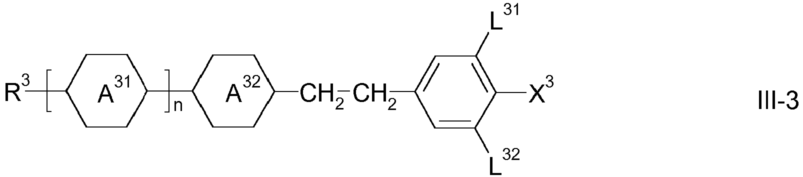 in which the parameters have the respective meanings indicated above, and the parameters L³¹ and L³², independently of one another and of the other parameters, denote H or F.

The media according to the invention preferably comprise one or more compounds selected from the group of the compounds of the formulae II-1 to II-4 in which L²¹ and L²² and/or L²³ and L²⁴ both denote F.

In a preferred embodiment, the media comprise one or more compounds which are selected from the group of the compounds of the formulae II-2 and II-4 in which L²¹, L²², L²³ and L²⁴ all denote F.

The media preferably comprise one or more compounds of the formula II-1. The compounds of the formula II-1 are preferably selected from the group of the compounds of the formulae II-1a to II-1f 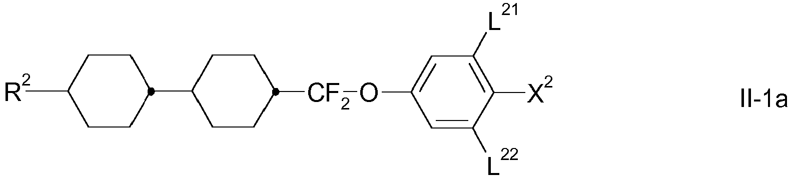 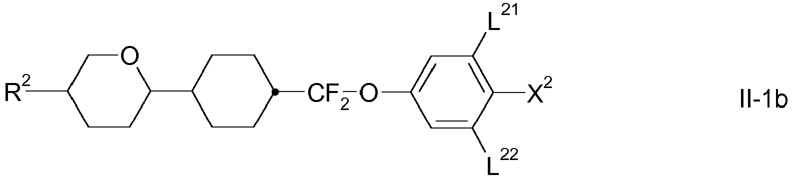 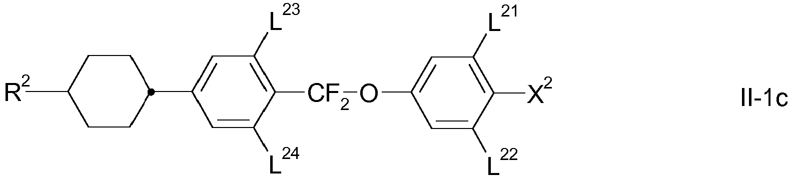 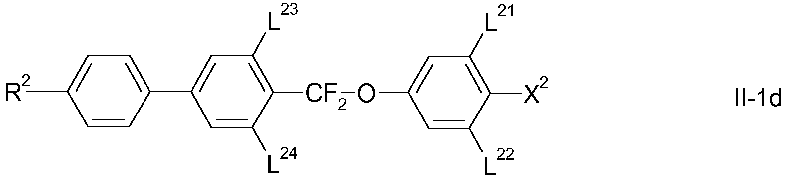 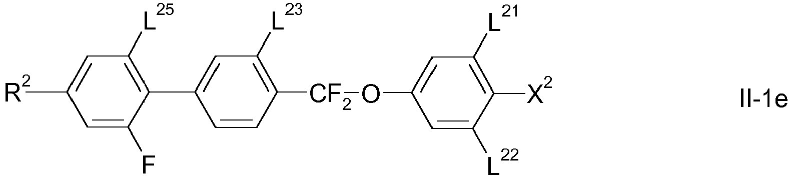 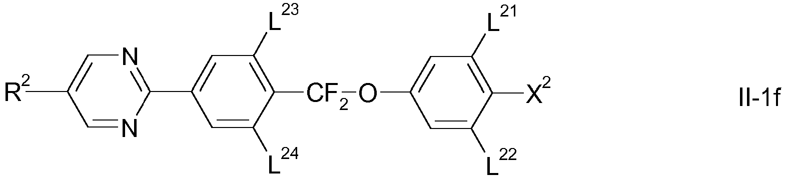 in which the parameters have the respective meanings indicated above, and L²³ to L²⁵, independently of one another and of the other parameters, denote H or F, and
preferably
in the formulae II-1a and II-1b
L²¹ and L²² both denote F,
in the formulae II-1c and II-1d
L²¹ and L²² both denote F and/or L²³ and L²⁴ both denote F, and
in formula II-1e
L²¹, L²² and L²⁵ denote F, and in each case the other parameters have the respective meanings given above.

Especially preferred compounds of the formula II-1 are

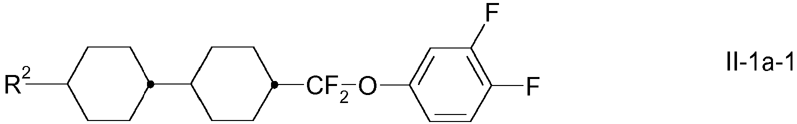

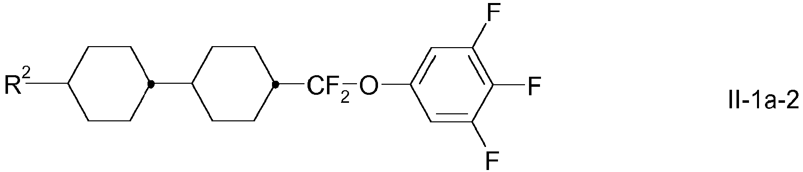

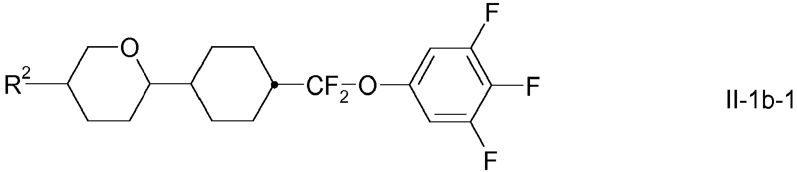

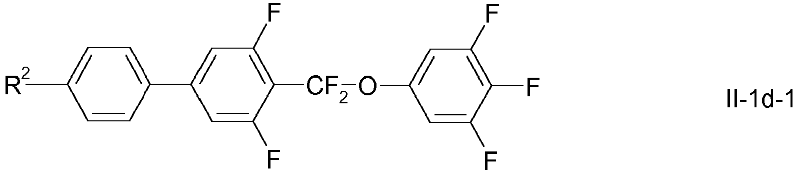

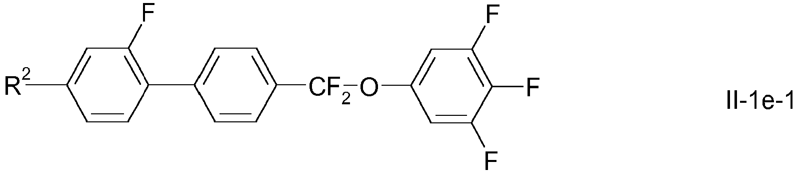

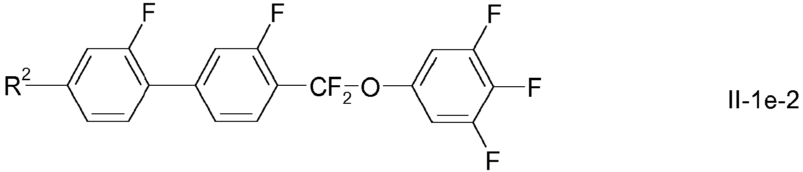

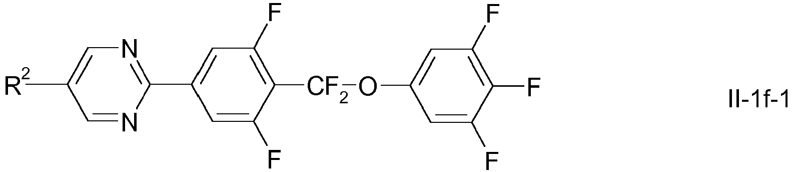

in which R² has the meaning indicated above, in particular compounds of the formula II-1 a-2.

The media preferably comprise one or more compounds of the formula II-2, which are preferably selected from the group of the compounds of the formulae II-2a to II-2k 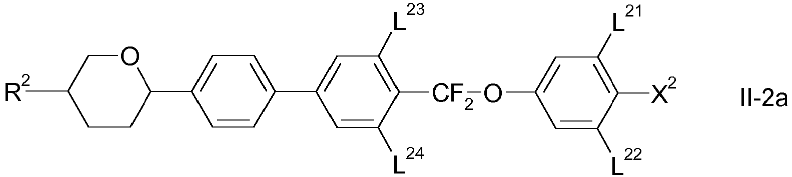 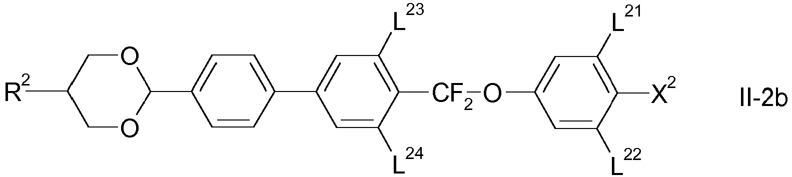 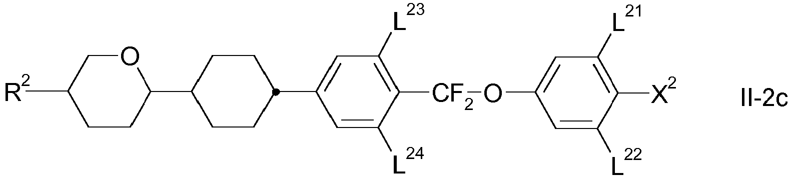 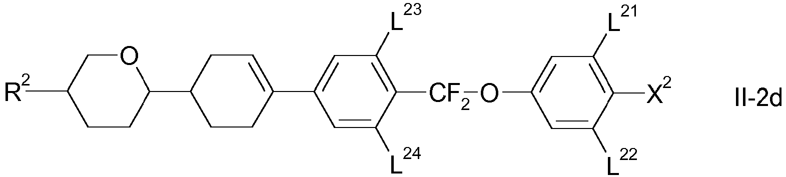 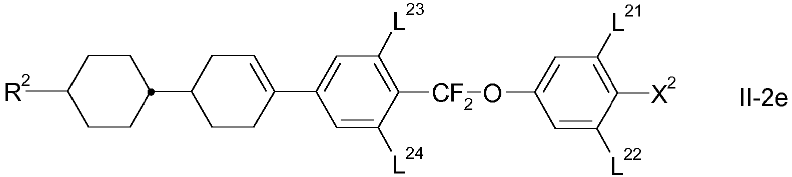 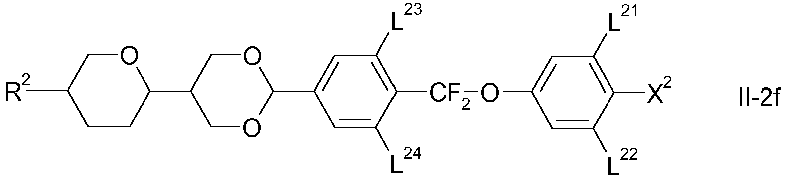 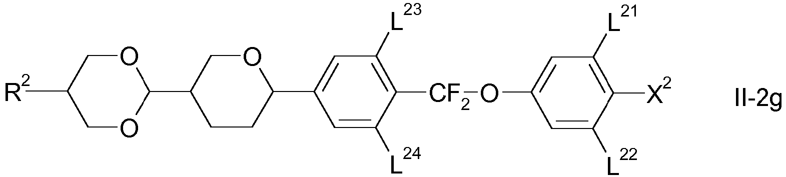 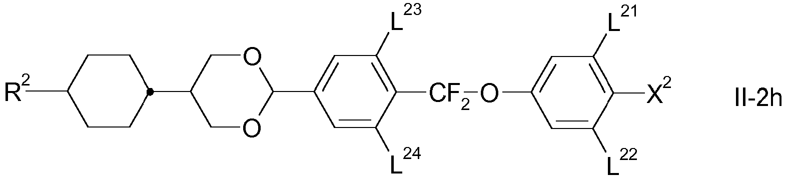 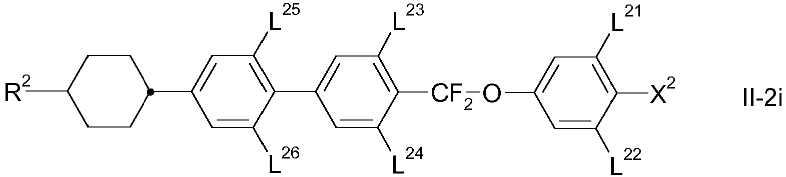 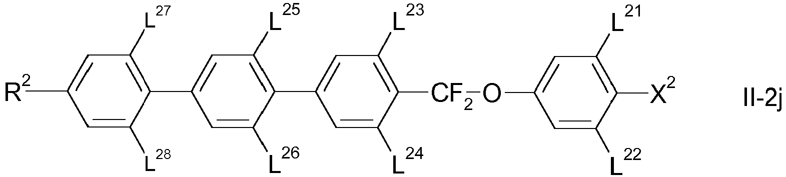 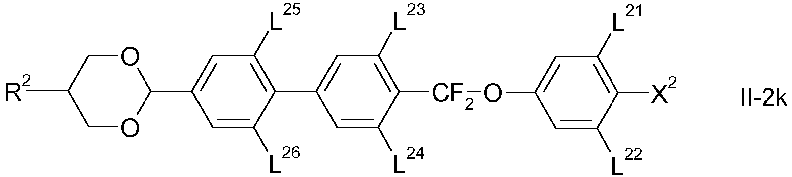 in which the parameters have the respective meanings indicated above, and L²⁵ to L²⁸, independently of one another, denote H or F, preferably L²⁷ and L²⁸ both denote H, particularly preferably L²⁶ denotes H, and the other parameters have the respective meanings given above.

The media according to the invention preferably comprise one or more compounds selected from the group of the compounds of the formulae II-2a to II-2k in which L²¹ and L²² both denote F and/or L²³ and L²⁴ both denote F, and the other parameters have the respective meanings given above.

In a preferred embodiment, the media according to the invention comprise one or more compounds selected from the group of the compounds of the formulae II-2a to II-2k in which L²¹, L²², L²³ and L²⁴ all denote F, and the other parameters have the respective meanings given above.

Especially preferred compounds of the formula II-2 are the compounds of the following formulae: 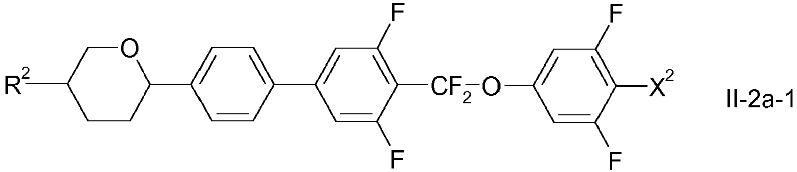 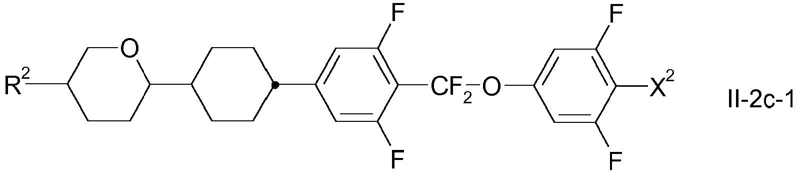 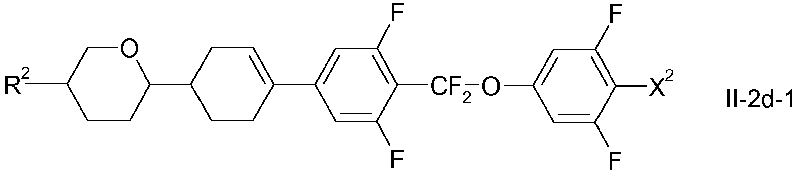 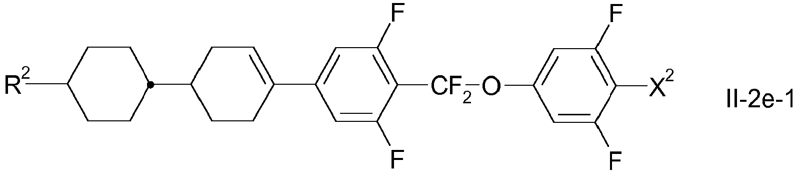 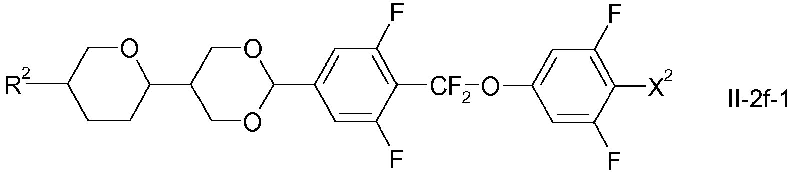 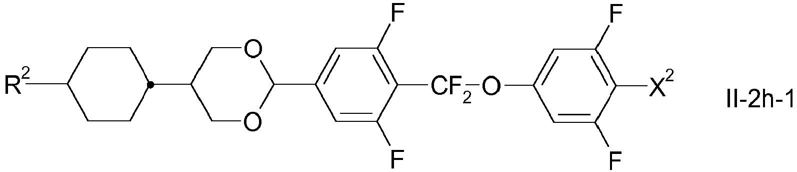 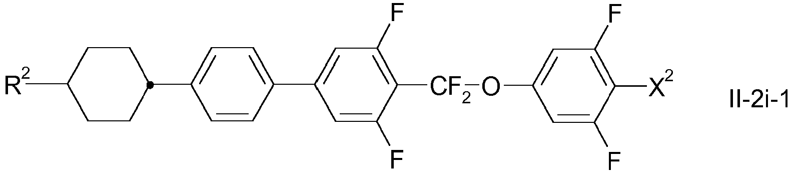 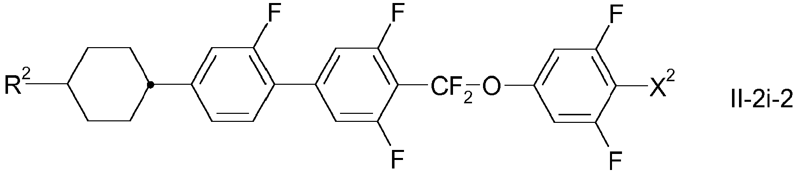 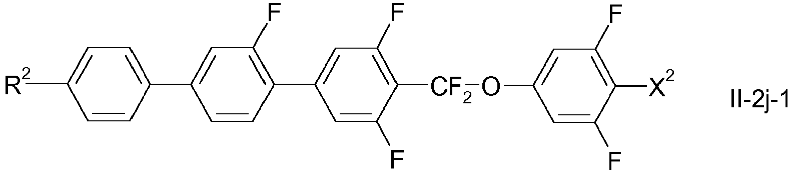 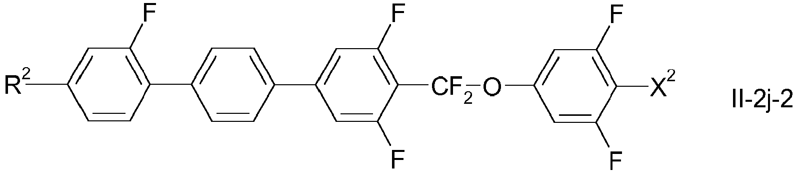 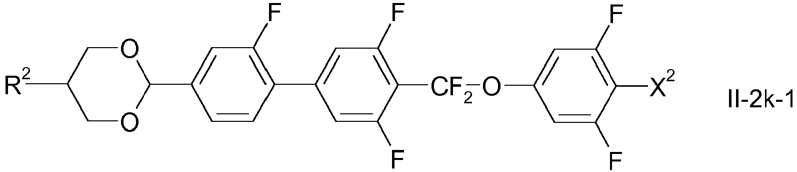 in which R² and X² have the meanings indicated above, and X² preferably denotes F, particularly preferably compounds of the formula II-2a-1 and/or II-2h-1 and/or II-2j-1 and/or II-2k-1 .

The media according to the invention preferably comprise one or more compounds of the formula II-3, preferably selected from the group of the compounds of the formulae II-3a to II-3c 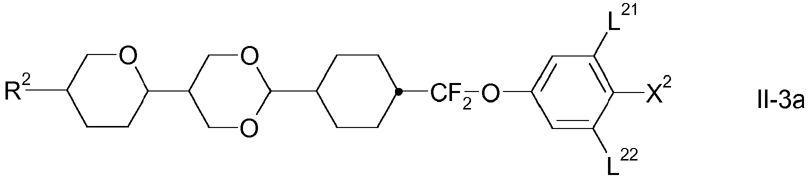 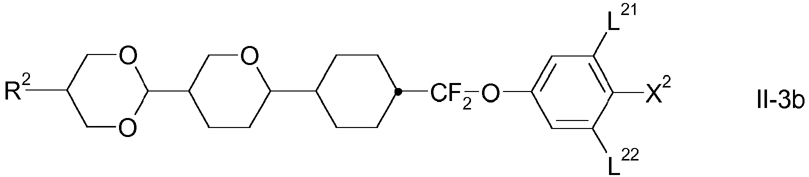 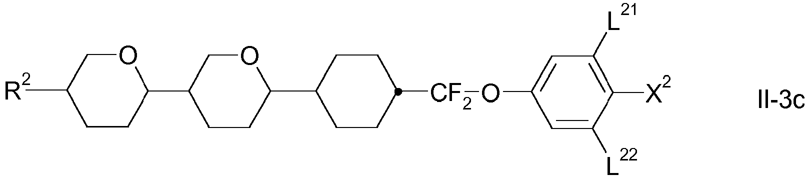 in which the parameters have the respective meanings indicated above, and L²¹ and L²² preferably both denote F.

In a preferred embodiment, the media according to the invention comprise one or more compounds of the formula II-4, preferably of the formula II-4a
in which the parameters have the meaning given above, and X² preferably denotes F or OCF₃, particularly preferably F.

The media according to the invention preferably comprise one or more compounds of the formula III-1, preferably selected from the group of the compounds of the formulae III-1a and III-1b 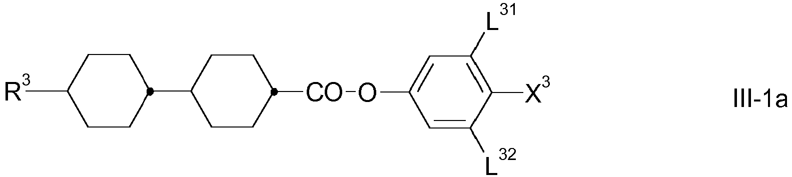 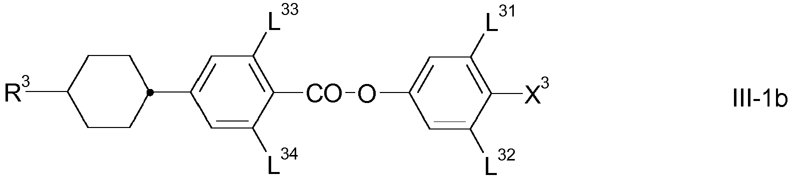 in which the parameters have the respective meanings indicated above, and the parameters L³³ and L³⁴, independently of one another and of the other parameters, denote H or F.

The media according to the invention preferably comprise one or more compounds of the formula III-1a, preferably selected from the group of the compounds of the formulae III-1a-1 to III-1a-6 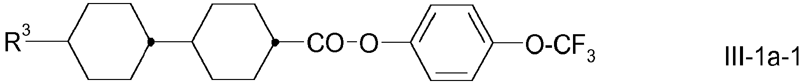 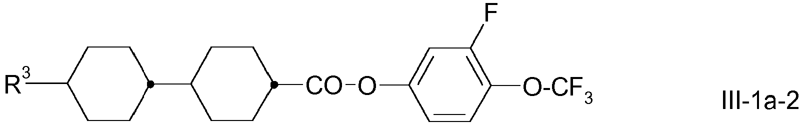 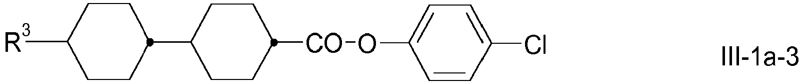 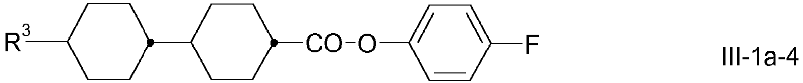 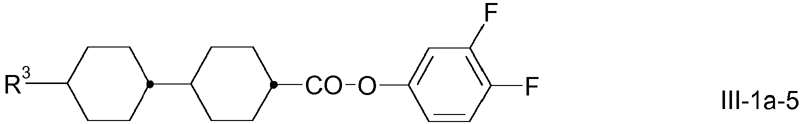 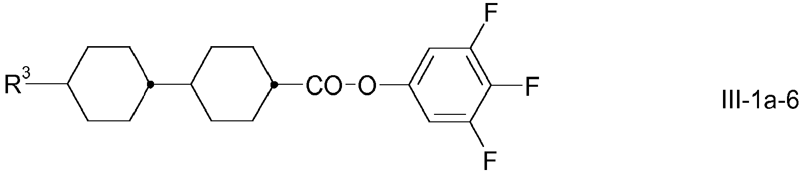 in which R³ has the meaning indicated above.

The media according to the invention preferably comprise one or more compounds of the formula III-1b, preferably selected from the group of the compounds of the formulae III-1b-1 to III-1b-4, preferably of the formula III-1b-4, 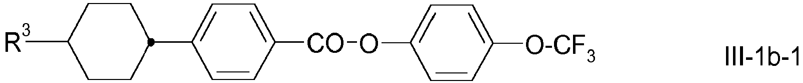 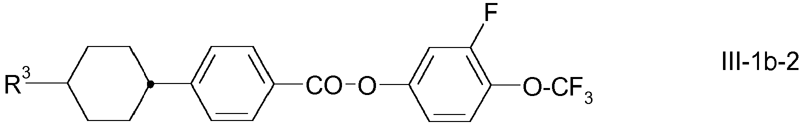 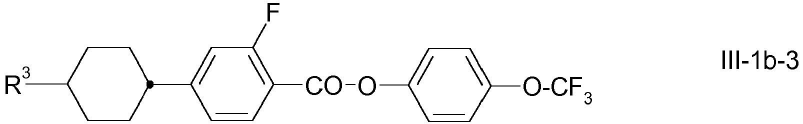 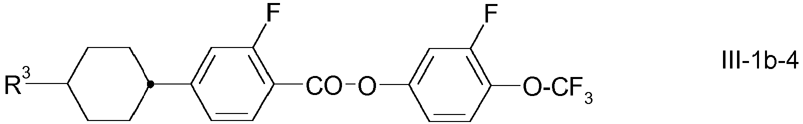 in which R³ has the meaning indicated above.

The media according to the invention preferably comprise one or more compounds of the formula III-2, preferably selected from the group of the compounds of the formulae III-2a to III-2k 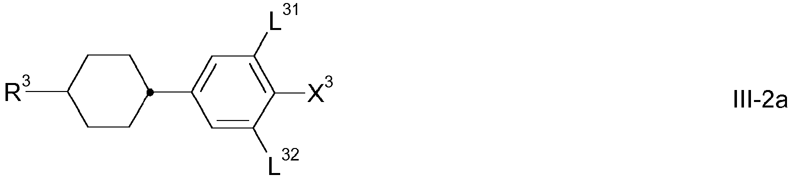 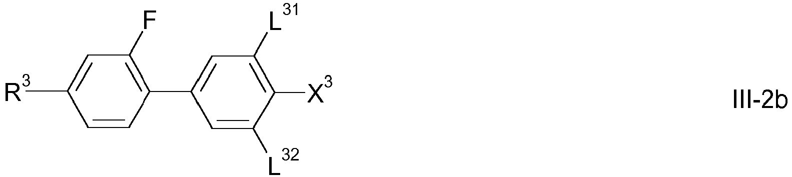 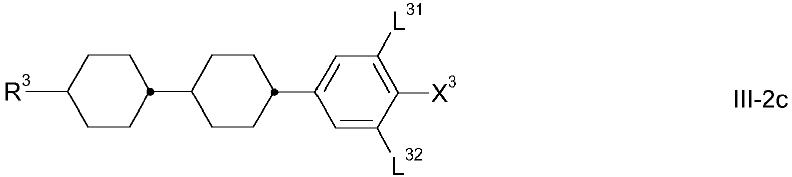 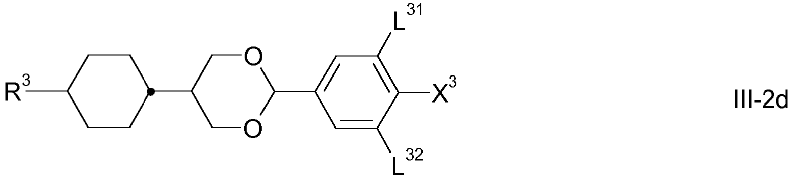 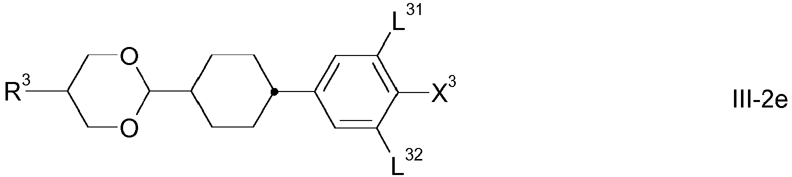 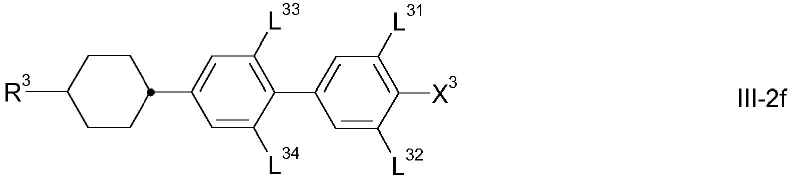 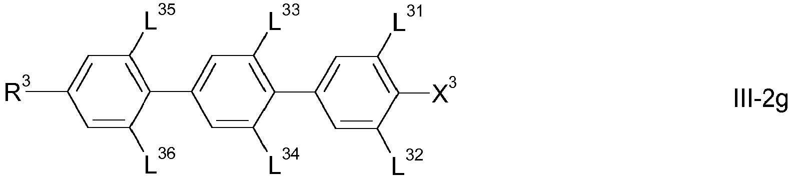 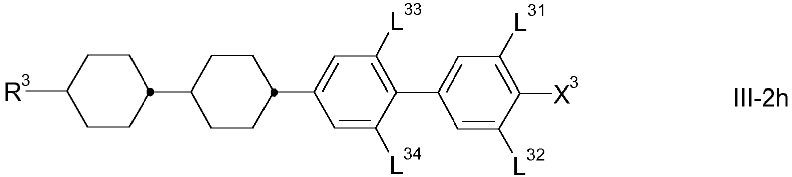 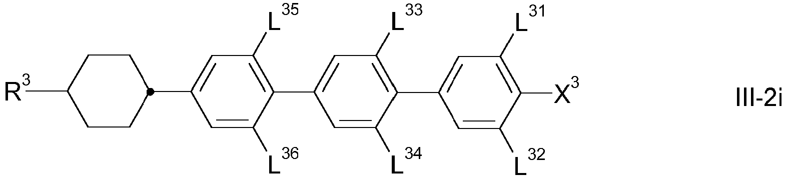 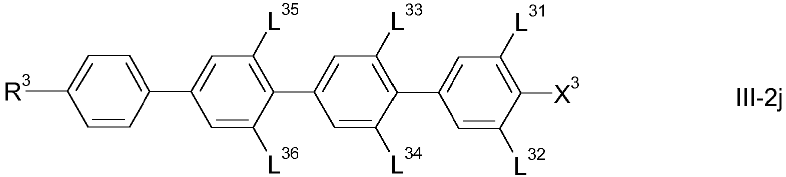 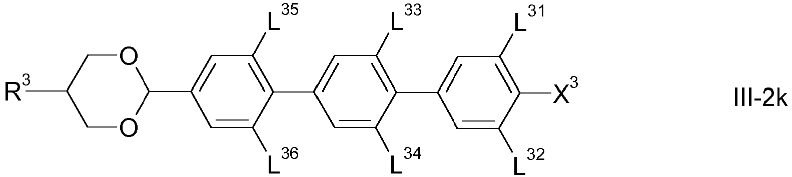 in which the parameters have the meaning given above and preferably in which the parameters have the respective meanings indicated above, and the parameters L³³, L³⁴, L³⁵ and L³⁶, independently of one another and of the other parameters, denote H or F.

The media according to the invention preferably comprise one or more compounds of the formula III-2a, preferably selected from the group of the compounds of the formulae III-2a-1 to III-2a-5 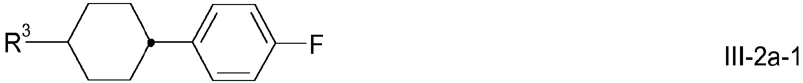 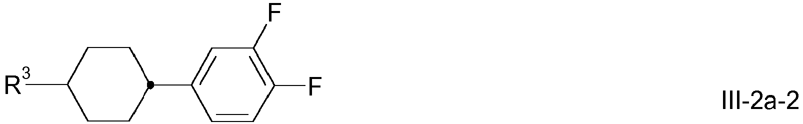 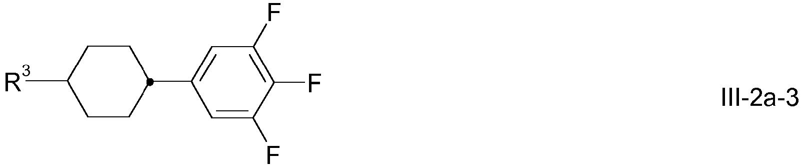 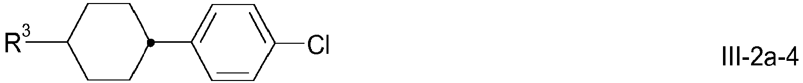 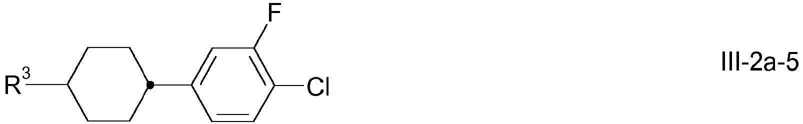 in which R³ has the meaning indicated above.

The media according to the invention preferably comprise one or more compounds of the formula III-2b, preferably selected from the group of the compounds of the formulae III-2b-1 and III-2b-2, preferably of the formula III-2b-2 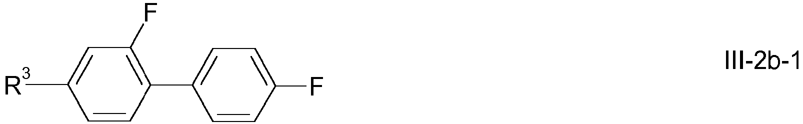 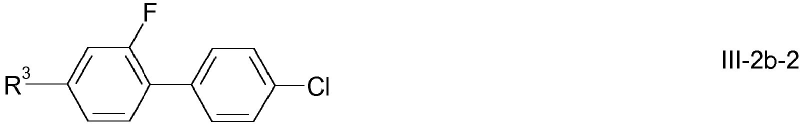 in which R³ has the meaning indicated above.

The media according to the invention preferably comprise one or more compounds of the formula III-2c, preferably selected from the group of the compounds of the formulae III-2c-1 to III-2c-6 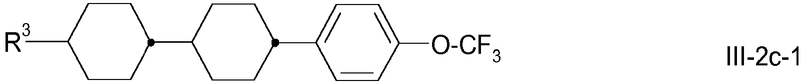 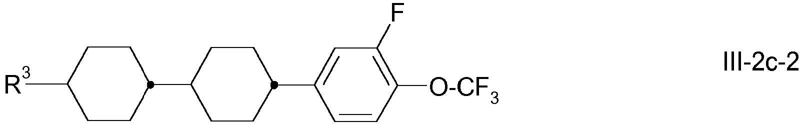 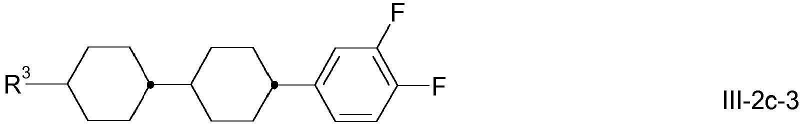 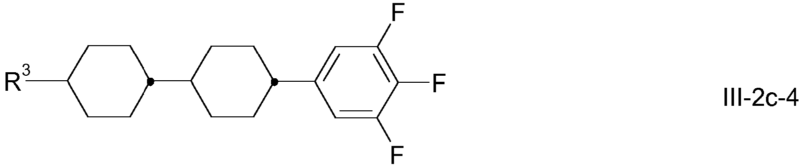 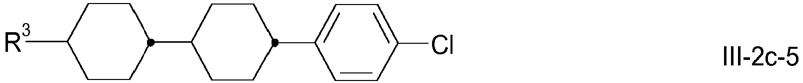 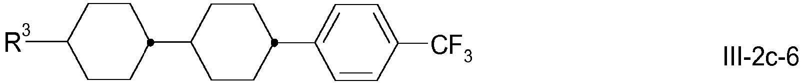 in which R³ has the meaning indicated above, particularly preferably compounds of the formula III-2c-1 and/or III-2c-2 and/or III-2c-4.

The media according to the invention preferably comprise one or more compounds selected from the group of the compounds of the formulae III-2d and III-2e, preferably selected from the group of the compounds of the formulae III-2d-1 and III-2e-1 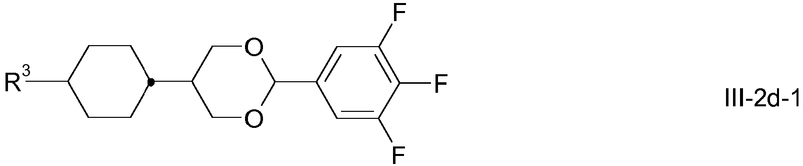 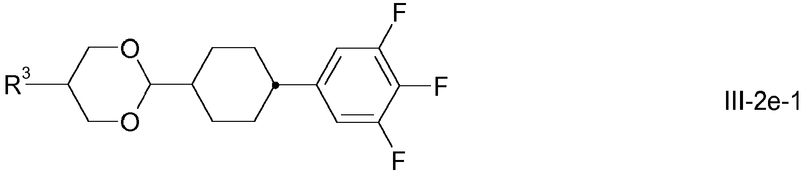 in which R³ has the meaning indicated above.

The media according to the invention preferably comprise one or more compounds of the formula III-2f, preferably selected from the group of the compounds of the formulae III-2f-1 to III-2f-5 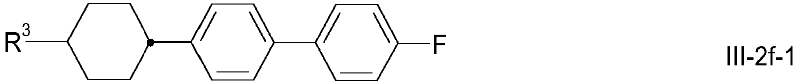 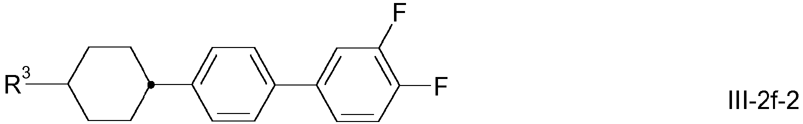 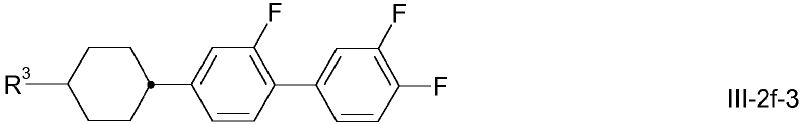 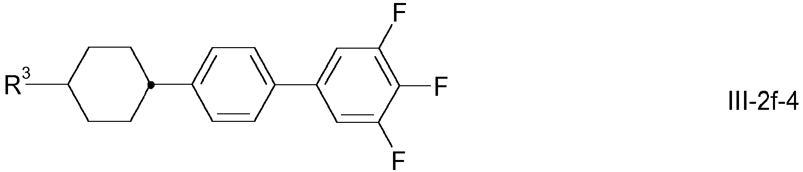 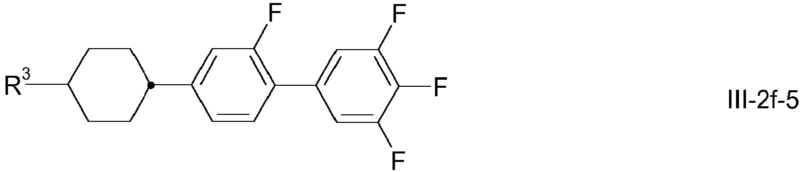 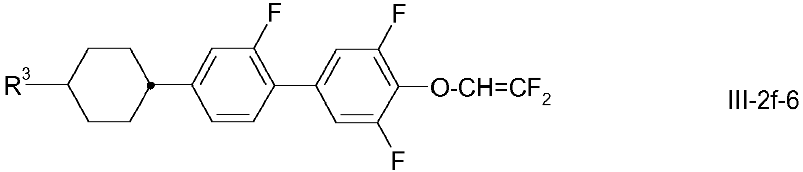 in which R³ has the meaning indicated above.

The media according to the invention preferably comprise one or more compounds of the formula III-2g, preferably selected from the group of the compounds of the formulae III-2g-1 to III-2g-5 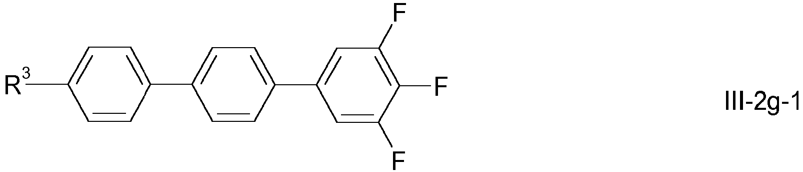 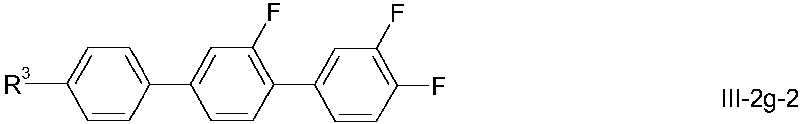 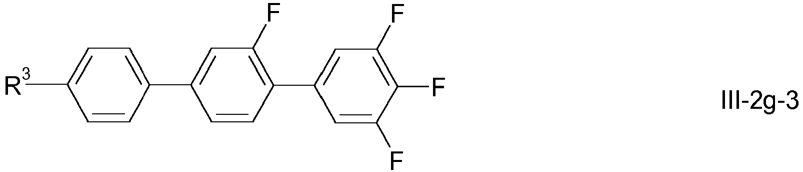 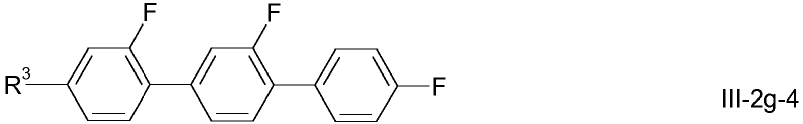 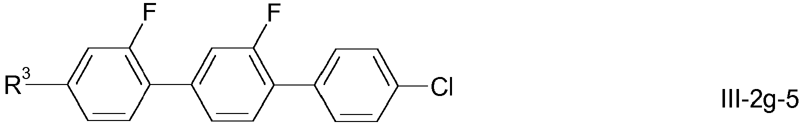 in which R³ has the meaning indicated above.

The media according to the invention preferably comprise one or more compounds of the formula III-2h, preferably selected from the group of the compounds of the formulae III-2h-1 to III-2h-3, preferably of the formula III-2h-3 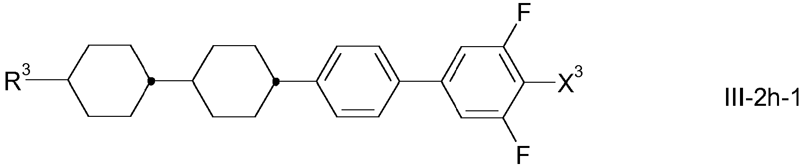 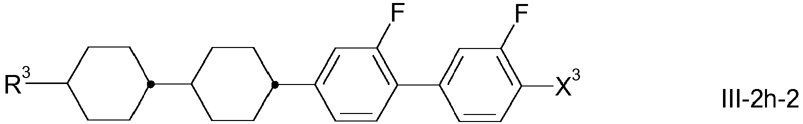 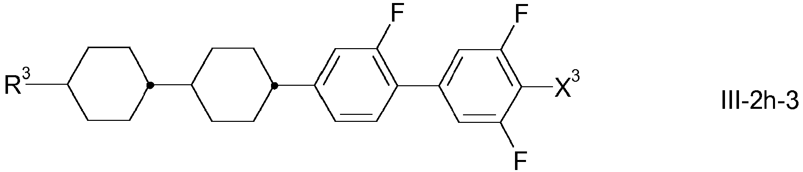 in which the parameters have the meaning given above, and X³ preferably denotes F.

The media according to the invention preferably comprise one or more compounds of the formula III-2i, preferably selected from the group of the compounds of the formulae III-2i-1 and III-2i-2, particularly preferably of the formula III-2i-2 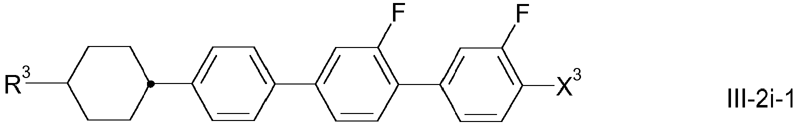 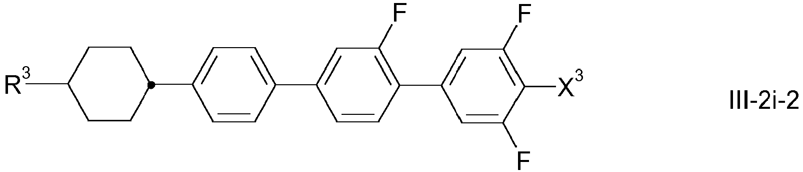 in which the parameters have the meaning given above, and X³ preferably denotes F or OCF₃.

The media according to the invention preferably comprise one or more compounds of the formula III-2j, preferably selected from the group of the compounds of the formulae III-2j-1 and III-2j-2, particularly preferably of the formula III-2j-1 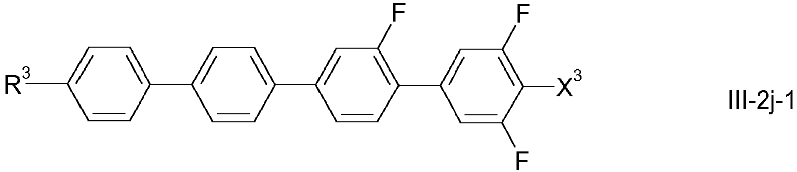 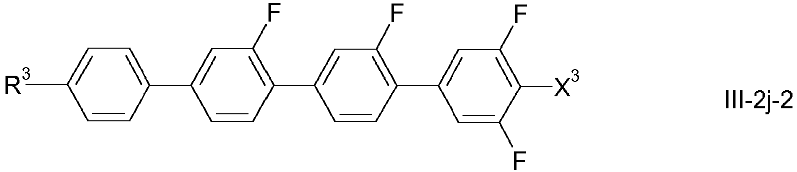 in which the parameters have the meaning given above.

The media according to the invention preferably comprise one or more compounds of the formula III-2k, preferably of the formula III-2k-1 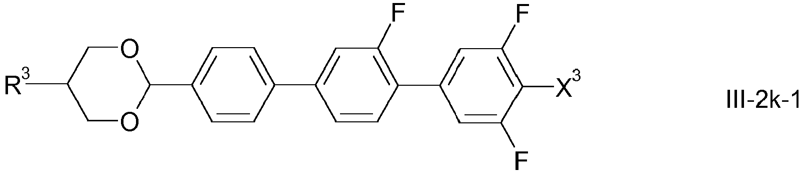 in which the parameters have the meaning given above and X³ preferably denotes F.

Alternatively or in addition to the compounds of the formulae III-1 and/or III-2, the media according to the present invention may comprise one or more compounds of the formula III-3 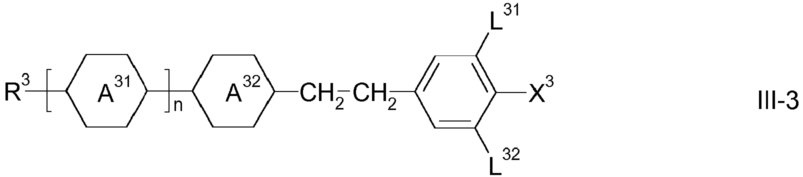 in which the parameters have the respective meanings indicated above under formula III.

These compounds are preferably selected from the group of the formulae III-3a and III-3b 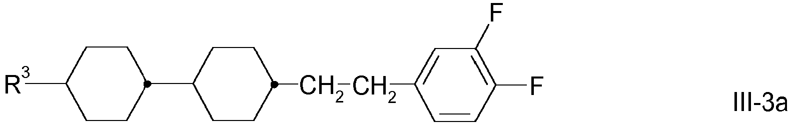 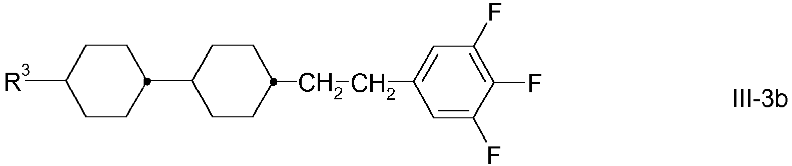 in which R³ has the meaning indicated above.

The liquid-crystalline media according to the present invention preferably comprise a dielectrically neutral component, component C. This component has a dielectric anisotropy in the range from -1.5 to 3. It preferably comprises, more preferably predominantly consists of, even more preferably essentially consists of and especially preferably entirely consists of dielectrically neutral compounds having a dielectric anisotropy in the range from -1.5 to 3. This component preferably comprises one or more dielectrically neutral compounds, more preferably predominantly consists of, even more preferably essentially consists of and very preferably entirely consists of dielectrically neutral compounds of the formula IV having a dielectric anisotropy in the range from -1.5 to 3.

The dielectrically neutral component, component C, preferably comprises one or more compounds selected from the group of the compounds of the formulae IV-1 to IV-8 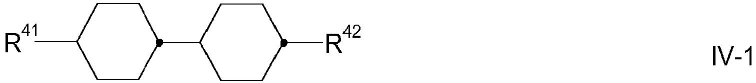 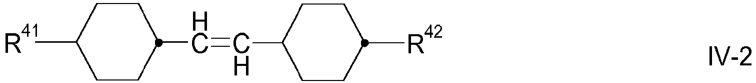 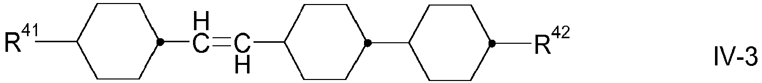 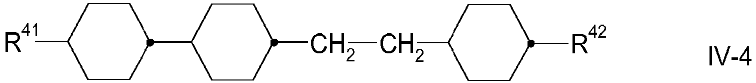 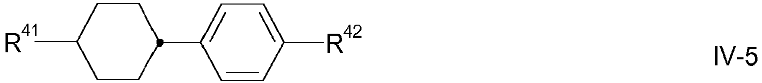 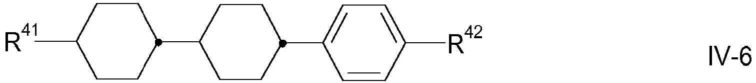 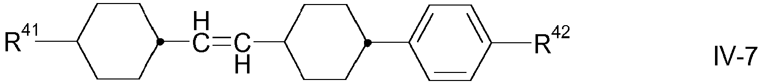 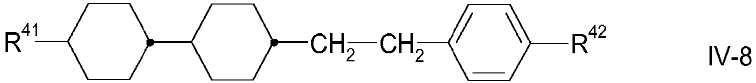 in which R⁴¹ and R⁴² have the respective meanings indicated above under formula IV, and in formulae IV-1, IV-6 and IV-7 R⁴¹ preferably denotes alkyl or alkenyl, preferably alkenyl, and R⁴² preferably denotes alkyl or alkenyl, preferably alkyl, and in formula IV-2 R⁴¹ and R⁴² preferably denote alkyl, and in formula IV-5 R⁴¹ preferably denotes alkyl or alkenyl, more preferably alkyl, and R⁴² preferably denotes alkyl, alkenyl or alkoxy, more preferably alkenyl or alkoxy, and in formulae IV-4 and IV-8 R⁴¹ preferably denotes alkyl and R⁴² preferably denotes alkyl or alkoxy, more preferably alkoxy.

The dielectrically neutral component, component C, preferably comprises one or more compounds selected from the group of the compounds of the formulae IV-1, IV-5, IV-6 and IV-7, preferably one or more compounds of the formula IV-1 and one or more compounds selected from the group of the formulae IV-5 and IV-6, more preferably one or more compounds of each of the formulae IV-1, IV-5 and IV-6 and very preferably one or more compounds of each of the formulae IV-1, IV-5, IV-6 and IV-7.

In a preferred embodiment, the media according to the invention comprise one or more compounds of the formula IV-4, more preferably selected from the respective sub-formulae thereof of the formulae CP-V-n and/or CP-nV-m and/or CP-Vn-m, more preferably of the formulae CP-V-n and/or CP-V2-n and very preferably selected from the group of the formulae CP-V-1 and CP-V2-1. The definitions of these abbreviations (acronyms) are indicated below in Table D or are evident from Tables A to C.

In a preferred embodiment, the media according to the invention comprise one or more compounds of the formula IV-5, more preferably selected from the respective sub-formulae thereof of the formulae CCP-V-n and/or CCP-nV-m and/or CCP-Vn-m, more preferably of the formulae CCP-V-n and/or CCP-V2-n and very preferably selected from the group of the formulae CCP-V-1 and CCP-V2-1. The definitions of these abbreviations (acronyms) are indicated below in Table D or are evident from Tables A to C.

In a likewise preferred embodiment, the media according to the invention comprise one or more compounds of the formula IV-1, more preferably selected from the respective sub-formulae thereof of the formulae CC-n-m, CC-n-V, CC-n-Vm, CC-V-V, CC-V-Vn and/or CC-nV-Vm, more preferably of the formulae CC-n-V and/or CC-n-Vm and very preferably selected from the group of the formulae CC-3-V, CC-4-V, CC-5-V, CC-3-V1, CC-4-V1, CC-5-V1, CC-3-V2 and CC-V-V1. The definitions of these abbreviations (acronyms) are likewise indicated below in Table D or are evident from Tables A to C.

In a further preferred embodiment of the present invention, which may be the same as the previous one or a different one, the liquid-crystal mixtures according to the present invention comprise component C which comprises, preferably predominantly consists of and very preferably entirely consists of compounds of the formula IV selected from the group of the compounds of the formulae IV-1 to IV-8 as shown above and optionally of the formulae IV-9 to IV-15 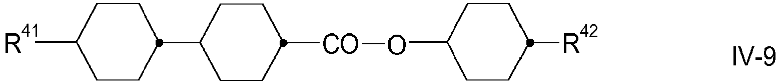 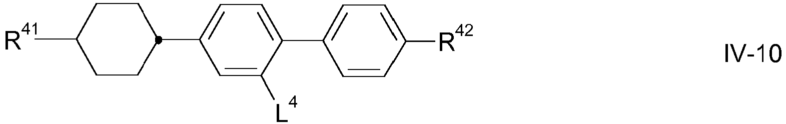 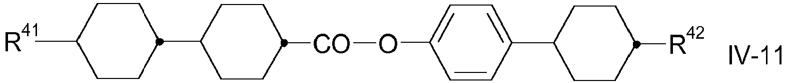 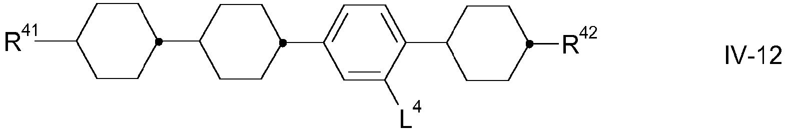 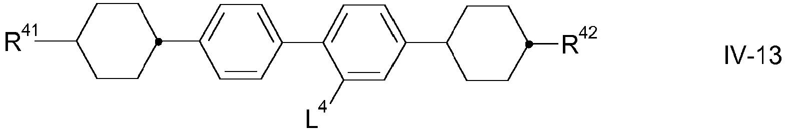 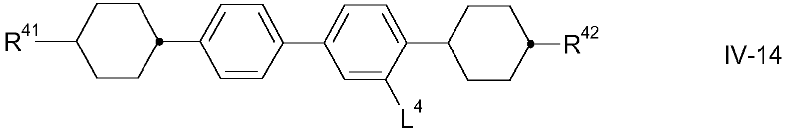 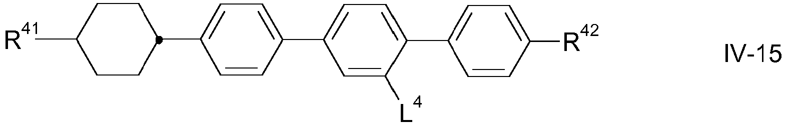 in which
- R⁴¹ and R⁴²,: independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and
- L⁴: denotes H or F.

In a preferred embodiment, the media according to the invention comprise one or more compounds of the formula IV-10, more preferably selected from the respective sub-formulae thereof of the formulae CPP-3-2, CPP-5-2 and CGP-3-2, more preferably of the formulae CPP-3-2 and/or CGP-3-2 and very particularly preferably of the formula CPP-3-2. The definitions of these abbreviations (acronyms) are indicated below in Table D or are evident from Tables A to C.

The liquid-crystalline media according to the present invention preferably comprise one or more compounds of the formula V 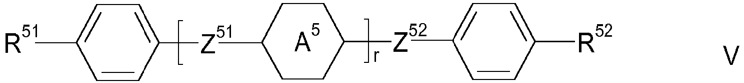 in which
- R⁵¹ and R⁵²,: independently of one another, have the meaning indicated for R² under formula II above, preferably R⁵¹ denotes alkyl and R⁵² denotes alkyl or alkenyl, 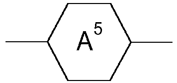 , if it occurs twice in each case independently of one another on each occurrence, denotes 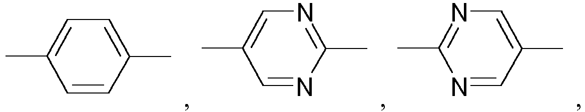 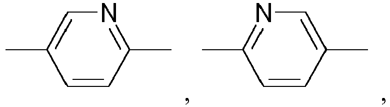 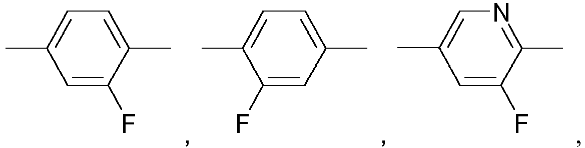 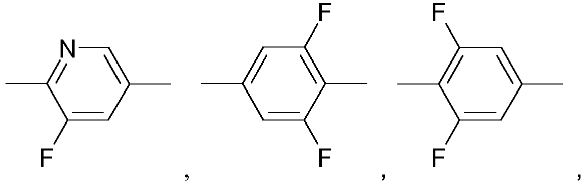 or 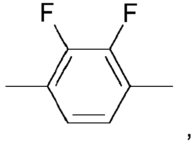 preferably one or more of 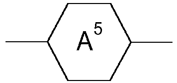 denote 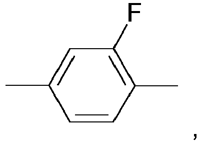
- Z⁵¹ and Z⁵²,: independently of one another and, if Z⁵¹ occurs twice, also these independently of one another, denote -CH₂CH₂-, -COO-, *trans*-CH=CH-, *trans*-CF=CF-, -CH₂O-, -CF₂O- or a single bond, preferably one or more of them denote(s) a single bond, and
- r: denotes 0, 1 or 2, preferably 0 or 1, particularly preferably 1.

The compounds of the formula V are preferably dielectrically neutral compounds having a dielectric anisotropy in the range from -1.5 to 3.

The media according to the invention preferably comprise one or more compounds selected from the group of the compounds of the formulae V-1 and V-2 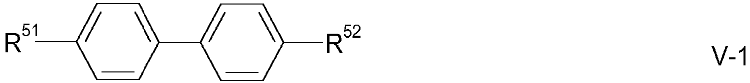 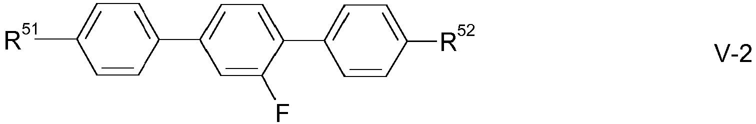 in which R⁵¹ and R⁵² have the respective meanings indicated above under formula V, and R⁵¹ preferably denotes alkyl, and in formula V-1 R⁵² preferably denotes alkenyl, preferably -(CH₂)₂-CH=CH-CH₃, and in formula V-2 R⁵² preferably denotes alkyl or alkenyl, preferably -CH=CH₂, -(CH₂)₂-CH=CH₂ or -(CH₂)₂-CH=CH-CH₃.

The media according to the invention preferably comprise one or more compounds selected from the group of the compounds of the formulae V-1 and V-2 in which R⁵¹ preferably denotes *n*-alkyl, and in formula V-1 R⁵² preferably denotes alkenyl, and in formula V-2 R⁵² preferably denotes *n*-alkyl.

In a preferred embodiment, the media according to the invention comprise one or more compounds of the formula V-1, more preferably of the sub-formula PP-n-2Vm thereof, even more preferably of the formula PP-1-2V1. The definitions of these abbreviations (acronyms) are indicated below in Table D or are evident from Tables A to C.

In a preferred embodiment, the media according to the invention comprise one or more compounds of the formula V-2, more preferably of the sub-formulae PGP-n-m, PGP-n-V, PGP-n-2Vm, PGP-n-2V and PGP-n-2Vm thereof, even more preferably of the sub-formulae PGP-3-m, PGP-n-2V and PGP-n-V1 thereof, very preferably selected from the formulae PGP-3-2, PGP-3-3, PGP-3-4, PGP-3-5, PGP-1-2V, PGP-2-2V and PGP-3-2V. The definitions of these abbreviations (acronyms) are likewise indicated below in Table D or are evident from Tables A to C.

Alternatively or in addition to the compounds of the formulae II and/or III, the media according to the present invention may comprise one or more dielectrically positive compounds of the formula VI 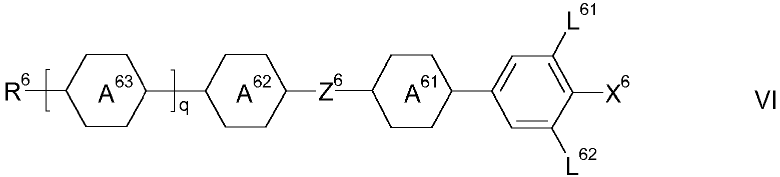 in which
- R⁶: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms and preferably alkyl or alkenyl, 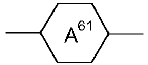 to 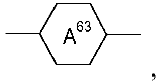 independently of one another, denote 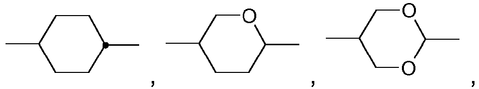 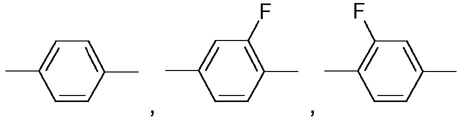 or 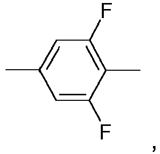
- L⁶¹ and L⁶²,: independently of one another, denote H or F, preferably L⁶¹ denotes F,
- X⁶: denotes halogen, halogenated alkyl or alkoxy having 1 to 3 C atoms or halogenated alkenyl or alkenyloxy having 2 or 3 C atoms, preferably F, Cl, -OCF₃ or -CF₃, very preferably F, Cl or -OCF₃,
- Z⁶: denotes -CH₂CH₂-, -CF₂CF₂-, -COO-, *trans*-CH=CH-, *trans*-CF=CF-, -CH₂O- or -CF₂O-, preferably -CH₂CH₂-, -COO- or *trans*-CH=CH- and very preferably -COO- or *trans*-CH=CH-, and
- q: denotes 0 or 1.

The media according to the present invention preferably comprise one or more compounds of the formula VI, preferably selected from the group of the compounds of the formulae VI-1 and VI-2 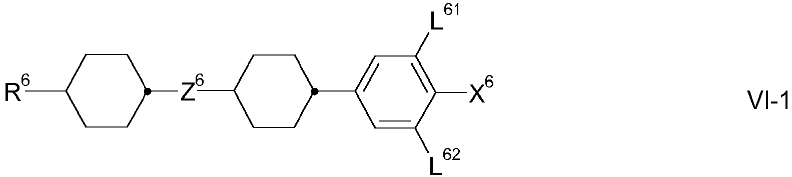 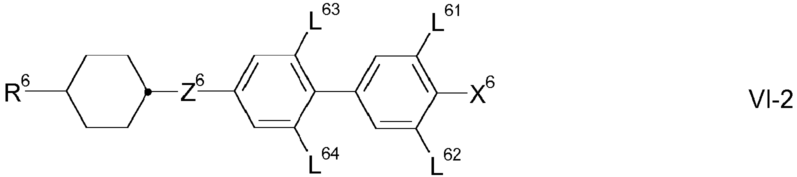 in which the parameters have the respective meanings indicated above, and the parameters L⁶³ and L⁶⁴, independently of one another and of the other parameters, denote H or F, and Z⁶ preferably denotes -CH₂-CH₂-.

The compounds of the formula VI-1 are preferably selected from the group of the compounds of the formulae VI-1a and VI-1b 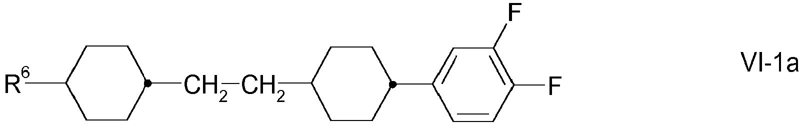 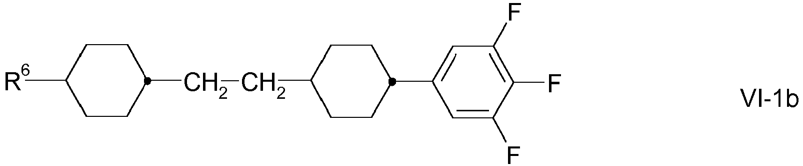 in which R⁶ has the meaning indicated above.

The compounds of the formula VI-2 are preferably selected from the group of the compounds of the formulae VI-2a to VI-2d 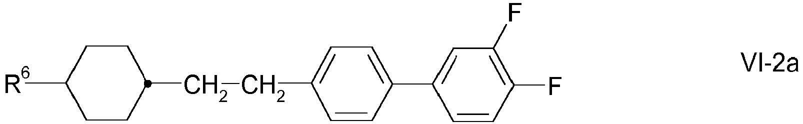 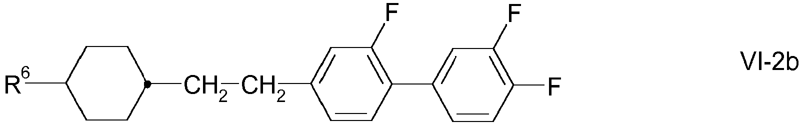 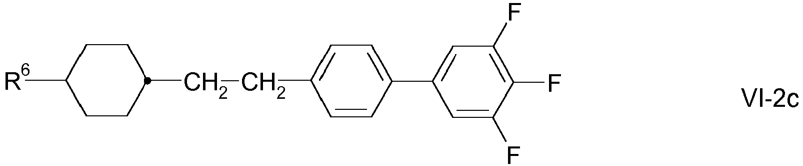 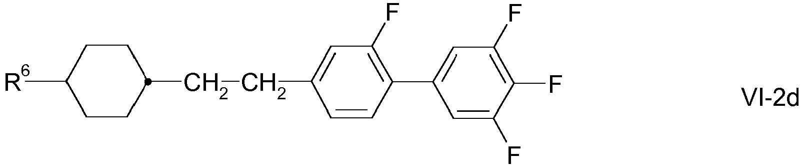 in which R⁶ has the meaning indicated above.

In addition, the liquid-crystal media according to the present invention may comprise one or more compounds of the formula VII 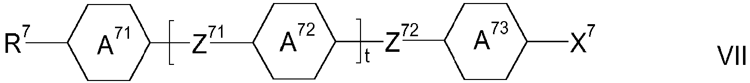 in which
- R⁷: has the meaning indicated for R² above under formula II, one of the rings 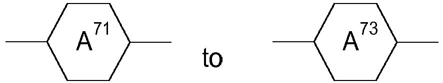 present denotes 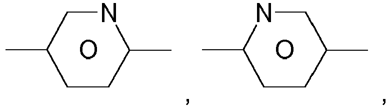 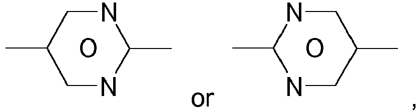 preferably 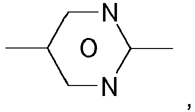 preferably 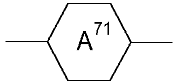 denotes 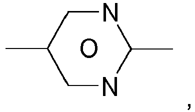 and the others have the same meaning or, independently of one another, denote 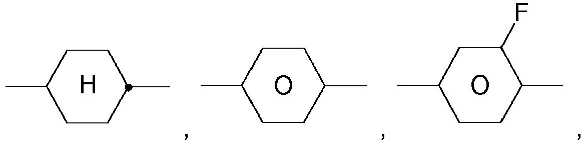 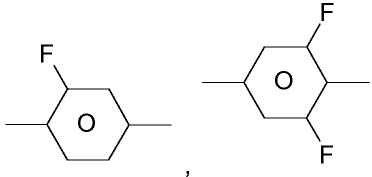 or 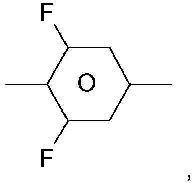 preferably 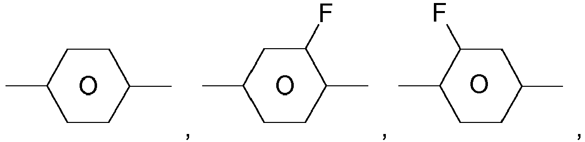 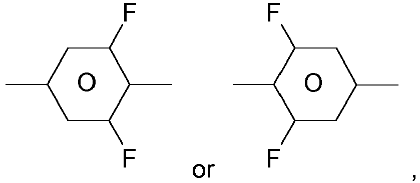
- Z⁷¹ and Z⁷²,: independently of one another, denote -CH₂CH₂-, -COO-, *trans*-CH=CH-, *trans-*CF=CF-, -CH₂O-, -CF₂O- or a single bond, preferably one or more of them denote(s) a single bond and very preferably both denote a single bond,
- t: denotes 0, 1 or 2, preferably 0 or 1, more preferably 1, and
- X⁷: has the meaning indicated for X² above under formula II or alternatively, independently of R⁷, may have one of the meanings indicated for R⁷.

The compounds of the formula VII are preferably dielectrically positive compounds.

In addition, the liquid-crystal media described herein may comprise one or more compounds of the formula VIII 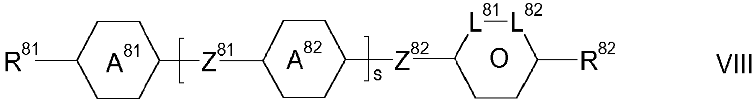 in which
- R⁸¹ and R⁸²,: independently of one another, have the meaning indicated for R² above under formula II, and 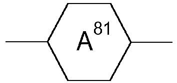 denotes 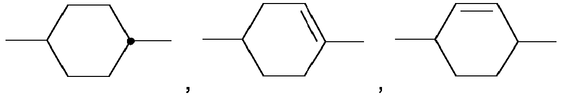 or 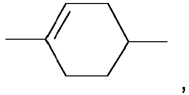 preferably 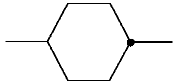 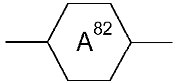 denotes 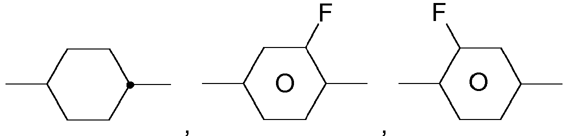 or 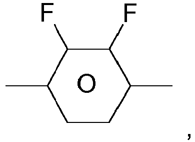
- Z⁸¹ and Z⁸²,: independently of one another, denote -CH₂CH₂-, -C=C-, -COO-, *trans*-CH=CH-, *trans*-CF=CF-, -CH₂O-, -CF₂O- or a single bond, preferably one or more of them denote(s) a single bond and very preferably both denote a single bond,
- s: denotes 0 or 1 and
- L⁸¹ and L⁸²,: independently of one another, denote C-F or N, preferably one of L⁸¹ and L⁸² or both denote(s) C-F and very preferably both denote C-F, and in case 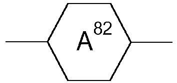 denotes 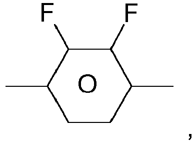 one of
L⁸¹ and L⁸² one or both alternatively may denote C-H

The compounds of the formula VIII are preferably dielectrically negative compounds. Preferably the compounds of formula VIII are selected from the following group of compounds of sub-formulae of formula VIII 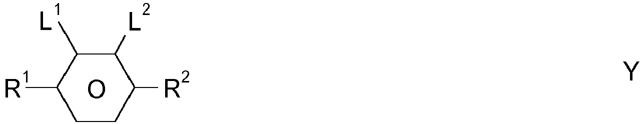 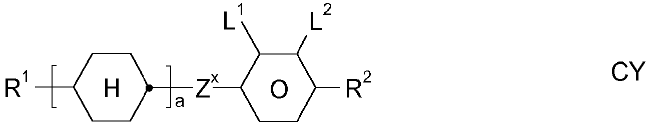 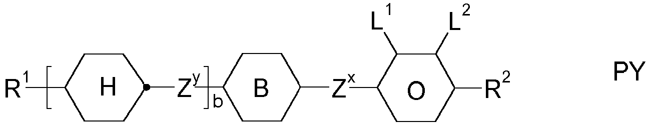 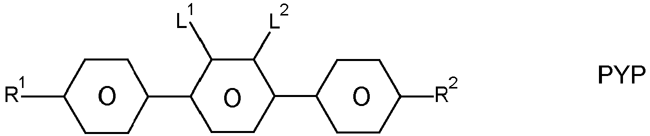 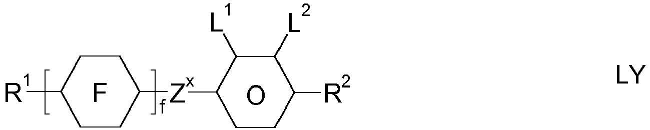 wherein the individual radicals, independently of each other and on each occurrence identically or differently, have the following meanings: 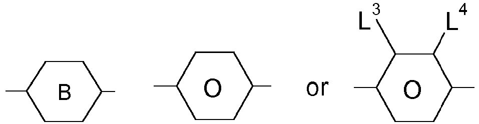 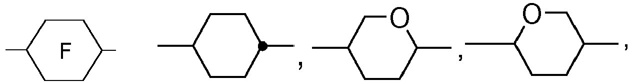 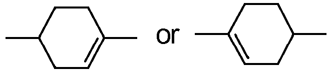 with at least one ring F being cyclohexenylene,
- R¹ and R²: alkyl having 1 to 12 C atoms, where, in addition, one or two non-adjacent CH₂ groups may be replaced by -O-, -CH=CH-,-CO-, -OCO- or -COO- in such a way that O atoms are not linked directly to one another, preferably alkyl or alkoxy having 1 to 6 C atoms,
- Z^{x} and Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
- L¹⁻⁴: F, Cl, OCF₃, CF₃, CH₃, CH₂F, CHF₂,
- a: 1 or 2,
- b: 0 or 1, and
- f: 1 or 2.

The liquid-crystalline media according to the present invention preferably comprise one or more compounds selected from the group of the compounds of the formulae I to VIII, preferably of the formulae I to VII and more preferably of the formulae I and II and/or III and/or IV and/or VI. They particularly preferably predominantly consist of, even more preferably essentially consist of and very preferably entirely consist of these compounds.

In this application, "comprise" in connection with compositions means that the entity in question, i.e. the medium or the component, comprises the component or components or compound or compounds indicated, preferably in a total concentration of 10% or more and very preferably 20% or more.

In this connection, "predominantly consist of" means that the entity in question comprises 55% or more, preferably 60% or more and very preferably 70% or more of the component or components or compound or compounds indicated.

In this connection, "essentially consist of" means that the entity in question comprises 80% or more, preferably 90% or more and very preferably 95% or more of the component or components or compound or compounds indicated.

In this connection, "virtually completely consist of" or "entirely consist of" means that the entity in question comprises 98% or more, preferably 99% or more and very preferably 100% of the component or components or compound or compounds indicated.

Other mesogenic compounds which are not explicitly mentioned above can optionally and advantageously also be used in the media according to the present invention. Such compounds are known to the person skilled in the art.

The liquid-crystal media according to the present invention preferably have a clearing point of 70°C or more, more preferably 75°C or more, particularly preferably 80°C or more and very particularly preferably 85°C or more.

The nematic phase of the media according to the invention preferably extends at least from 0°C or less to 70°C or more, more preferably at least from -20°C or less to 75°C or more, very preferably at least from -30°C or less to 75°C or more and in particular at least from -40°C or less to 80°C or more.

The Δε of the liquid-crystal medium according to the invention, at 1 kHz and 20°C, is preferably 2 or more, more preferably 3 or more, even more preferably 4 or more and very preferably 6 or more. Δε is preferably 30 or less, Δε is particularly preferably 20 or less.

The Δn of the liquid-crystal media according to the present invention, at 589 nm (Na^{D}) and 20°C, is preferably in the range from 0.060 or more to 0.300 or less, preferably in the range from 0.070 or more to 0.150 or less, more preferably in the range from 0.080 or more to 0.140 or less, even more preferably in the range from 0.090 or more to 0.135 or less and very particularly preferably in the range from 0.100 or more to 0.130 or less.

In a first preferred embodiment of the present application, the Δn of the liquid-crystal media according to the present invention is preferably 0.080 or more to 0.120 or less, more preferably in the range from 0.090 or more to 0.110 or less and very particularly preferably in the range from 0.095 or more to 0.105 or less, while Δε is preferably in the range from 6 or more to 11 or less, preferably in the range from 7 or more to 10 or less and particularly preferably in the range from 8 or more to 9 or less.

In this embodiment, the nematic phase of the media according to the invention preferably extends at least from -20°C or less to 70°C or more, more preferably at least from -20°C or less to 70°C or more, very preferably at least from -30°C or less to 70°C or more and in particular at least from -40°C or less to 70°C or more.

In a second preferred embodiment of the present application, the Δn of the liquid-crystal media according to the present invention is preferably 0.060 or more to 0.300 or less, it is preferably in the range from 0.100 or more to 0.140 or less, more preferably in the range from 0.110 or more to 0.130 or less and very particularly preferably in the range from 0.115 or more to 0.125 or less, while Δε is preferably in the range from 7 or more to 13 or less, preferably in the range from 9 or more to 20 or less and particularly preferably in the range from 10 or more to 17 or less.

In this embodiment, the nematic phase of the media according to the invention preferably extends at least from -20°C or less to 80°C or more, more preferably at least from -20°C or less to 85°C or more, very preferably at least from -30°C or less to 80°C or more and in particular at least from -40°C or less to 85°C or more.

In accordance with the present invention, the compounds of the formulae S1 and S2 together are preferably used in the media in a total concentration of 1 ppm to 5,000%, more preferably of 10 ppm to 3.000 ppm, more preferably of 100 ppm to 2,000 ppm, more preferably of 200 ppm to 1,500 ppm and very preferably of 250 ppm% to 1,000 ppm of the mixture as a whole.

The compounds selected from the group of the formulae II and III are preferably used in a total concentration of 2% to 60%, more preferably 3% to 35%, even more preferably 4% to 20% and very preferably 5% to 15% of the mixture as a whole.

The compounds of the formula IV are preferably used in a total concentration of 5% to 70%, more preferably 20% to 65%, even more preferably 30% to 60% and very preferably 40% to 55% of the mixture as a whole.

The compounds of the formula V are preferably used in a total concentration of 0% to 30%, more preferably 0% to 15% and very preferably 1% to 10% of the mixture as a whole.

The compounds of the formula VI are preferably used in a total concentration of 0% to 50%, more preferably 1% to 40%, even more preferably 5% to 30% and very preferably 10% to 20% of the mixture as a whole.

The media according to the invention may optionally comprise further liquid-crystal compounds in order to adjust the physical properties. Such compounds are known to the person skilled in the art. Their concentration in the media according to the present invention is preferably 0% to 30%, more preferably 0.1% to 20% and very preferably 1% to 15%.

In a preferred embodiment, the concentration of the compound of the formula CC-3-V in the media according to the invention can be 50% to 65%, particularly preferably 55% to 60%.

The liquid-crystal media preferably comprise in total 50% to 100%, more preferably 70% to 100% and very preferably 80% to 100% and in particular 90% to 100% of the compounds of the formulae I to VII, preferably selected from the group of the compounds of the formulae I-1, I-2 and II to VI, particularly preferably of the formulae I to V, in particular of the formulae I-1, I-2, II, III, IV, V and VII and very particularly preferably of the formulae I-1, I-2, II, III, IV and V. They preferably predominantly consist of and very preferably virtually completely consist of these compounds. In a preferred embodiment, the liquid-crystal media in each case comprise one or more compounds of each of these formulae.

In the present application, the expression dielectrically positive describes compounds or components where Δε > 3.0, dielectrically neutral describes those where -1.5 ≤ Δε ≤ 3.0 and dielectrically negative describes those where Δε < -1.5. Δε is determined at a frequency of 1 kHz and at 20°C. The dielectric anisotropy of the respective compound is determined from the results of a solution of 10% of the respective individual compound in a nematic host mixture. If the solubility of the respective compound in the host mixture is less than 10%, the concentration is reduced to 5%. The capacitances of the test mixtures are determined both in a cell having homeotropic alignment and in a cell having homogeneous alignment. The cell thickness of both types of cells is approximately 20 µm. The voltage applied is a rectangular wave having a frequency of 1 kHz and an effective value of typically 0.5 V to 1.0 V, but it is always selected to be below the capacitive threshold of the respective test mixture.

Δε is defined as (ε ∥ - ε_{⊥}), while ε_{av.} is (ε∥ + 2 ε_{⊥}) / 3.

The host mixture used for dielectrically positive compounds is mixture ZLI-4792 and that used for dielectrically neutral and dielectrically negative compounds is mixture ZLI-3086, both from Merck KGaA, Germany. The absolute values of the dielectric constants of the compounds are determined from the change in the respective values of the host mixture on addition of the compounds of interest. The values are extrapolated to a concentration of the compounds of interest of 100%.

Components having a nematic phase at the measurement temperature of 20°C are measured as such, all others are treated like compounds.

The expression threshold voltage in the present application refers to the optical threshold and is quoted for 10% relative contrast (V₁₀), and the expression saturation voltage refers to the optical saturation and is quoted for 90% relative contrast (V₉₀), in both cases unless expressly stated otherwise. The capacitive threshold voltage (V₀), also called the Freedericks threshold (V_{Fr}), is only used if expressly mentioned.

The ranges of the parameters indicated in this application all include the limit values, unless expressly stated otherwise.

The different upper and lower limit values indicated for various ranges of properties in combination with one another give rise to additional preferred ranges.

Throughout this application, the following conditions and definitions apply, unless expressly stated otherwise. All concentrations are indicated in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy (Δn) is determined at a wavelength of 589.3 nm. The dielectric anisotropy (Δε) is determined at a frequency of 1 kHz. The threshold voltages, as well as all other electro-optical properties, are determined using test cells produced at Merck KGaA, Germany. The test cells for the determination of Δε have a cell thickness of approximately 20 µm. The electrode is a circular ITO electrode having an area of 1.13 cm² and a guard ring. The orientation layers are SE-1211 from Nissan Chemicals, Japan, for homeotropic orientation (ε∥) and polyimide AL-1054 from Japan Synthetic Rubber, Japan, for homogeneous orientation (ε_{⊥}). The capacitances are determined using a Solatron 1260 frequency response analyser using a sine wave with a voltage of 0.3 Vᵣₘₛ. The light used in the electro-optical measurements is white light. A set-up using a commercially available DMS instrument from Autronic-Melchers, Germany, is used here. The characteristic voltages have been determined under perpendicular observation. The threshold (V₁₀), mid-grey (V₅₀) and saturation (V₉₀) voltages have been determined for 10%, 50% and 90% relative contrast, respectively.

The liquid-crystal media according to the present invention may comprise further additives and chiral dopants in the usual concentrations. The total concentration of these further constituents is in the range from 0% to 10%, preferably 0.1% to 6%, based on the mixture as a whole. The concentrations of the individual compounds used are each preferably in the range from 0.1% to 3%. The concentration of these and similar additives is not taken into consideration when quoting the values and concentration ranges of the liquid-crystal components and compounds of the liquid-crystal media in this application.

The liquid-crystal media according to the invention consist of a plurality of compounds, preferably 3 to 30, more preferably 4 to 20 and very preferably 4 to 16 compounds. These compounds are mixed in a conventional manner. In general, the desired amount of the compound used in the smaller amount is dissolved in the compound used in the larger amount. If the temperature is above the clearing point of the compound used in the higher concentration, it is particularly easy to observe completion of the dissolution process. It is, however, also possible to prepare the media in other conventional ways, for example using so-called pre-mixes, which can be, for example, homologous or eutectic mixtures of compounds, or using so-called "multibottle" systems, the constituents of which are themselves ready-to-use mixtures.

By addition of suitable additives, the liquid-crystal media according to the present invention can be modified in such a way that they can be used in all known types of liquid-crystal displays, either using the liquid-crystal media as such, such as TN, TN-AMD, ECB-AMD, VAN-AMD, IPS-AMD, FFS-AMD LCDs, or in composite systems, such as PDLC, NCAP, PN LCDs and especially in ASM-PA LCDs.

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

In the present invention and especially in the following examples, the structures of the mesogenic compounds are indicated by means of abbreviations, also called acronyms. In these acronyms, the chemical formulae are abbreviated as follows using Tables A to C below. All groups CₙH₂ₙ₊₁, CₘH₂ₘ₊₁ and CₗH₂ₗ₊₁ or CₙH₂ₙ₋₁, CₘH₂ₘ₋₁ and CₗH₂ₗ₋₁ denote straight-chain alkyl or alkenyl, preferably 1E-alkenyl, each having n, m and I C atoms respectively. Table A lists the codes used for the ring elements of the core structures of the compounds, while Table B shows the linking groups. Table C gives the meanings of the codes for the left-hand or right-hand end groups. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 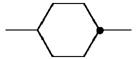 | | |
| **P** | 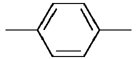 | | |
| **D** | 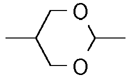 | **DI** | 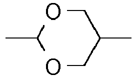 |
| **A** | 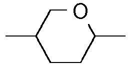 | **AI** | 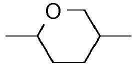 |
| **G** | 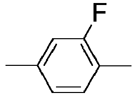 | **GI** | 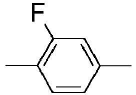 |
| **U** | 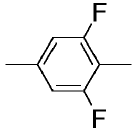 | **UI** | 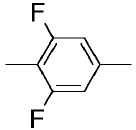 |
| **Y** | 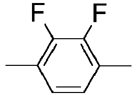 | | |
| **M** | 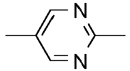 | **MI** | 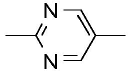 |
| **N** | 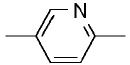 | **NI** | 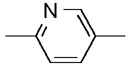 |
| **Np** | 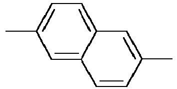 | **dH** | 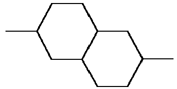 |
| **N3f** | 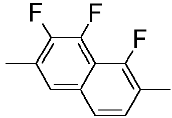 | **N3fl** | 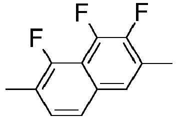 |
| **tH** | 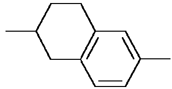 | **tHI** | 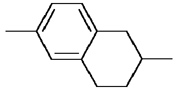 |
| **tH2f** | 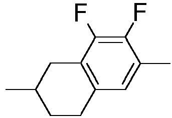 | **tH2fl** | 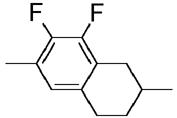 |
| **K** | 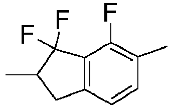 | **KI** | 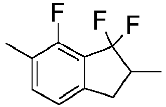 |
| **L** | 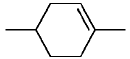 | **LI** | 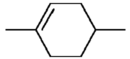 |
| **F** | 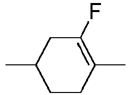 | **FI** | 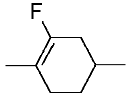 |
| **Nf** | 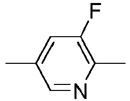 | **Nfl** | 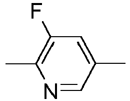 |

**Table B: Linking groups**

| | | | |
|---|---|---|---|
| **E** | -CH₂CH₂- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | | |

**Table C: End groups**

| **Left-hand side** | **Right-hand side** | | |
|---|---|---|---|
| **Use alone** | | | |
| **-n-** | CnH₂ₙ₊₁- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH-CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | -F | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Use together with one another and with others** | | | |
|---|---|---|---|
| **-...A...-** | -C≡C- | **-...A...** | -C≡C- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |
| **-...X...-** | -CH=CF- | **-...X...** | -CH=CF- |
| **-...XI...-** | -CF=CH- | **-...XI...** | -CF=CH- |

in which n and m each denote integers, and the three dots "..." are place-holders for other abbreviations from this table.

The following table shows illustrative structures together with their respective abbreviations. These are shown in order to illustrate the meaning of the rules for the abbreviations. They furthermore represent compounds which are preferably used.

**Table D: Illustrative structures**

| |
|---|
| 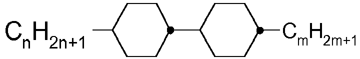 |
| **CC-n-m** |
| 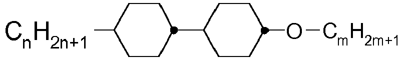 |
| **CC-n-Om** |
| 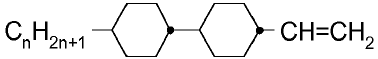 |
| **CC-n-V** |
| 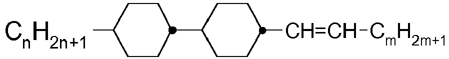 |
| **CC-n-Vm** |
| 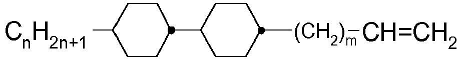 |
| **CC-n-mV** |
| 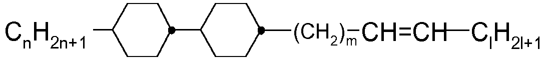 |
| **CC-n-mVI** |
| 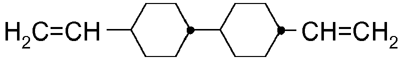 |
| **CC-V-V** |
| 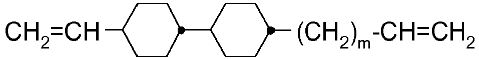 |
| **CC-V-mV** |
| 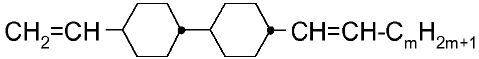 |
| **CC-V-Vm** |
| 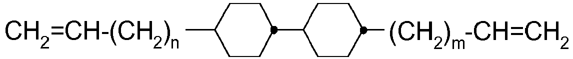 |
| **CC-Vn-mV** |
| 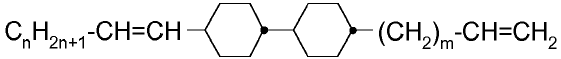 |
| **CC-nV-mV** |
| 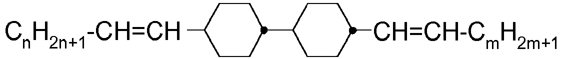 |
| **CC-nV-Vm** |
| 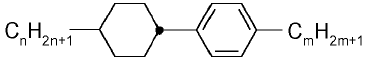 |
| **CP-n-m** |
| 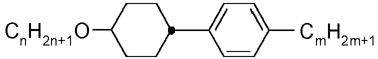 |
| **CP-nO-m** |
| 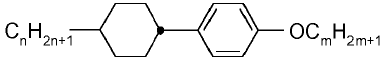 |
| **CP-n-Om** |
| 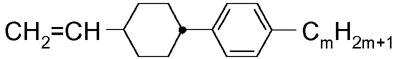 |
| **CP-V-m** |
| 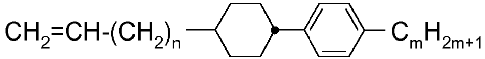 |
| **CP-Vn-m** |
| 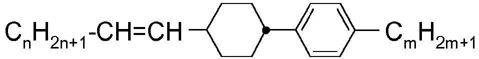 |
| **CP-nV-m** |
| 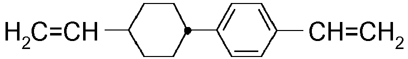 |
| **CP-V-V** |
| 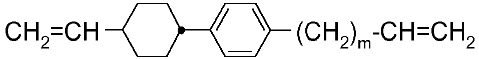 |
| **CP-V-mV** |
| 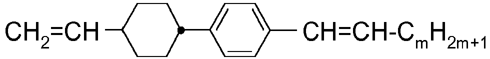 |
| **CP-V-Vm** |
| 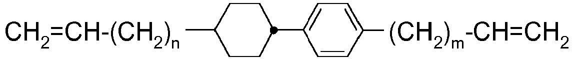 |
| **CP-Vn-mV** |
| 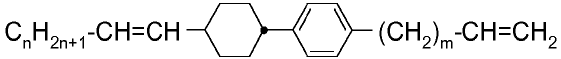 |
| **CP-nV-mV** |
| 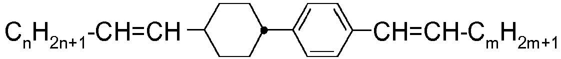 |
| **CP-nV-Vm** |
| 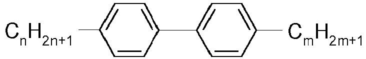 |
| **PP-n-m** |
| 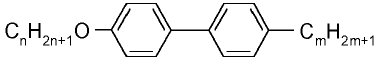 |
| **PP-nO-m** |
| 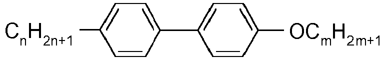 |
| **PP-n-Om** |
| 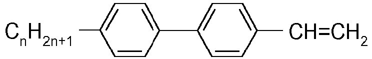 |
| **PP-n-V** |
| 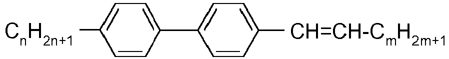 |
| **PP-n-Vm** |
| 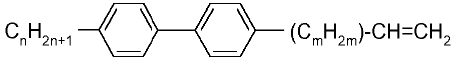 |
| **PP-n-mV** |
| 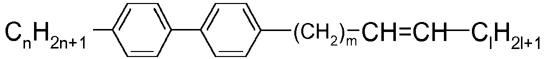 |
| **PP-n-mVI** |
| 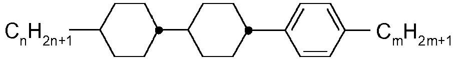 |
| **CCP-n-m** |
| 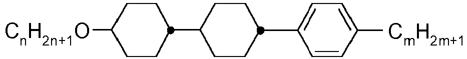 |
| **CCP-nO-m** |
| 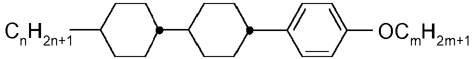 |
| **CCP-n-Om** |
| 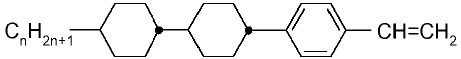 |
| **CCP-n-V** |
| 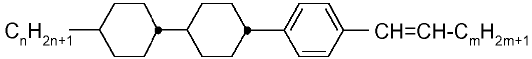 |
| **CCP-n-Vm** |
| 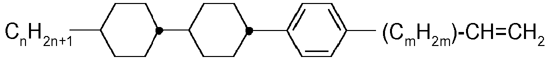 |
| **CCP-n-mV** |
| 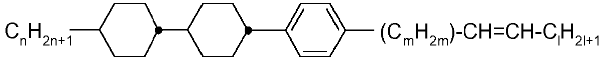 |
| **CCP-n-mVI** |
| 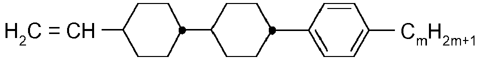 |
| **CCP-V-m** |
| 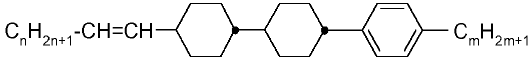 |
| **CCP-nV-m** |
| 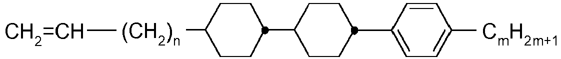 |
| **CCP-Vn-m** |
| 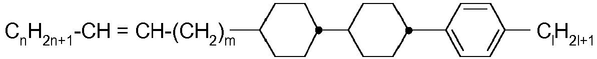 |
| **CCP-nVm-I** |
| 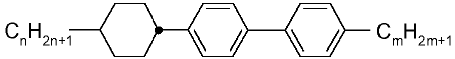 |
| **CPP-n-m** |
| 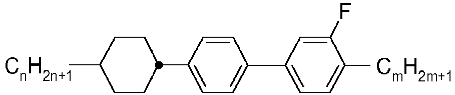 |
| **CPG-n-m** |
| 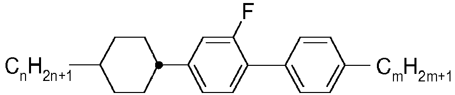 |
| **CGP-n-m** |
| 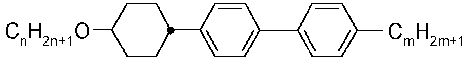 |
| **CPP-nO-m** |
| 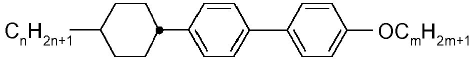 |
| **CPP-n-Om** |
| 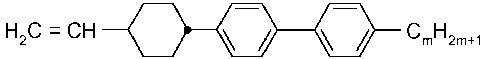 |
| **CPP-V-m** |
| 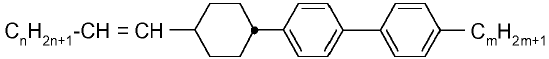 |
| **CPP-nV-m** |
| 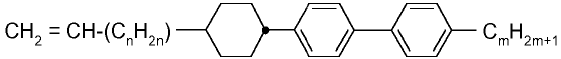 |
| **CPP-Vn-m** |
| 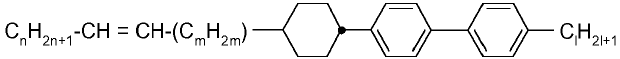 |
| **CPP-nVm-I** |
| 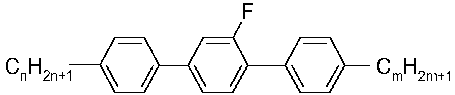 |
| **PGP-n-m** |
| 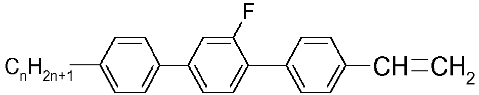 |
| **PGP-n-V** |
| 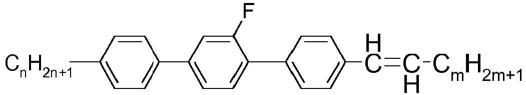 |
| **PGP-n-Vm** |
| 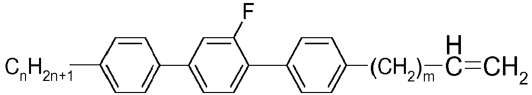 |
| **PGP-n-mV** |
| 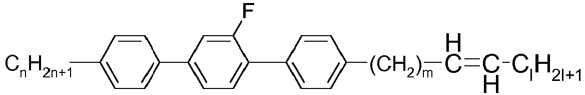 |
| **PGP-n-mVI** |
| 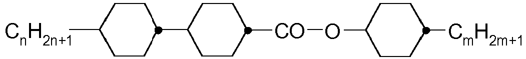 |
| **CCZC-n-m** |
| 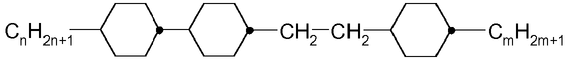 |
| **CCEC-n-m** |
| 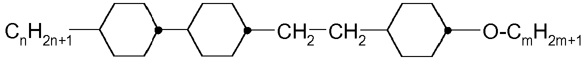 |
| **CCEC-n-Om** |
| 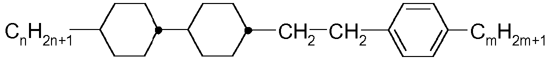 |
| **CCEP-n-m** |
| 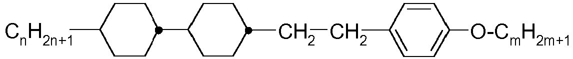 |
| **CCEP-n-Om** |
| 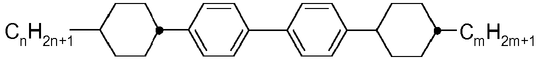 |
| **CPPC-n-m** |
| 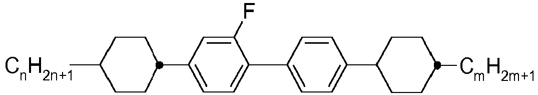 |
| **CGPC-n-m** |
| 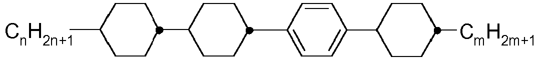 |
| **CCPC-n-m** |
| 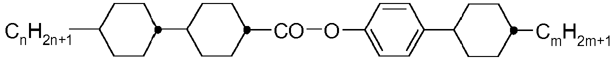 |
| **CCZPC-n-m** |
| 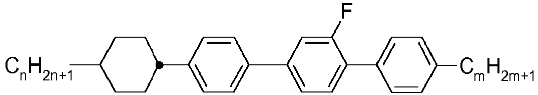 |
| **CPGP-n-m** |
| 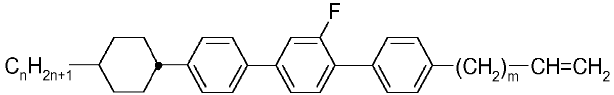 |
| **CPGP-n-mV** |
| 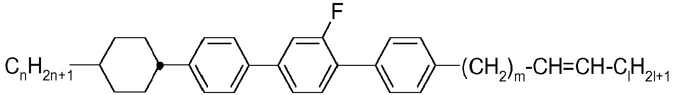 |
| **CPGP-n-mVI** |
| 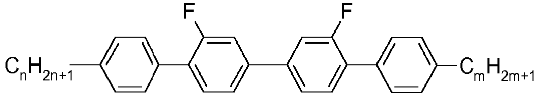 |
| **PGIGP-n-m** |
| 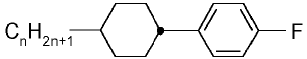 |
| **CP-n-F** |
| 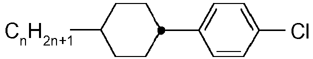 |
| **CP-n-CL** |
| 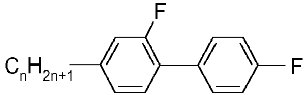 |
| **GP-n-F** |
| 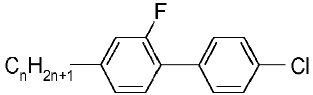 |
| **GP-n-CL** |
| 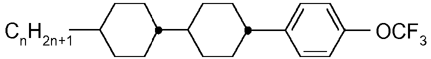 |
| **CCP-n-OT** |
| 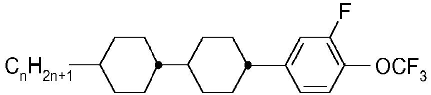 |
| **CCG-n-OT** |
| 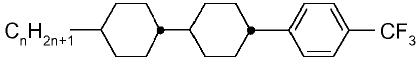 |
| **CCP-n-T** |
| 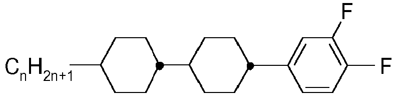 |
| **CCG-n-F** |
| 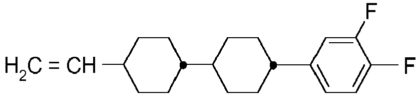 |
| **CCG-V-F** |
| 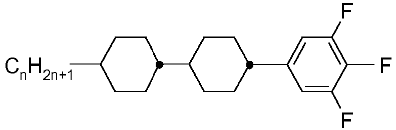 |
| **CCU-n-F** |
| 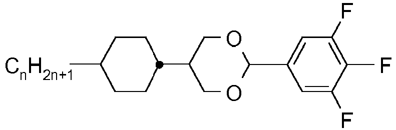 |
| **CDU-n-F** |
| 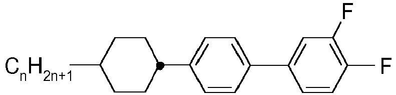 |
| **CPG-n-F** |
| 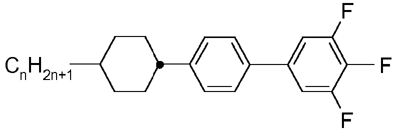 |
| **CPU-n-F** |
| 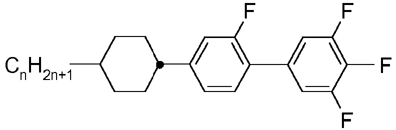 |
| **CGU-n-F** |
| 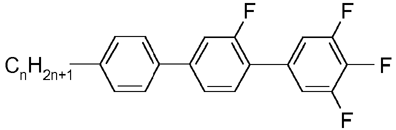 |
| **PGU-n-F** |
| 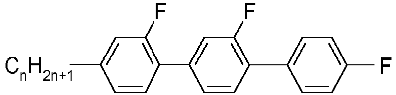 |
| **GGP-n-F** |
| 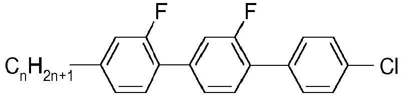 |
| **GGP-n-CL** |
| 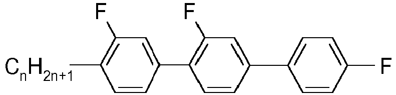 |
| **PGIGI-n-F** |
| 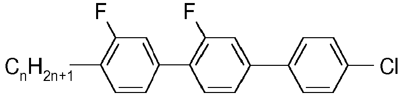 |
| **PGIGI-n-CL** |
| 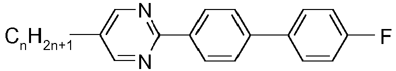 |
| **MPP-n-F** |
| 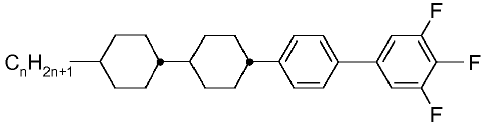 |
| **CCPU-n-F** |
| 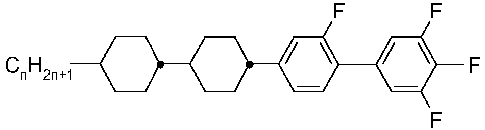 |
| **CCGU-n-F** |
| 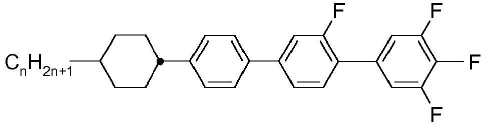 |
| **CPGU-n-F** |
| 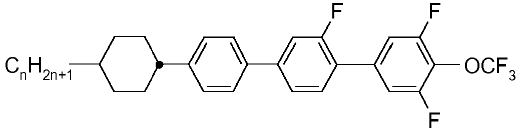 |
| **CPGU-n-OT** |
| 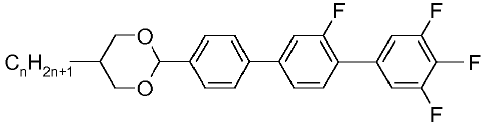 |
| **DPGU-n-F** |
| 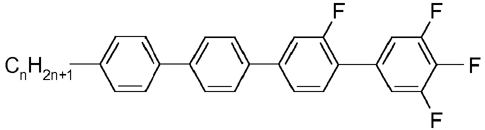 |
| **PPGU-n-F** |
| 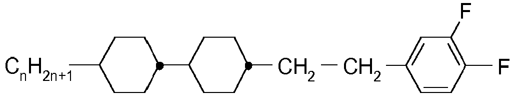 |
| **CCEG-n-F** |
| 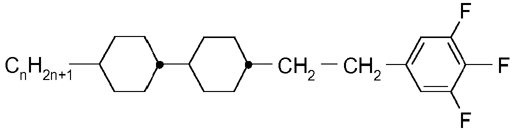 |
| **CCEU-n-F** |
| 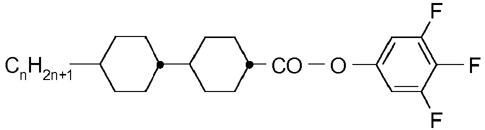 |
| **CCZU-n-F** |
| 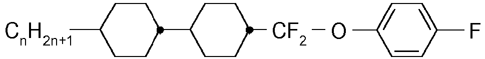 |
| **CCQP-n-F** |
| 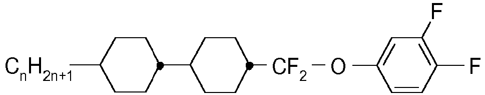 |
| **CCQG-n-F** |
| 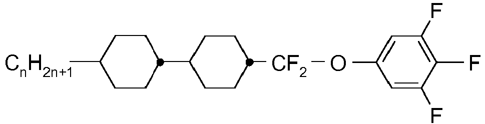 |
| **CCQU-n-F** |
| 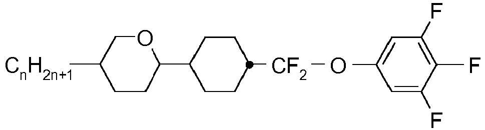 |
| **ACQU-n-F** |
| 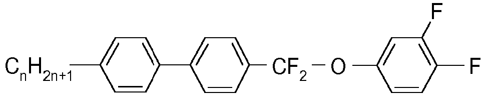 |
| **PPQG-n-F** |
| 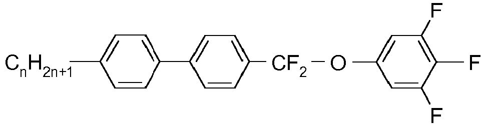 |
| **PPQU-n-F** |
| 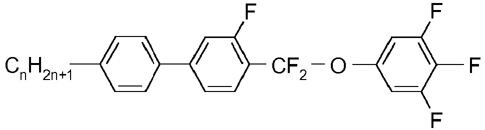 |
| **PGQU-n-F** |
| 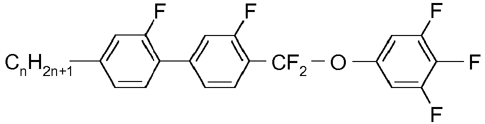 |
| **GGQU-n-F** |
| 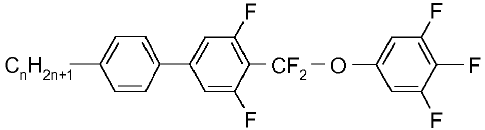 |
| **PUQU-n-F** |
| 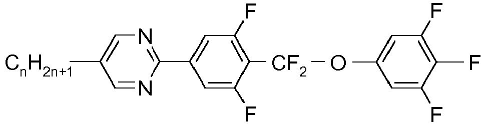 |
| **MUQU-n-F** |
| 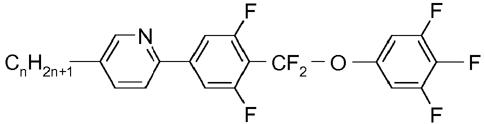 |
| **NUQU-n-F** |
| 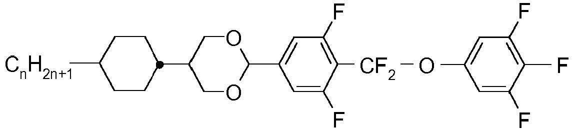 |
| **CDUQU-n-F** |
| 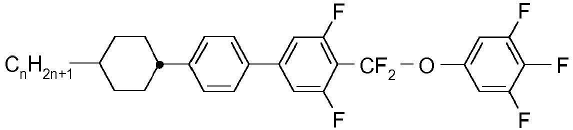 |
| **CPUQU-n-F** |
| 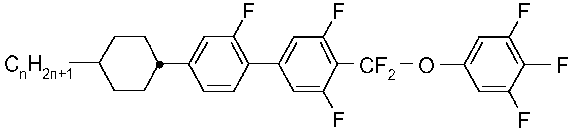 |
| **CGUQU-n-F** |
| 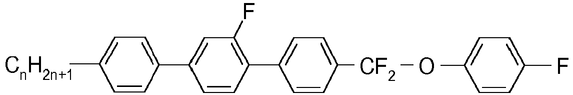 |
| **PGPQP-n-F** |
| 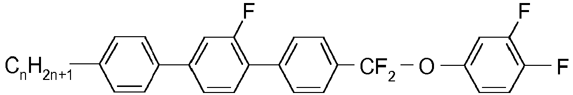 |
| **PGPQG-n-F** |
| 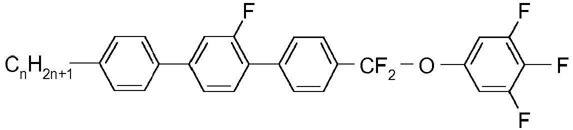 |
| **PGPQU-n-F** |
| 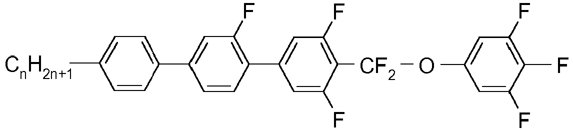 |
| **PGUQU-n-F** |
| 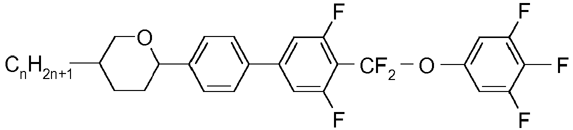 |
| **APUQU-n-F** |
| 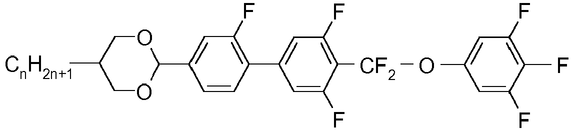 |
| **DGUQU-n-F** |
| 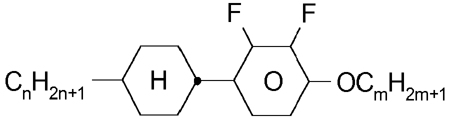 |
| **CY-n-Om** |
| 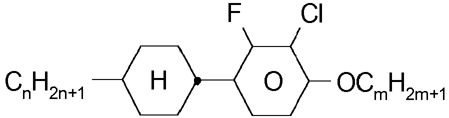 |
| **CY(F,CI)-n-Om** |
| 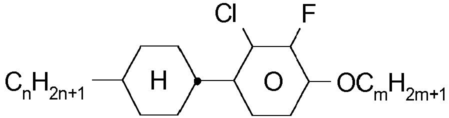 |
| **CY(CI,F)-n-Om** |
| 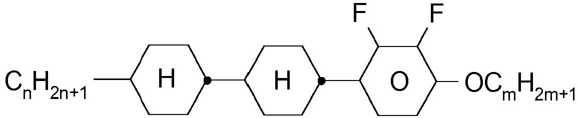 |
| **CCY-n-Om** |
| 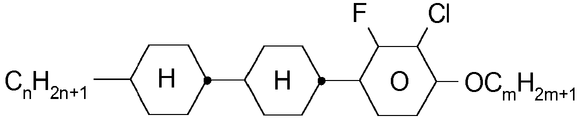 |
| **CCY(F,CI)-n-Om** |
| 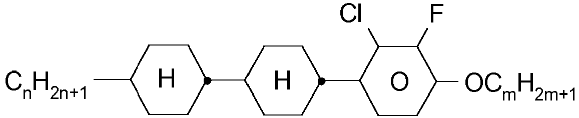 |
| **CCY(CI,F)-n-Om** |
| 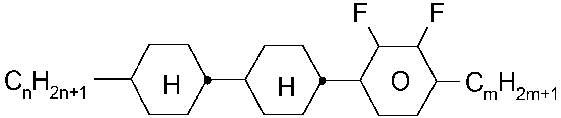 |
| **CCY-n-m** |
| 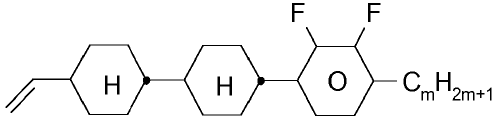 |
| **CCY-V-m** |
| 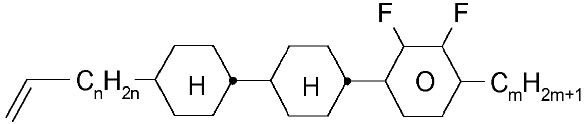 |
| **CCY-Vn-m** |
| 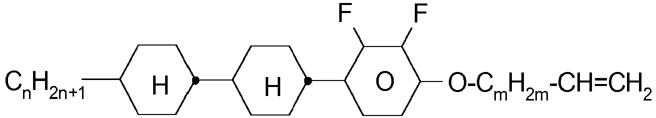 |
| **CCY-n-OmV** |
| 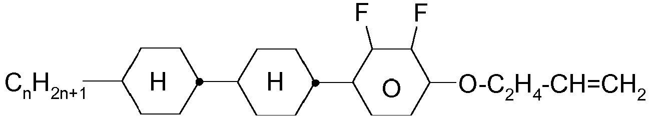 |
| **CCY-n-O2V** |
| 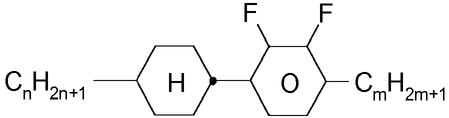 |
| **CY-n-m** |
| 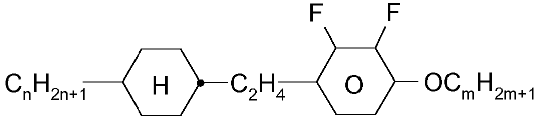 |
| **CEY-n-Om** |
| 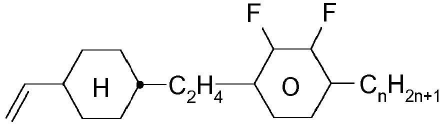 |
| **CEY-V-n** |
| 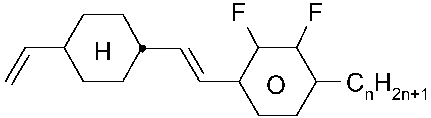 |
| **CVY-V-n** |
| 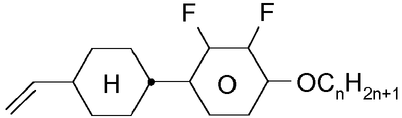 |
| **CY-V-On** |
| 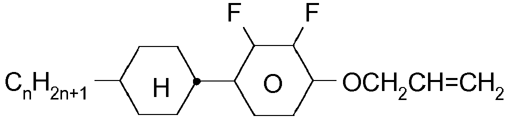 |
| **CY-n-O1V** |
| 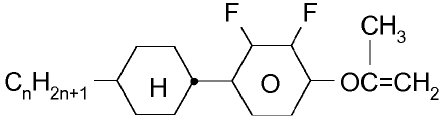 |
| **CY-n-OC(CH₃)=CH₂** |
| 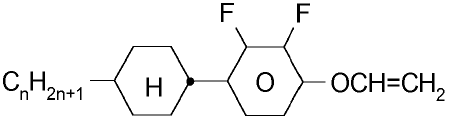 |
| **CY-n-OV** |
| 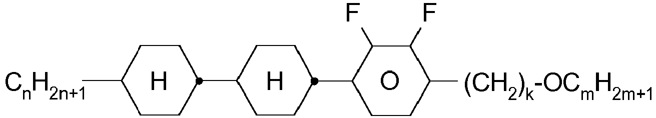 |
| **CCY-n-kOm** |
| 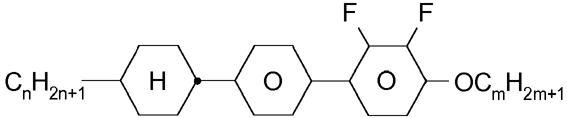 |
| **CPY-n-Om** |
| 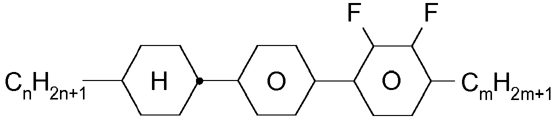 |
| **CPY-n-m** |
| 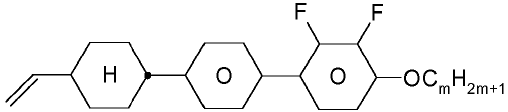 |
| **CPY-V-Om** |
| 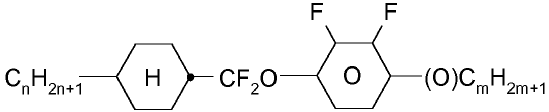 |
| **CQY-n-(O)m** |
| 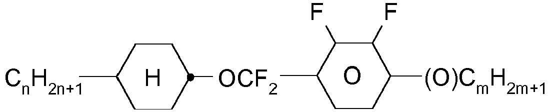 |
| **CQIY-n-(O)m** |
| 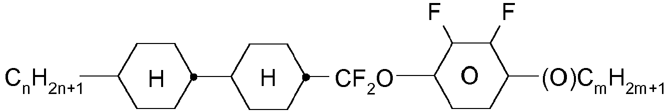 |
| **CCQY-n-(O)m** |
| 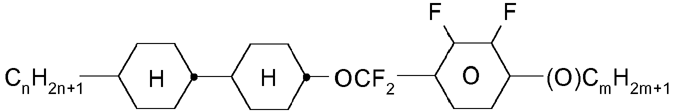 |
| **CCQIY-n-(O)m** |
| 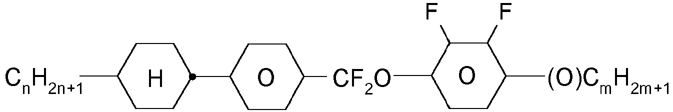 |
| **CPQY-n-(O)m** |
| 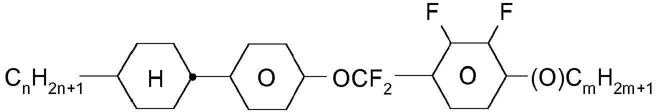 |
| **CPQIY-n-(O)m** |
| 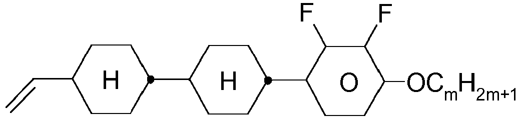 |
| **CCY-V-Om** |
| 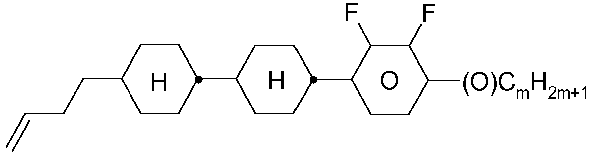 |
| **CCY-V2-(O)m** |
| 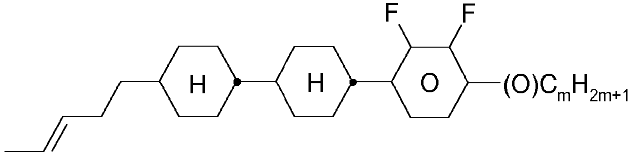 |
| **CCY-1V2-(O)m** |
| 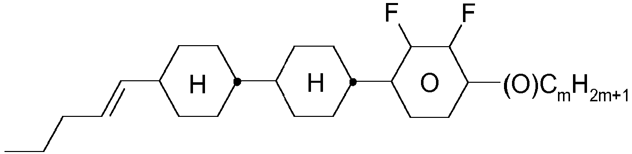 |
| **CCY-3V-(O)m** |
| 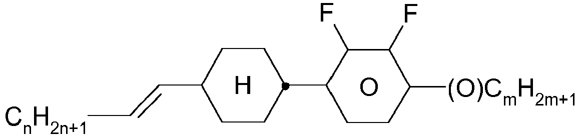 |
| **CY-nV-(O)m** |
| 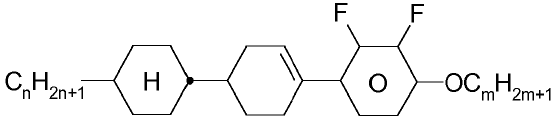 |
| **CLY-n-Om** |
| 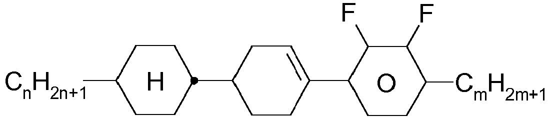 |
| **CLY-n-m** |
| 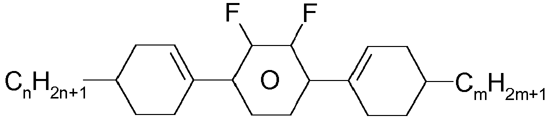 |
| **LYLI-n-m** |
| 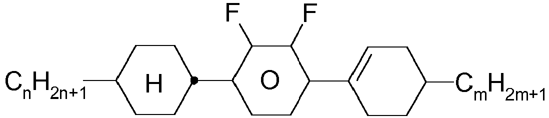 |
| **CYLI-n-m** |
| 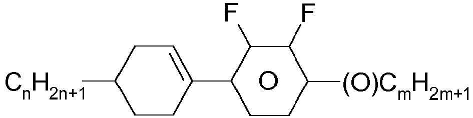 |
| **LY-n-(O)m** |
| 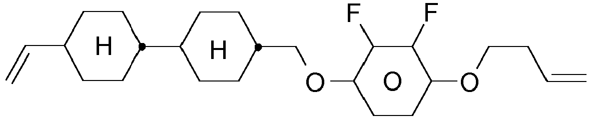 |
| **CCOY-V-O2V** |
| 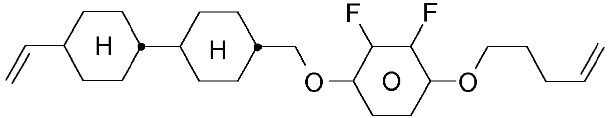 |
| **CCOY-V-O3V** |
| 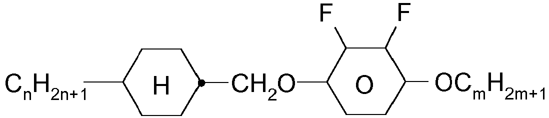 |
| **COY-n-Om** |
| 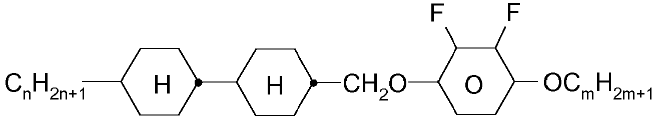 |
| **CCOY-n-Om** |
| 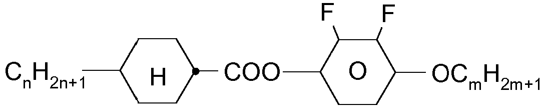 |
| **CZY-n-Om** |
| 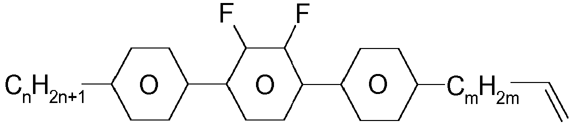 |
| **PYP-n-mV** |
| 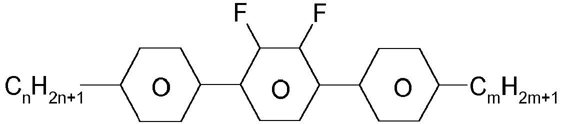 |
| **PYP-n-m** |
| 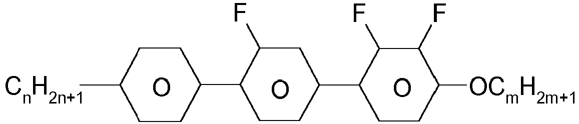 |
| **PGIY-n-Om** |
| 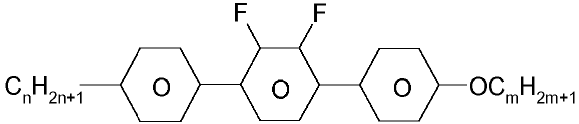 |
| **PYP-n-Om** |
| 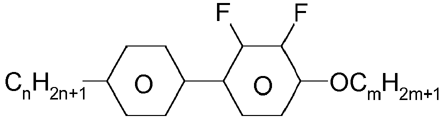 |
| **PY-n-Om** |
| 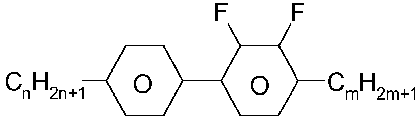 |
| **PY-n-m** |
| 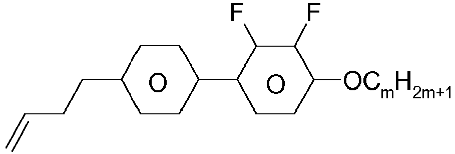 |
| **PY-V2-Om** |
| 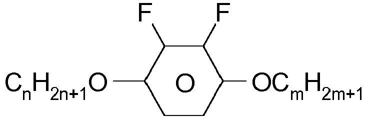 |
| **Y-nO-Om** |
| 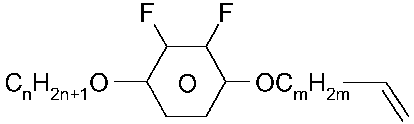 |
| **Y-nO-OmV** |
| 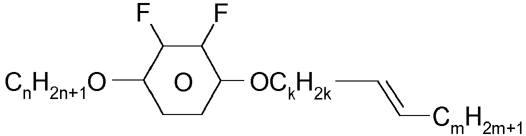 |
| **Y-nO-OkVm** |
| 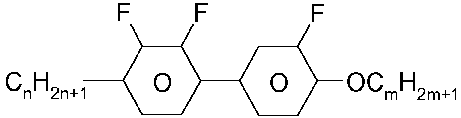 |
| **YG-n-Om** |
| 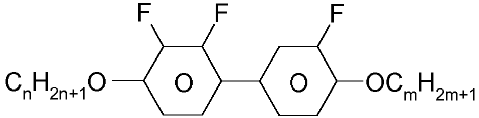 |
| **YG-nO-Om** |
| 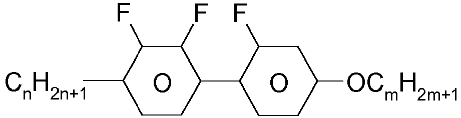 |
| **YGI-n-Om** |
| 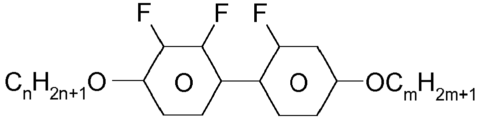 |
| **YGI-nO-Om** |
| 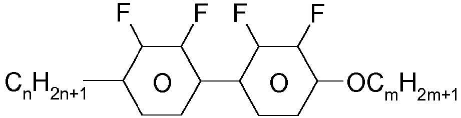 |
| **YY-n-Om** |
| 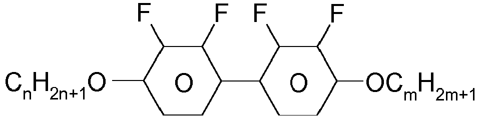 |
| **YY-n O-O m** |

in which n, m and l preferably, independently of one another, denote 1 to 7.

The following table, Table E, shows illustrative compounds which can be used as additional stabilisers in the mesogenic media according to the present invention.

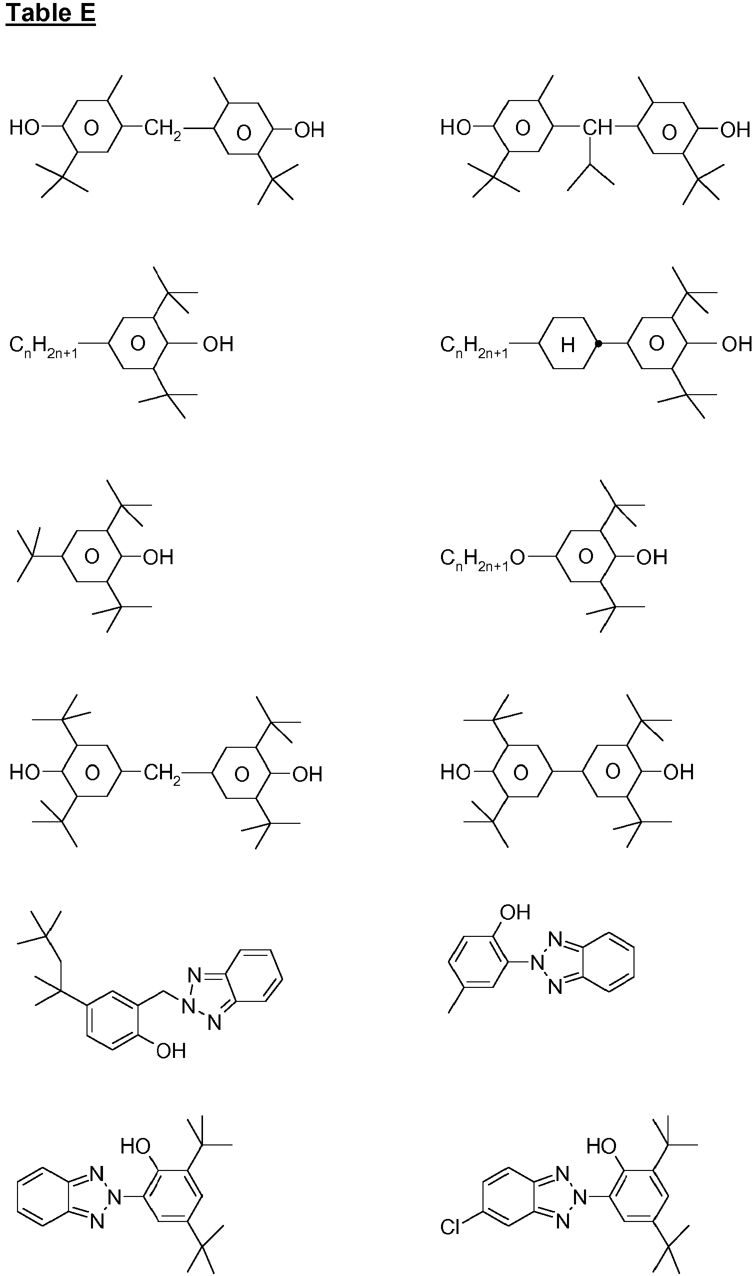

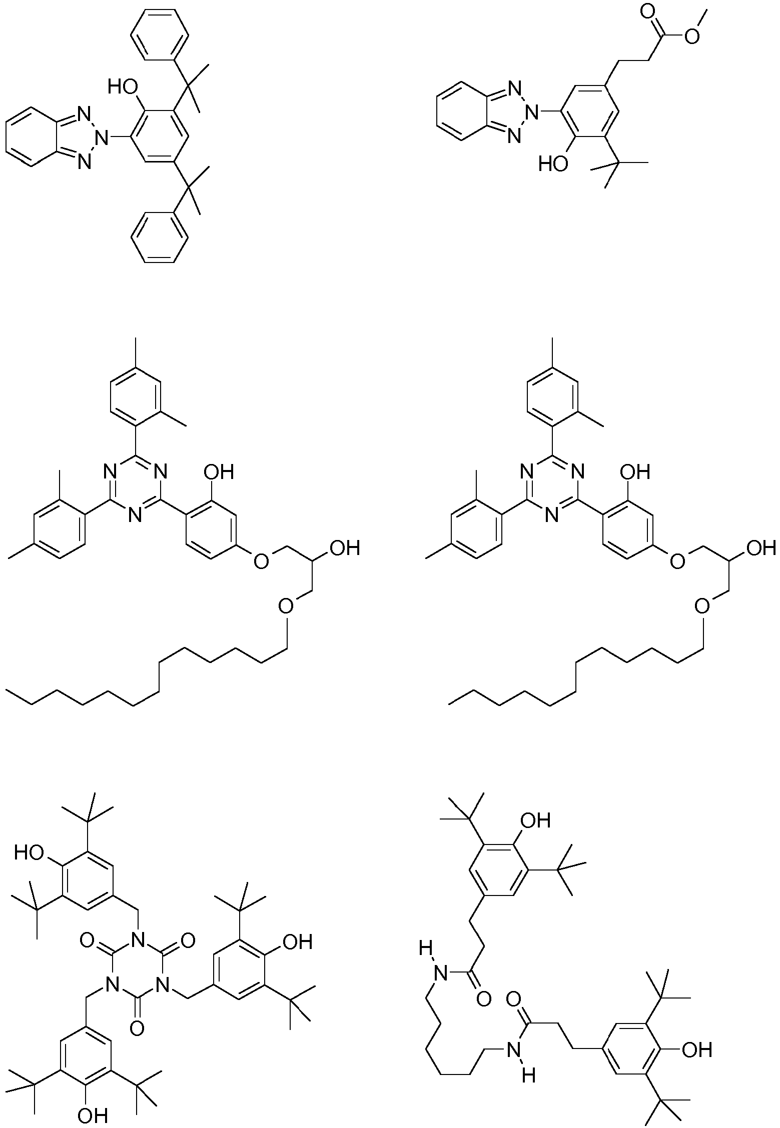

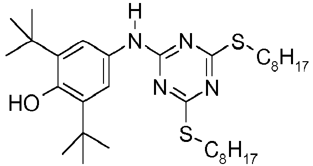

In a preferred embodiment of the present invention, the mesogenic media comprise one or more compounds selected from the group of the compounds from Table E.

Table F below shows illustrative compounds which can preferably be used as chiral dopants in the mesogenic media according to the present invention.

| **Table F** |
|---|
| 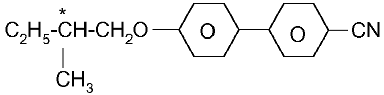 |
| **C15** |
| 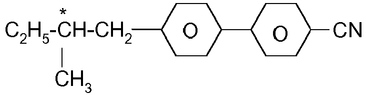 |
| **CB 15** |
| 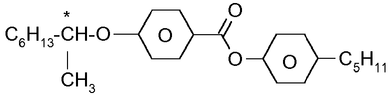 |
| **CM 21** |
| 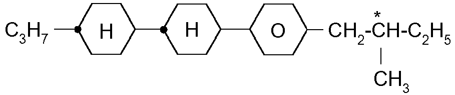 |
| **CM 44** |
| 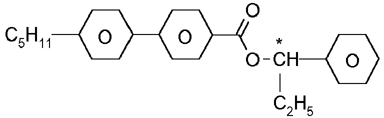 |
| **CM 45** |
| 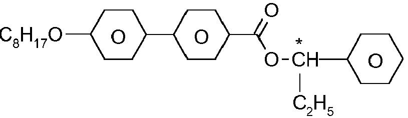 |
| **CM 47** |
| 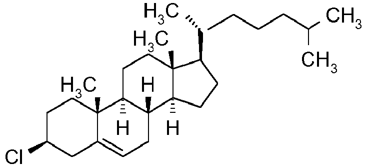 |
| **CC** |
| 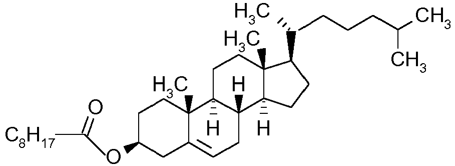 |
| **CN** |
| 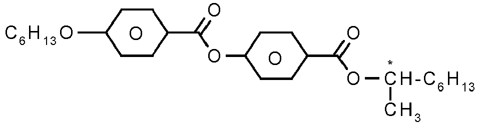 |
| **R/S-811** |
| 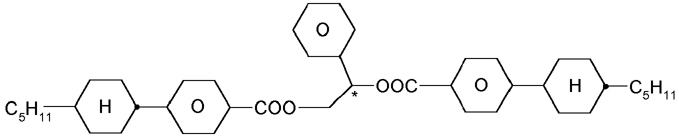 |
| **R/S-1011** |
| 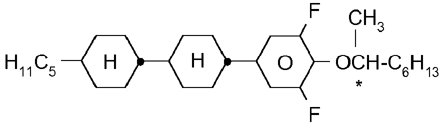 |
| **R/S-2011** |
| 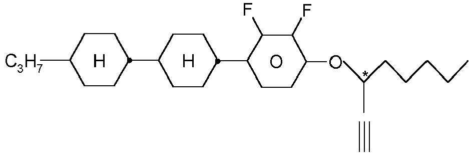 |
| **R/S-3011** |
| 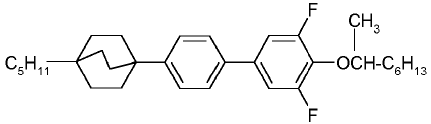 |
| **R/S-4011** |
| 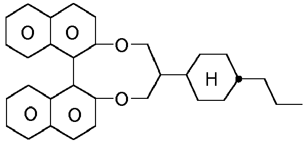 |
| **R/S-5011** |

In a preferred embodiment of the present invention, the mesogenic media comprise one or more compounds selected from the group of the compounds from Table F.

The mesogenic media according to the present application preferably comprise two or more, preferably four or more, compounds selected from the group consisting of the compounds from the above tables.

The liquid-crystal media according to the present invention preferably comprise
- seven or more, preferably eight or more, individual compounds, preferably of three or more, particularly preferably of four or more, different formulae, selected from the group of the compounds from Table D.

### Examples

The examples below illustrate the present invention without limiting it in any way.

However, the physical properties show the person skilled in the art what properties can be achieved and in what ranges they can be modified. In particular, the combination of the various properties which can preferably be achieved is thus well defined for the person skilled in the art.

Liquid-crystal mixtures having the composition and properties as indicated in the following tables are prepared and investigated.

### Comparative Example 1

An LC mixture (M1-0) with positive dielectric anisotropy is formulated as follows.

| Composition | | Properties | |
|---|---|---|---|
| Compound | c [%] | | |
| CC-3-V | 37.0 | T(N,I) [°C]: | 94.5 |
| CC-3-V1 | 9.5 | nₑ (589 nm, 20°C): | 1.5894 |
| CCP-V-1 | 11.5 | nₒ (589 nm, 20°C): | 1.4845 |
| CCP-V2-1 | 3.0 | Δn (589 nm, 20°C): | 0.1049 |
| PGP-2-2V | 10.5 | ε_{∥} (1 kHz, 20°C): | 7.8 |
| APUQU-3-F | 5.0 | ε_{⊥} (1 kHz, 20°C): | 2.9 |
| APUQU-2-F | 5.0 | Δε (1 kHz, 20°C): | 4.9 |
| PGUQU-4-F | 3.5 | γ₁ (20°C) [mPa.s] | 67 |
| PGUQU-3-F | 2.0 | K, (20°C) [pN]: | 15.6 |
| CCP-3-OT3 | 9.0 | K₃ (20°C) [pN]: | 17.1 |
| CCP-5-OT | 2.0 | V₀ (20°C) [V]: | 1.87 |
| CCQU-3-F | 2.0 | | |
| ∑ | 100.0 | | |

To the above mixture (M1-0) is separated in to four parts. The first part is investigated as such. To one each of the further three parts either 300 ppm, 500 ppm or 1,000 ppm of stabilizer S1a and 500 ppm of stabilizer S2a1 are added (mixtures M1-1 to M-1-3).

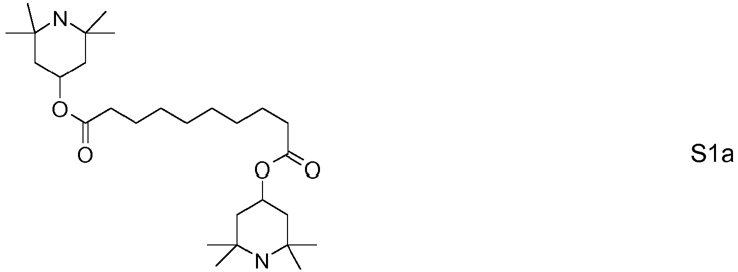

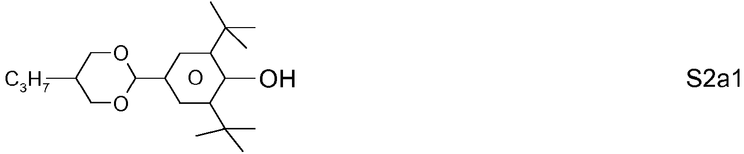

### Use Examples

The LC media M1-1 to M1-3 formulated as in Comparative Example 1 are filled into VHR test cells as described above.

The test cells are subjected to thermal stress (100°C). The VHR is measured as described above after various time intervals (tₕₑₐₜ). For comparison purpose the measurement is repeated with the reference LC medium M1-0, which is formulated as in Comparative Example 1. The VHR values are shown in Table 1 below.

**Table 1 VHR after Heat Load**

| Example | | C1 | E1.1 | E1.2 | E1.3 |
|---|---|---|---|---|---|
| LC | | M1-0 | M1-1 | M1-2 | M1-3 |
| c(S1a) | / ppm | 0 | 300 | 500 | 1,000 |
| c(S2a1) | / ppm | 0 | 500 | | |

| | tₕₑₐₜ / h | VHR/% | | | |
|---|---|---|---|---|---|
| | 0 | 98.8 | 98.0 | 97.9 | 97.7 |
| | 24 | 98.7 | 98.8 | 98.7 | 98.6 |
| | 48 | 98.5 | 98.9 | 98.8 | 98.7 |
| | 120 | 98.6 | 98.9 | 98.9 | 98.5 |

Another set of filed test cells is subjected to an exposure by a back light unit of an LCD. The VHR is measured as described above after various time intervals (t_{light}). The VHR values are shown in Table 2 below.

**Table 2: VHR after Back Light Load**

| Example | | C1 | E1.1 | E1.2 | E1.3 |
|---|---|---|---|---|---|
| LC | | M1-0 | M1-1 | M1-2 | M1-3 |
| c(S1a) | / ppm | 0 | 300 | 500 | 1,000 |
| c(S2a1) | / ppm | 0 | 500 | | |

| | f_{light} / h | VHR/% | | | |
|---|---|---|---|---|---|
| | 0 | 99.2 | 98.0 | 97.7 | 97.5 |
| | 24 | 98.5 | 99.0 | 98.9 | 98.8 |
| | 168 | 95.6 | 98.4 | 98.2 | 98.4 |
| | 336 | 94.5 | 98.7 | 97.9 | 98.2 |
| | 504 | 91.3 | 97.4 | 97.1 | 97.4 |

It can be seen that the LC media M1-1 to M1-3, which contain both stabilizers S1a and S2a1, show significantly lower decrease of the VHR after long heat exposure and/or back light load compared to LC medium M1-0, which does not contain any compounds of formulae S1 and S2. The absence of additives results in a significant drop in the HR of the mixture after heating, as well as after the back light test.

### Comparative Example 2

An LC mixture (M2-0) with positive dielectric anisotropy is formulated as follows.

| Composition | | Properties | |
|---|---|---|---|
| Compound | c [%] | | |
| CC-3-V | 36.0 | T(N,I) [°C]: | 78 |
| CC-3-V1 | 5.0 | nₑ (589 nm, 20°C): | 1.5907 |
| CCP-V-1 | 8.0 | nₒ (589 nm, 20°C): | 1.4812 |
| PGP-2-2V | 3.0 | Δn (589 nm, 20°C): | 0.1095 |
| CCQU-3-F | 9.5 | ε_{∥} (1 kHz, 20°C): | 16.6 |
| PUQU-3-F | 8.5 | ε_{⊥} (1 kHz, 20°C): | 3.7 |
| APUQU-2-F | 5.0 | Δε (1 kHz, 20°C): | 12.9 |
| APUQU-3-F | 8.0 | γ₁ (20°C) [mPa.s] | 78 |
| PGUQU-3-F | 4.0 | K, (20°C) [pN]: | 12.1 |
| PGUQU-4-F | 8.0 | K₃ (20°C) [pN]: | 13.4 |
| PGUQU-5-F | 5.0 | V₀ (20°C) [V]: | 1.01 |
| ∑ | 100.0 | | |

To the above mixture are added 1,000 ppm of stabilizer S1a and 500 ppm of stabilizer S2a1. The resultant mixture shows excellent stability against both heat load and back light load.

### Comparative Example 3

An LC mixture (M3-0) with positive dielectric anisotropy is formulated as follows.

| Composition | | Properties | |
|---|---|---|---|
| Compound | c [%] | | |
| CC-3-V | 32.0 | T(N,I) [°C]: | 85 |
| CC-3-V1 | 11.0 | nₑ (589 nm, 20°C): | 1.5865 |
| CC-3-2V1 | 4.5 | nₒ (589 nm, 20°C): | 1.4776 |
| PP-1-2V1 | 2.0 | Δn (589 nm, 20°C): | 0.1089 |
| CCP-3-OT | 7.5 | ε_{∥} (1 kHz, 20°C): | 19.0 |
| CCP-5-OT | 1.5 | ε_{⊥} (1 kHz, 20°C): | 3.7 |
| PUQU-3-F | 1.5 | Δε (1 kHz, 20°C): | 15.3 |
| APUQU-2-F | 7.0 | γ₁ (20°C) [mPa.s] | 89 |
| APUQU-3-F | 7.0 | K, (20°C) [pN]: | 14.4 |
| PGUQU-3-F | 3.0 | K₃ (20°C) [pN]: | 15.1 |
| PGUQU-4-F | 8.0 | V₀ (20°C) [V]: | 1.01 |
| PGUQU-5-F | 2.0 | | |
| DPGU-4-F | 5.0 | | |
| DGUQU-4-F | 8.0 | | |
| ∑ | 100.0 | | |

To the above mixture are added 500 ppm of stabilizer S1a and 500 ppm of stabilizer S2a1. The resultant mixture shows excellent stability against both heat load and back light load.

### Comparative Example 4

An LC mixture (M4-0) with positive dielectric anisotropy is formulated as follows.

| Composition | | Properties | |
|---|---|---|---|
| Compound | c [%] | | |
| CC-3-V | 27.5 | T(N,I) [°C]: | 110.5 |
| CCP-V-1 | 10.0 | nₑ (589 nm, 20°C): | 1.5874 |
| CCP-3-OT | 5.0 | nₒ (589 nm, 20°C): | 1.4793 |
| CCU-3-F | 5.5 | Δn (589 nm, 20°C): | 0.1081 |
| CCQU-3-F | 12.0 | ε_{∥} (1 kHz, 20°C): | 17.5 |
| CCGU-3-F | 5.0 | ε_{⊥} (1 kHz, 20°C): | 3.7 |
| CPGU-3-OT | 5.0 | Δε (1 kHz, 20°C): | 13.9 |
| APUQU-2-F | 8.0 | γ₁ (20°C) [mPa.s] | |
| APUQU-3-F | 8.0 | K, (20°C) [pN]: | 14.3 |
| PGUQU-3-F | 3.0 | K₃ (20°C) [pN]: | 17.8 |
| PGUQU-4-F | 3.0 | V₀ (20°C) [V]: | 1.06 |
| CDUQU-3-F | 6.0 | | |
| CPGP-4-3 | 2.0 | | |
| ∑ | 100.0 | | |

To each one of respective part of the above mixture are added 500 ppm of stabilizer S2a1 and either 100 ppm, 500 ppm, 1,000 ppm or 1,500 ppm of stabilizer S1a are added. The resultant mixtures show excellent stability against both heat load and back light load.

### Comparative Example 5

An LC mixture (M5-0) with positive dielectric anisotropy is formulated as follows.

| Composition | | Properties | |
|---|---|---|---|
| Compound | c [%] | | |
| CC-3-V | 29.5 | T(N,I) [°C]: | 110 |
| CCP-V2-1 | 10.0 | nₑ (589 nm, 20°C): | 1.5842 |
| PGP-1-2V | 5.0 | nₒ (589 nm, 20°C): | 1.4800 |
| PGP-2-2V | 5.0 | Δn (589 nm, 20°C): | 0.1042 |
| CCP-3-OT | 8.0 | ε_{∥} (1 kHz, 20°C): | 8.2 |
| CCU-2-F | 5.5 | ε_{⊥} (1 kHz, 20°C): | 2.9 |
| CCQU-2-F | 6.0 | Δε (1 kHz, 20°C): | 5.3 |
| CCQU-3-F | 12.0 | γ₁ (20°C) [mPa.s] | 102 |
| CCQU-5-F | 8.0 | K, (20°C) [pN]: | 16.2 |
| CCGU-3-F | 4.5 | K₃ (20°C) [pN]: | 19.1 |
| CPGU-3-OT | 3.5 | V₀ (20°C) [V]: | 1.84 |
| CPGP-5-2 | 3.0 | | |
| Σ | 100.0 | | |

To the above mixture are added 300 ppm of stabilizer S1a and 500 ppm of stabilizer S2a1. The resultant mixture shows excellent stability against both heat load and back light load.

### Comparative Example 6

An LC mixture (M6-0) with positive dielectric anisotropy is formulated as follows.

| Composition | | Properties | |
|---|---|---|---|
| Compound | c [%] | | |
| CC-3-V | 33.5 | T(N,I) [°C]: | 109 |
| CC-3-V1 | 10.5 | nₑ (589 nm, 20°C): | 1.5821 |
| CCP-V-1 | 13.0 | nₒ (589 nm, 20°C): | 1.4835 |
| CCP-V2-1 | 8.0 | Δn (589 nm, 20°C): | 0.0986 |
| PGP-2-2V | 6.5 | ε_{∥} (1 kHz, 20°C): | 6.0 |
| CCQU-3-F | 11.0 | ε_{⊥} (1 kHz, 20°C): | 2.6 |
| CCQU-5-F | 4.5 | Δε (1 kHz, 20°C): | 3.3 |
| CCGU-3-F | 5.0 | γ₁ (20°C) [mPa.s] | 83 |
| CPGU-3-OT | 6.0 | K, (20°C) [pN]: | 17.1 |
| CPGP-5-2 | 2.0 | K₃ (20°C) [pN]: | 19.8 |
| Σ | 100.0 | V₀ (20°C) [V]: | 2.38 |

To the above mixture are added 300 ppm of stabilizer S1a and 500 ppm of stabilizer S2a1. The resultant mixture shows excellent stability against both heat load and back light load.

### Comparative Example 7

An LC mixture (M7-0) with positive dielectric anisotropy is formulated as follows.

| Composition | | Properties | |
|---|---|---|---|
| Compound | c [%] | | |
| CC-3-V | 44.5 | T(N,I) [°C]: | 80.5 |
| CC-3-V1 | 5.5 | nₑ (589 nm, 20°C): | 1.5880 |
| CCP-V-1 | 8.0 | nₒ (589 nm, 20°C): | 1.4828 |
| PGP-2-3 | 4.0 | Δn (589 nm, 20°C): | 0.1052 |
| PGP-2-4 | 5.0 | ε_{∥} (1 kHz, 20°C): | 9.1 |
| PUQU-3-F | 2.5 | ε_{⊥} (1 kHz, 20°C): | 3.0 |
| CCP-3-OT | 8.0 | Δε (1 kHz, 20°C): | 6.1 |
| CCQU-3-F | 5.0 | γ₁ (20°C) [mPa.s] | 59 |
| PGUQU-3-F | 3.0 | K, (20°C) [pN]: | 13.2 |
| PGUQU-4-F | 9.0 | K₃ (20°C) [pN]: | 14.7 |
| PGUQU-5-F | 5.5 | V₀ (20°C) [V]: | 1.54 |
| Σ | 100.0 | | |

To respective parts of the above mixture each are added 300 ppm of stabilizer S1a and respectively 200 ppm, 500 ppm or 800 ppm of stabilizer S2a1. The resultant mixtures show excellent stability against both heat load and back light load.

### Example 8 (according to the invention)

An LC mixture (M8-0) with positive dielectric anisotropy is formulated as follows.

| Composition | | Properties | |
|---|---|---|---|
| Compound | c [%] | | |
| CC-3-V | 42.0 | T(N,I) /°C: | 79.5 |
| CC-3-V1 | 5.5 | nₑ (589 nm, 20°C): | 1.5864 |
| CCP-V-1 | 4.0 | nₒ (589 nm, 20°C): | 1.4810 |
| CCP-3-OT | 7.0 | Δn (589 nm, 20°C): | 0.1054 |
| PGP-2-2V | 6.5 | ε_{∥} (1 kHz, 20°C): | 8.4 |
| APUQU-2-F | 3.0 | ε_{⊥} (1 kHz, 20°C): | 3.9 |
| APUQU-3-F | 8.0 | Δε (1 kHz, 20°C): | 4.5 |
| PGUQU-3-F | 4.0 | γ₁ (20°C) [mPa.s] | 62 |
| CPGU-3-OT | 5.0 | K, (20°C) [pN]: | 13.1 |
| CPY-3-O2 | 3.0 | K₃ (20°C) [pN]: | 14.4 |
| CY-3-O2 | 9.0 | V₀ (20°C) [V]: | 1.78 |
| PYP-2-3 | 3.0 | | |
| Σ | 100.0 | | |

To respective parts of the above mixture each are added 600 ppm of stabilizer S2a1 and respectively 300 ppm or 500 ppm of stabilizer S1a. The resultant mixtures show excellent stability against both heat load and back light load.

### Example 9 (according to the invention)

An LC mixture (M9-0) with positive dielectric anisotropy is formulated as follows.

| Composition | | Properties | |
|---|---|---|---|
| Compound | c [%] | | |
| CC-3-V | 46.0 | T(N,I) /°C: | 78.5 |
| CC-3-V1 | 4.0 | nₑ (589 nm, 20°C): | 1.5891 |
| PGP-2-2V | 8.5 | nₒ (589 nm, 20°C): | 1.4835 |
| PUQU-3-F | 2.5 | Δn (589 nm, 20°C): | 0.1056 |
| APUQU-3-F | 6.0 | ε_{∥} (1 kHz, 20°C): | 8.4 |
| PGUQU-3-F | 4.0 | ε_{⊥} (1 kHz, 20°C): | 3.6 |
| PGUQU-4-F | 8.0 | Δε (1 kHz, 20°C): | 4.8 |
| CCY-2-1 | 9.0 | γ₁ (20°C) [mPa.s] | 12.9 |
| CPY-3-1 | 10.0 | K, (20°C) [pN]: | 14.5 |
| PYP-2-3 | 2.0 | K₃ (20°C) [pN]: | 63 |
| Σ | 100.0 | V₀ (20°C) [V]: | 1.71 |

To the above mixture are added 500 ppm of stabilizer S1a and 500 ppm of stabilizer S2a1. The resultant mixture shows excellent stability against both heat load and back light load.

## Claims

1. Liquid-crystal medium having positive dielectric anisotropy, **characterised in that** it comprises
a) one or more compounds of the formulae S1 and S2a, 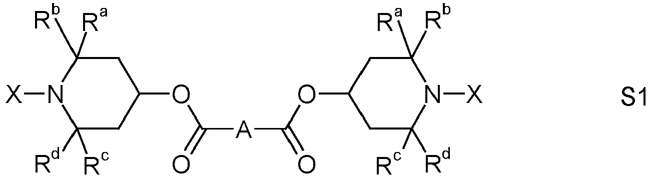 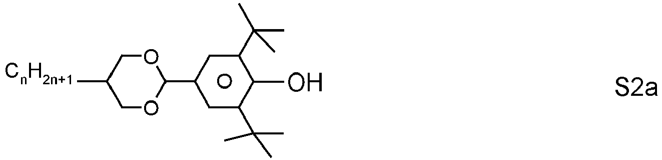 in which the individual radicals, independently of each other and on each occurrence identically or differently, have the following meanings:
R^{a} to R^{d} straight chain or branched alkyl with 1 to 10 C atoms, preferably with 1 to 6 C atoms, very preferably with 1 to 4 C atoms, most preferably methyl,
X H,
A straight-chain, branched or cyclic alkylene with 1 to 20 C-atoms which is optionally substituted, preferably -(CH₂)₈-, and
n an integer from 1 to 6,
and
b) one or more compounds selected from the group of the compounds of the formulae II and III 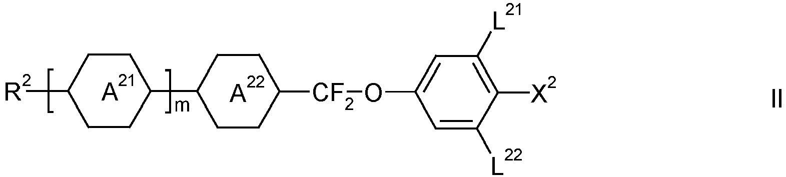 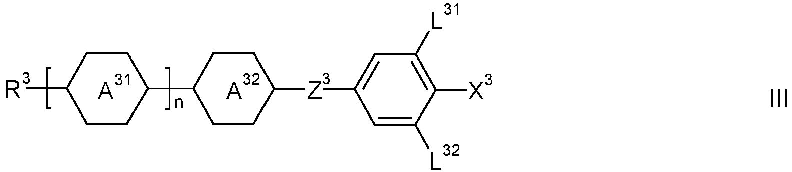 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 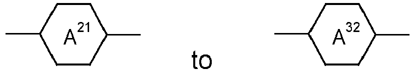 on each appearance, independently of one another, denote 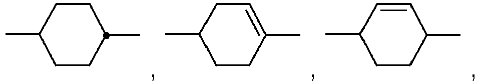 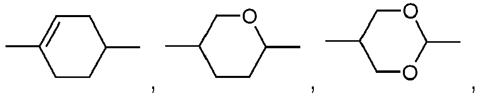 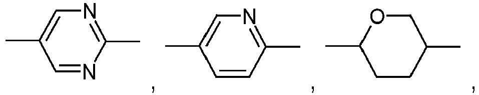 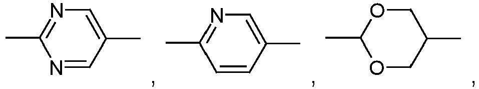 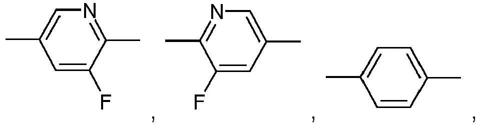 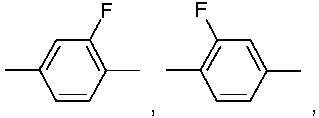 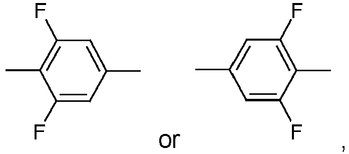
L²¹, L²², L³¹ and L³², independently of one another, denote H or F,
X² and X³, independently of one another, denote halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, *trans*-CH=CH-, *trans*-CF=CF-, -CH₂O- or a single bond, and
m and n, independently of one another, denote 0, 1, 2 or 3,
in a total concentration in the range of from 3% to 35% by weight;
and
c) a plurality of compounds selected from the group of compounds of the formulae CY, PY, PYP and LY 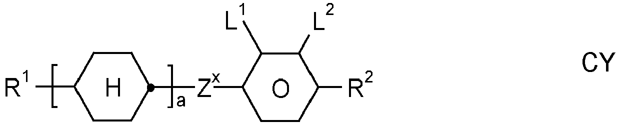 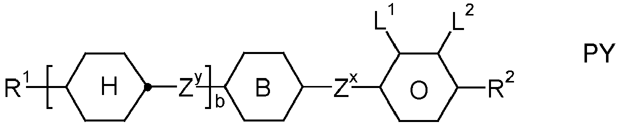 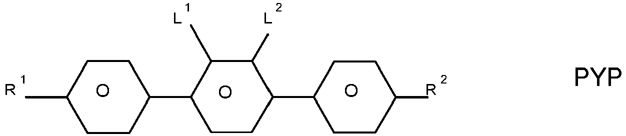 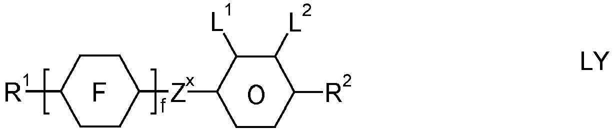 wherein the individual radicals, independently of each other and on each occurrence identically or differently, have the following meanings: 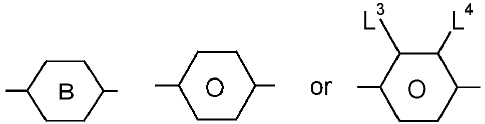 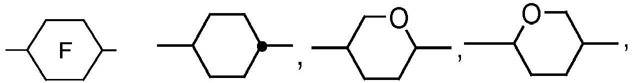 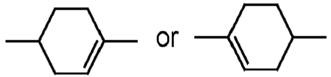 with at least one ring F being cyclohexenylene,
R¹ and R² alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
Z^{x} and Z^{y} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
L¹⁻⁴ F,
a 1 or 2,
b 0 or 1, and
f 1 or 2
and
- one or more compounds of the formula IV 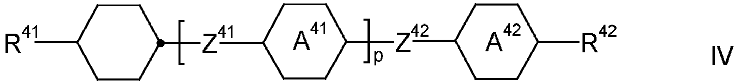 in which
R⁴¹ and R⁴², independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 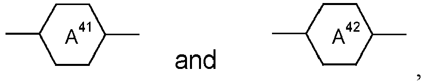 independently of one another, and, if 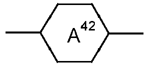 occurs twice, also these independently of one another, denote 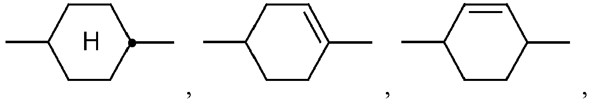 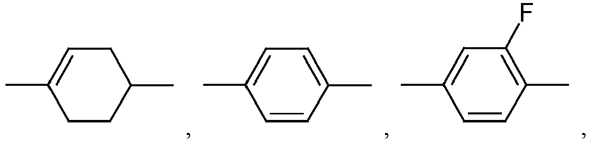 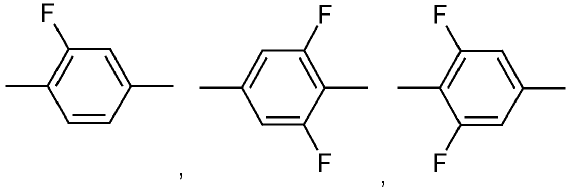 or 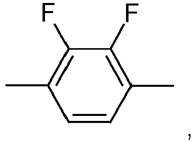
Z⁴¹ and Z⁴², independently of one another and, if Z⁴¹ occurs twice, also these independently of one another, denote -CH₂CH₂-, -COO-, trans-CH=CH-, *trans-*CF=CF-, -CH₂O-, -CF₂O-, -C=C- or a single bond, and
p denotes 0, 1 or 2,
in a total concentration in the range of from 40% to 60%,
and with the condition, that the six media M1 to M6 with the following compositions
| Component: | Host H1 | Host H2 | S1b | S2a1 |
|---|---|---|---|---|
| Medium | | Concentration / % | | |
| M1 | 99.92 | - | 0.03 | 0.05 |
| M2 | 99.90 | - | 0.05 | 0.05 |
| M3 | 99.85 | - | 0.10 | 0.05 |
| M4 | 99.80 | - | 0.15 | 0.05 |
| M5 | 99.75 | - | 0.20 | 0.05 |
| M6 | - | 99.85 | 0.10 | 0.05 |
with 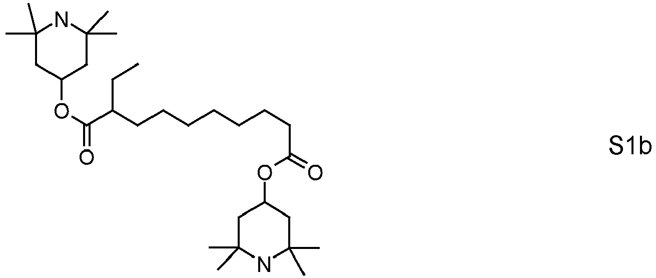 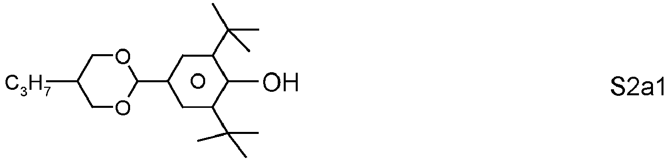 and
Host H1:
| Compound | Concentration / % |
|---|---|
| CC-3-V | 42.0 |
| CC-3-V1 | 5.5 |
| CCP-V-1 | 4.0 |
| CCP-30CF₃ | 4.0 |
| PGP-2-2V | 5.0 |
| APUQU-2-F | 5.0 |
| APUQU-3-F | 12.0 |
| CPGU-3-OT | 3.0 |
| PGUQU-3-F | 5.0 |
| CPY-3-O2 | 3.0 |
| CY-5-O2 | 9.0 |
| PYP-2-3 | 3.0 |
Host H2:
| Compound | Concentration / % |
|---|---|
| CC-3-V | 32.5 |
| CC-3-V1 | 12.0 |
| CC-3-2V1 | 10.5 |
| CCP-V-1 | 10.5 |
| CCP-V2-1 | 2.0 |
| PGP-2-2V | 7.0 |
| APUQU-2-F | 6.0 |
| APUQU-3-F | 7.5 |
| CY-5-O2 | 5.5 |
| B-2O-O5 | 3.5 |
| PP-1-2V1 | 2.5 |
| PPGU-3-F | 0.5 |
are excluded.

2. Medium according to Claim 1, **characterised in that** it comprises
- one or more compounds of the formula II and one or more compounds of formula III 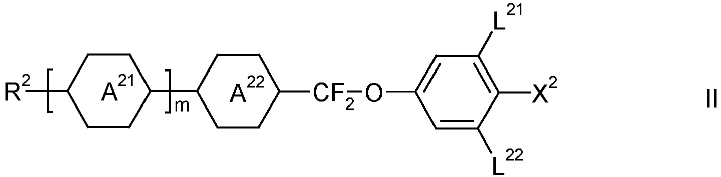 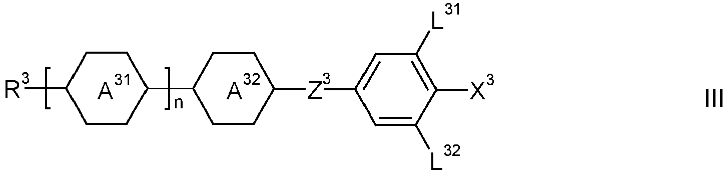 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 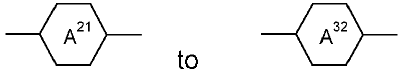 on each appearance, independently of one another, denote 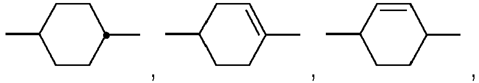 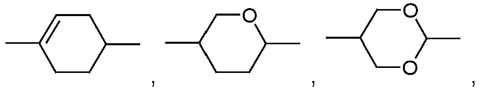 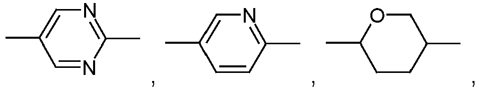 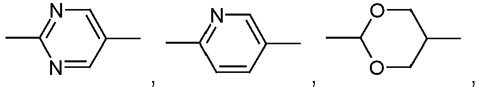 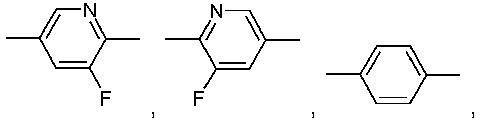 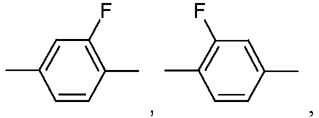 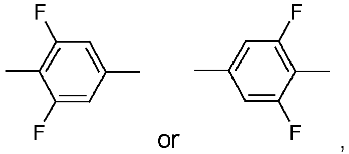
L²¹, L²², L³¹ and L³², independently of one another, denote H or F,
X² and X³, independently of one another, denote halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, trans-CH=CH-, trans-CF=CF-, -CH₂O- or a single bond, and
m and n, independently of one another, denote 0, 1, 2 or 3.

3. Medium according to Claim 1 or 2, **characterised in that** the total concentration of the compounds of the formulae S1 and S2a in the medium is in the range from 1 ppm to 5,000 ppm.

4. Medium according to one or more of Claims 1 to 3, **characterised in that** the compounds of the formulae S1 and S2a are compounds selected from the group of the compounds of their sub-formulae S1a and S1b and S2a1 , respectively , 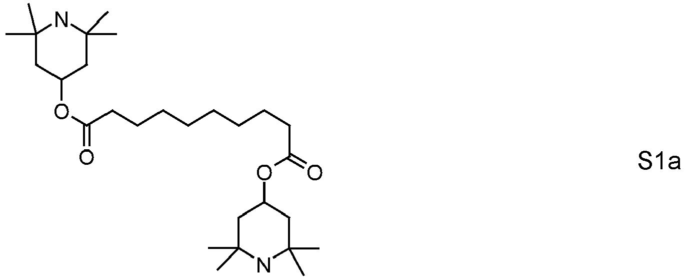 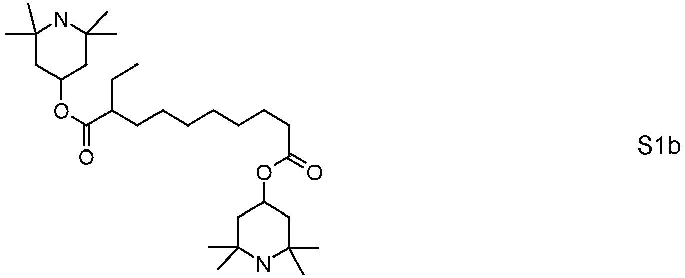 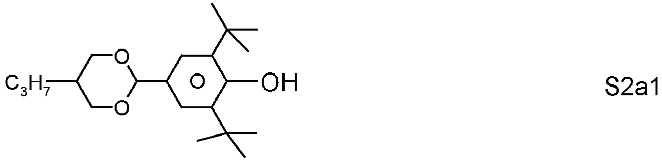 in which
n denotes an integer from 1 to 6

5. Medium according to one or more of Claims 1 to 4, **characterised in that** it comprises the compound of formula S1a

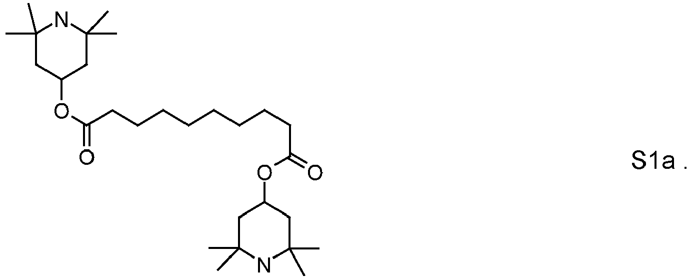

6. Medium according to one or more of Claims 1 to 5, **characterised in that** it comprises the compound of formula S1b

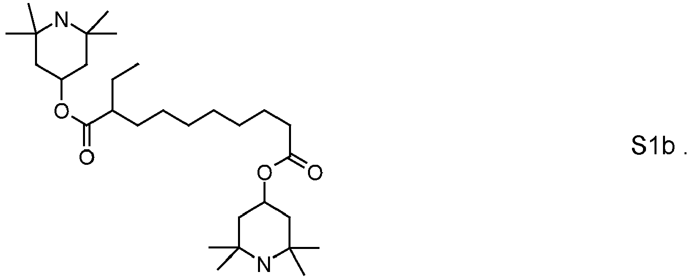

7. Medium according to one or more of Claims 1 to 6, **characterised in that** it comprises one or more dielectrically neutral compounds of the formula V, 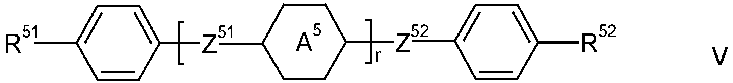 in which
R⁵¹ and R⁵², independently of one another, have the meaning indicated for R² under formula II in Claim 2, 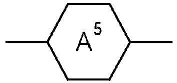 on each occurrence, independently of one another, denotes 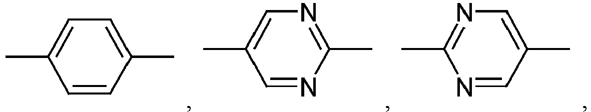 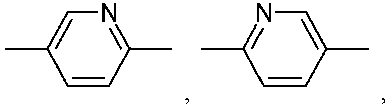 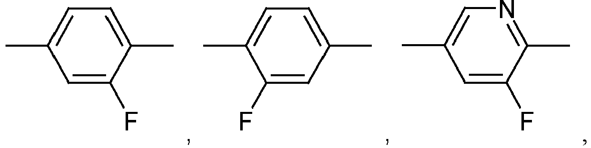 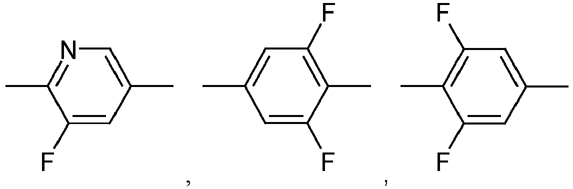 or 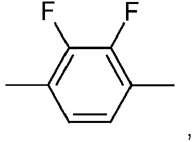
Z⁵¹ and Z⁵², independently of one another and, if Z⁵¹ occurs twice, also these independently of one another, denote -CH₂CH₂-, -COO-, trans-CH=CH-, trans-CF=CF-, -CH₂O-, -CF₂O- or a single bond, and
r denotes 0, 1 or 2.

8. Medium according to Claim 1, **characterised in that** it comprises one or more compounds selected from the group of compounds of the formulae CY-n-Om, CCY-n-Om, PY-n-Om and CPY-n-Om 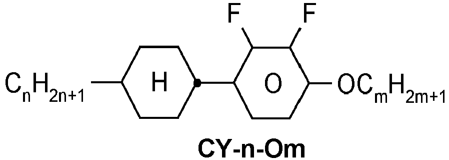 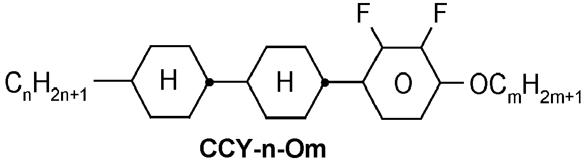 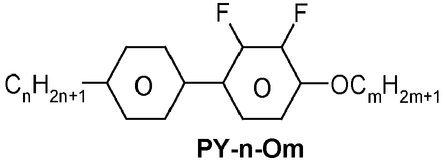 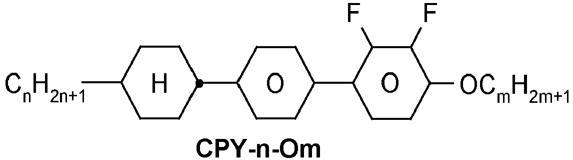 in which
n and m each denote integers

9. Medium according to Claim 1, **characterised in that** it comprises one or more compounds of the formula PYP-n-m 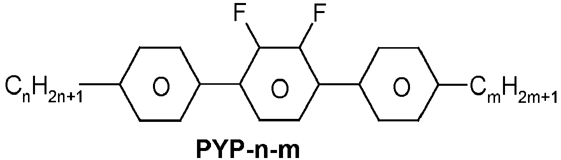 in which
n and m each denote integers

10. Liquid-crystal display, **characterised in that** it contains a medium according to one or more of Claims 1 to 9.

11. Display according to Claim 10, **characterised in that** it is addressed by an active matrix.

12. Use of a medium according to one or more of Claims 1 to 9 in a liquid-crystal display.

13. Process for the preparation of a medium according to one or more of Claims 1 to 9, **characterised in that** one or more compounds of the formulae S1 and S2a, as given in Claim 1, are mixed with one or more of the compounds mentioned in one or more of Claims 2 and 3 and/or one or more further mesogenic compounds and/or one or more additives.

## Patentansprüche

1. Flüssigkristallmedium mit positiver dielektrischer Anisotropie, **dadurch gekennzeichnet, dass** es
a) eine oder mehrere Verbindungen der Formeln S1 und S2a, 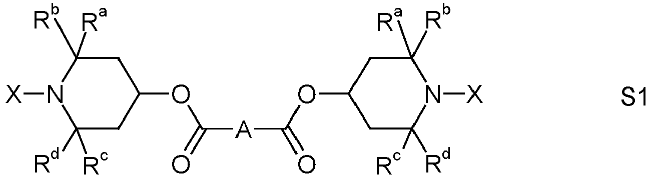 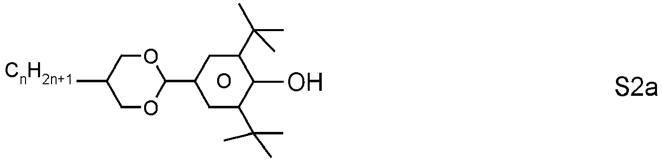 worin die einzelnen Reste unabhängig voneinander und bei jedem Auftreten gleich oder verschieden die folgenden Bedeutungen besitzen:
R^{a} bis R^{d} geradkettiges oder verzweigtes Alkyl mit 1 bis 10 C-Atomen, vorzugsweise mit 1 bis 6 C-Atomen, ganz bevorzugt mit 1 bis 4 C-Atomen, am stärksten bevorzugt Methyl,
X H,
A geradkettiges, verzweigtes oder cyclisches Alkylen mit 1 bis 20 C-Atomen, das gegebenenfalls substituiert ist, vorzugsweise -(CH₂)₈-, und
n eine ganze Zahl von 1 bis 6,
und
b) eine oder mehrere Verbindungen, die ausgewählt sind aus der Gruppe der Verbindungen der Formeln II und III 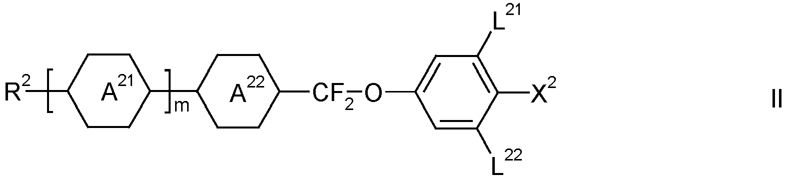 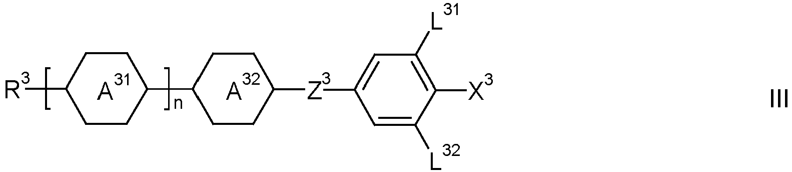 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 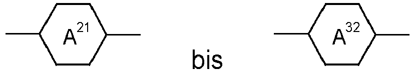 bei jedem Auftreten unabhängig voneinander 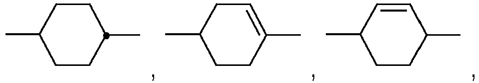 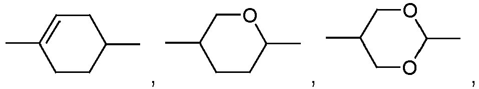 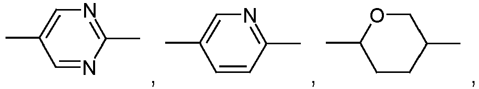 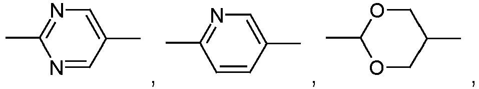 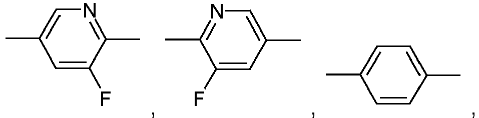 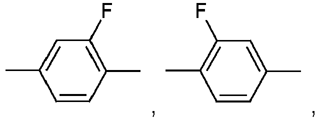 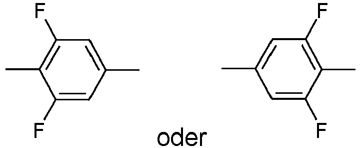 bedeuten,
L²¹, L²², L³¹ und L³² unabhängig voneinander H oder F bedeuten,
X² und X³ unabhängig voneinander Halogen, halogeniertes Alkyl oder Alkoxy mit 1 bis 3 C-Atomen oder halogeniertes Alkenyl oder Alkenyloxy mit 2 bis 3 C-Atomen bedeuten,
Z³ -CH₂CH₂-, -CF₂CF₂-, -COO-, trans-CH=CH-, *trans*-CF=CF-, -CH₂O- oder eine Einfachbindung bedeutet, und
m und n unabhängig voneinander 0, 1, 2 oder 3 bedeuten,
in einer Gesamtkonzentration im Bereich von 3 Gew.-% bis 35 Gew.-%; und
c) mehrere Verbindungen, die ausgewählt sind aus der Gruppe der Verbindungen der Formeln CY, PY, PYP und LY 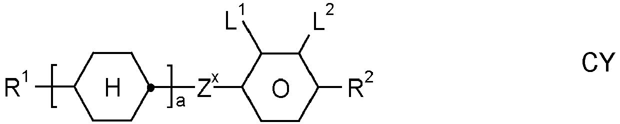 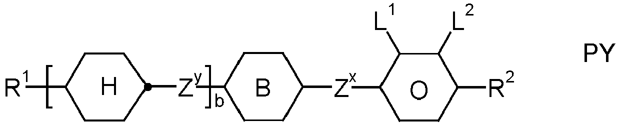 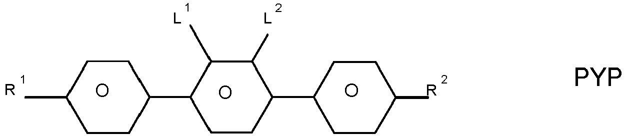 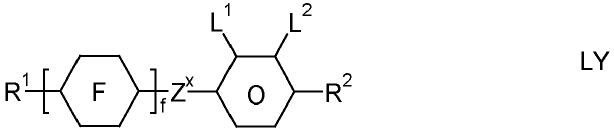 bei denen die einzelnen Reste, unabhängig voneinander und bei jedem Auftreten gleich oder verschieden, die folgenden Bedeutungen besitzen: 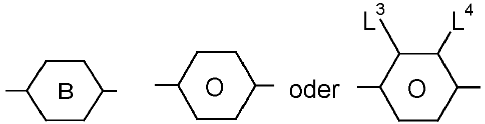 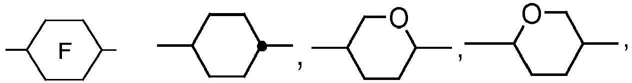 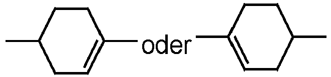 wobei mindestens ein Ring F Cyclohexenylen ist,
R¹ und R² Alkyl mit 1 bis 12 C-Atomen, wobei zusätzlich eine oder zwei nicht benachbarte CH₂-Gruppen so durch -O-, -CH=CH-, -CO-, -OCO- oder -COO- ersetzt sein können, dass O-Atome nicht direkt miteinander verknüpft sind, vorzugsweise Alkyl oder Alkoxy mit 1 bis 6 C-Atomen,
Z^{x} und Z^{y} -CH₂CH₂-, -CH=CH-, -CF₂₀-, -OCF₂-, -CH₂₀-, -OCH₂-, -CO-O-, -O-CO-, -C₂F₄-, -CF=CF-, -CH=CH-CH₂O- oder eine Einfachbindung, vorzugsweise eine Einfachbindung,
L¹⁻⁴ F,
a 1 oder 2,
b 0 oder 1, und
f 1 oder 2
und
- eine oder mehrere Verbindungen der Formel IV 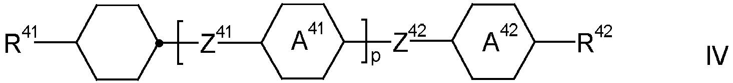 worin
R⁴¹ und R⁴² unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 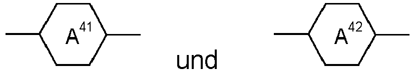 unabhängig voneinander und, wenn 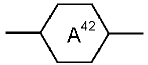 zweimal vorhanden ist, auch diese unabhängig voneinander 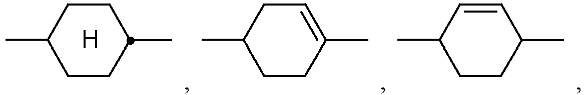 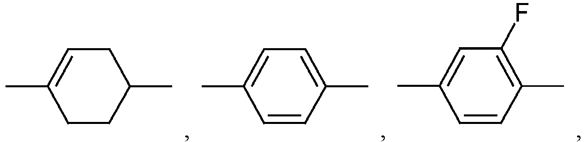 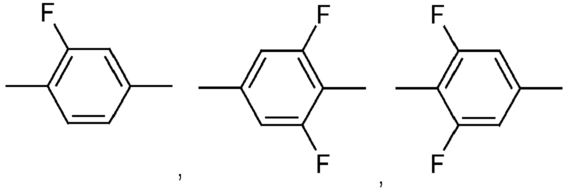 oder 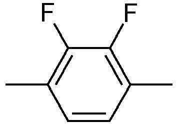 bedeuten,
Z⁴¹ und Z⁴² unabhängig voneinander und, wenn Z⁴¹ zweimal vorhanden ist, auch diese unabhängig voneinander -CH₂CH₂-, -COO-, trans-CH=CH-, *trans-*CF=CF-, -CH₂O-, -CF₂O-, -C=C- oder eine Einfachbindung bedeuten, und
p 0, 1 oder 2 bedeutet,
in einer Gesamtkonzentration im Bereich von 40% bis 60%,
enthält, und mit der Bedingung, dass die sechs Medien M1 bis M6 mit den folgenden Zusammensetzungen
| Komponente: | Host H1 | Host H2 | S1b | S2a1 |
|---|---|---|---|---|
| Medium | | Konzentration / % | | |
| M1 | 99,92 | - | 0,03 | 0,05 |
| M2 | 99,90 | - | 0,05 | 0,05 |
| M3 | 99,85 | - | 0,10 | 0,05 |
| M4 | 99,80 | - | 0,15 | 0,05 |
| | | | | |
|---|---|---|---|---|
| M5 | 99,75 | - | 0,20 | 0,05 |
| M6 | - | 99,85 | 0,10 | 0,05 |
mit 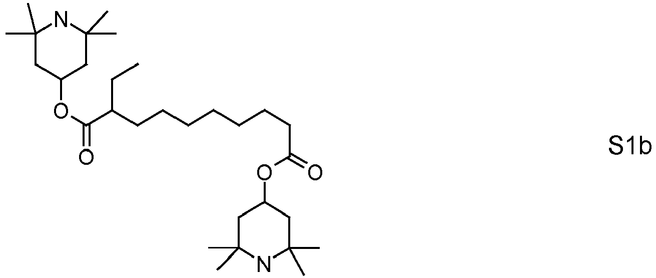 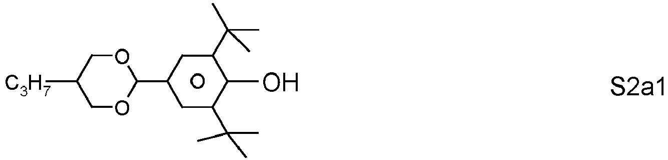 und
Host H1:
| Verbindung | Konzentration / % |
|---|---|
| CC-3-V | 42,0 |
| CC-3-V1 | 5,5 |
| CCP-V-1 | 4,0 |
| CCP-30CF₃ | 4,0 |
| PGP-2-2V | 5,0 |
| APUQU-2-F | 5,0 |
| APUQU-3-F | 12,0 |
| CPGU-3-OT | 3,0 |
| PGUQU-3-F | 5,0 |
| CPY-3-O2 | 3,0 |
| CY-5-O2 | 9,0 |
| PYP-2-3 | 3,0 |
Host H2:
| Verbindung | Konzentration / % |
|---|---|
| CC-3-V | 32,5 |
| CC-3-V1 | 12,0 |
| CC-3-2V1 | 10,5 |
| CCP-V-1 | 10,5 |
| CCP-V2-1 | 2,0 |
| PGP-2-2V | 7,0 |
| APUQU-2-F | 6,0 |
| APUQU-3-F | 7,5 |
| CY-5-O2 | 5,5 |
| B-2O-O5 | 3,5 |
| PP-1-2V1 | 2,5 |
| PPGU-3-F | 0,5 |
ausgeschlossen sind.

2. Medium nach Anspruch 1, **dadurch gekennzeichnet, dass** es
- eine oder mehrere Verbindungen der Formel II und eine oder mehrere Verbindungen der Formel III 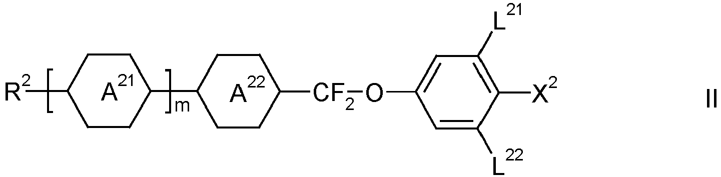 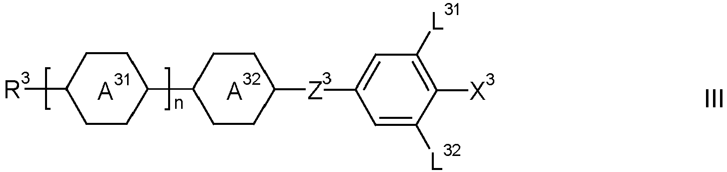 enthält, worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten, 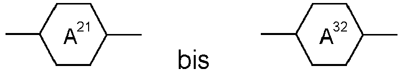 bei jedem Auftreten unabhängig voneinander 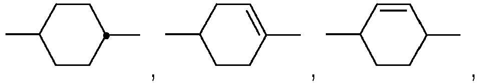 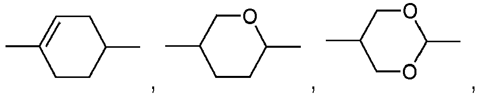 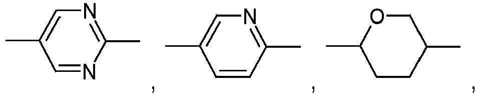 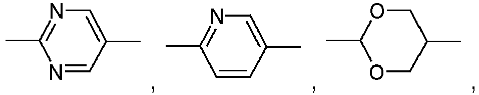 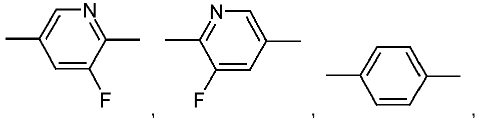 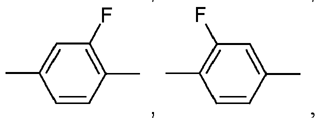 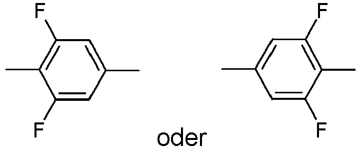 bedeuten,
L²¹, L²², L³¹ und L³² unabhängig voneinander H oder F bedeuten,
X² und X³ unabhängig voneinander Halogen, halogeniertes Alkyl oder Alkoxy mit 1 bis 3 C-Atomen oder halogeniertes Alkenyl oder Alkenyloxy mit 2 bis 3 C-Atomen bedeuten,
Z³ -CH₂CH₂-, -CF₂CF₂-, -COO-, *trans*-CH=CH-, *trans*-CF=CF-, -CH₂O- oder eine Einfachbindung bedeutet, und
m und n unabhängig voneinander 0, 1, 2 oder 3 bedeuten.

3. Medium nach Anspruch 1 oder 2, **dadurch gekennzeichnet, dass** die Gesamtkonzentration der Verbindungen der Formeln S1 und S2a in dem Medium im Bereich von 1 ppm bis 5.000 ppm liegt.

4. Medium nach einem oder mehreren der Ansprüche 1 bis 3, **dadurch gekennzeichnet, dass** die Verbindungen der Formeln S1 und S2a Verbindungen sind, die ausgewählt sind aus der Gruppe der Verbindungen ihrer Unterformeln S1a und S1b bzw. S2a1, 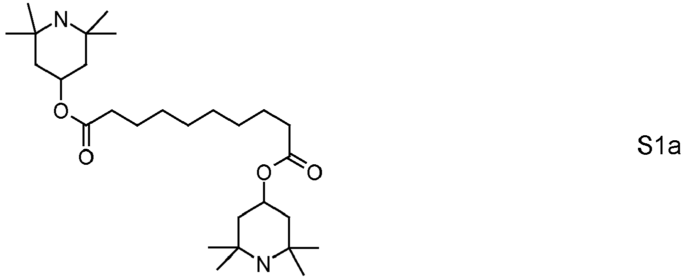 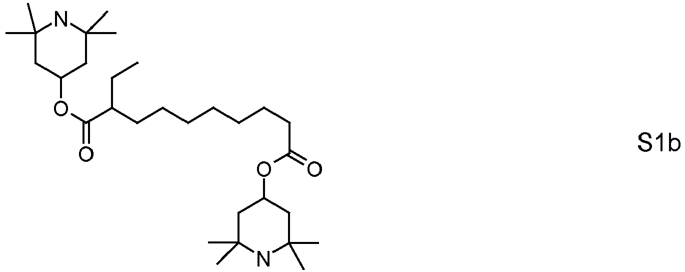 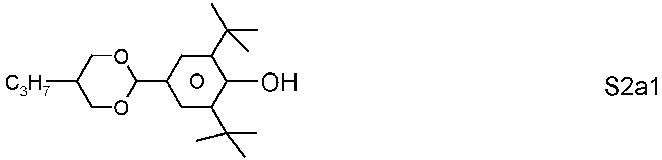 worin
n eine ganze Zahl von 1 bis 6 bedeutet

5. Medium nach einem oder mehreren der Ansprüche 1 bis 4, **dadurch gekennzeichnet, dass** es die Verbindung der Formel S1a 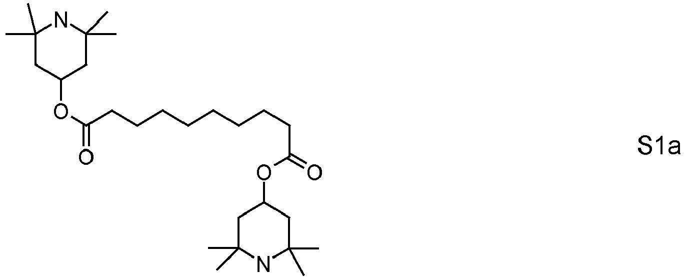 enthält.

6. Medium nach einem oder mehreren der Ansprüche 1 bis 5, **dadurch gekennzeichnet, dass** es die Verbindung der Formel S1b 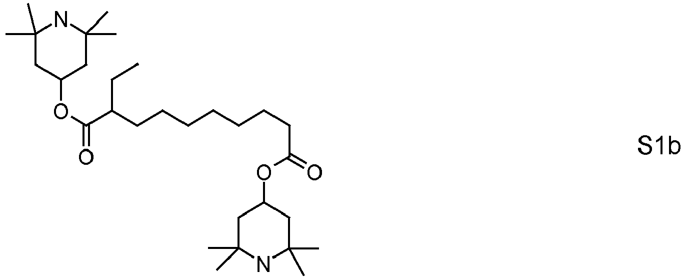 enthält.

7. Medium nach einem oder mehreren der Ansprüche 1 bis 6, **dadurch gekennzeichnet, dass** es eine oder mehrere dielektrisch neutrale Verbindungen der Formel V 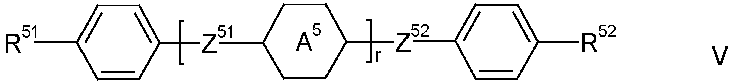 enthält, worin
R⁵¹ und R⁵² unabhängig voneinander die für R² unter Formel II in Anspruch 2 angegebene Bedeutung besitzen, 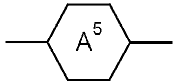 bei jedem Auftreten unabhängig voneinander 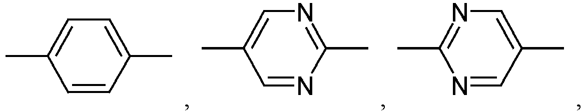 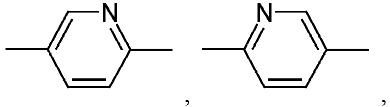 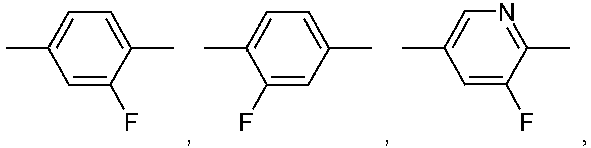 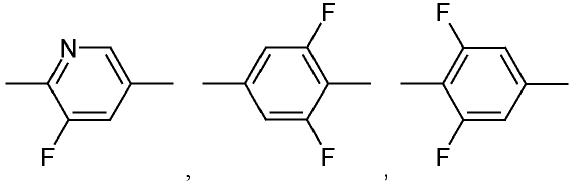 oder 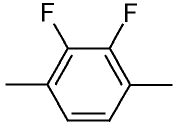 bedeutet,
Z⁵¹ und Z⁵² unabhängig voneinander und, wenn Z⁵¹ zweimal vorhanden ist, auch diese unabhängig voneinander -CH₂CH₂-, -COO-, *trans*-CH=CH-, *trans*-CF=CF-, -CH₂O-, -CF₂O- oder eine Einfachbindung bedeuten, und
r 0, 1 oder 2 bedeutet.

8. Medium nach Anspruch 1, **dadurch gekennzeichnet, dass** es eine oder mehrere Verbindungen enthält, die ausgewählt sind aus der Gruppe der Verbindungen der Formeln CY-n-Om, CCY-n-Om, PY-n-Om und CPY-n-Om 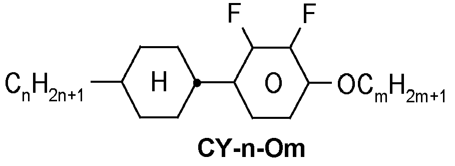 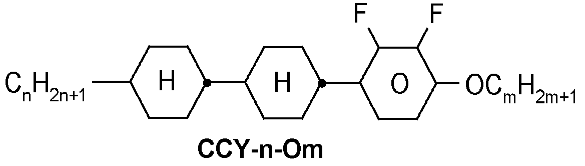 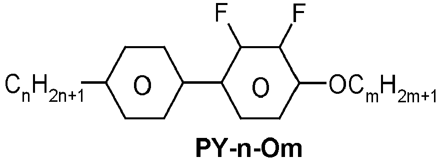 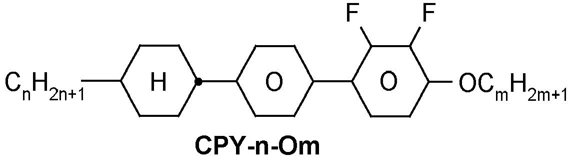 worin
n und m jeweils ganze Zahlen bedeuten

9. Medium nach Anspruch 1, **dadurch gekennzeichnet, dass** es eine oder mehrere Verbindungen der Formel PYP-n-m 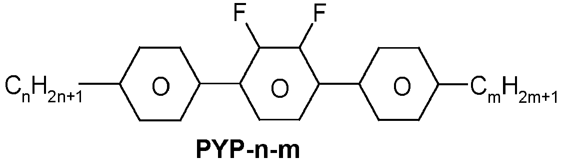 enthält, worin
n und m jeweils ganze Zahlen bedeuten

10. Flüssigkristallanzeige, **dadurch gekennzeichnet, dass** sie ein Medium nach einem oder mehreren der Ansprüche 1 bis 9 enthält.

11. Anzeige nach Anspruch 10, **dadurch gekennzeichnet, dass** sie durch eine Aktivmatrix adressiert wird.

12. Verwendung eines Mediums nach einem oder mehreren der Ansprüche 1 bis 9 in einer Flüssigkristallanzeige.

13. Verfahren zur Herstellung eines Mediums nach einem oder mehreren der Ansprüche 1 bis 9, **dadurch gekennzeichnet, dass** man eine oder mehrere Verbindungen der Formeln S1 und S2a, wie in Anspruch 1 gegeben, mit einer oder mehreren der in einem oder mehreren der Ansprüche 2 und 3 genannten Verbindungen und/oder einer oder mehreren mesogenen Verbindungen und/oder einem oder mehreren Zusatzstoffen mischt.

## Revendications

1. Milieu cristallin liquide ayant une anisotropie diélectrique positive, **caractérisé en ce qu'**il comprend
a) un ou plusieurs composés de formules S1 et S2a, 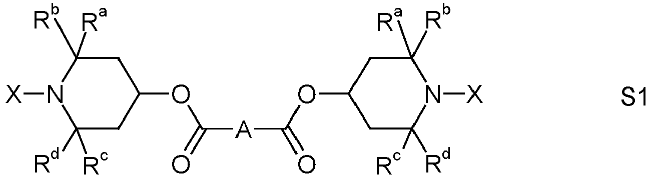 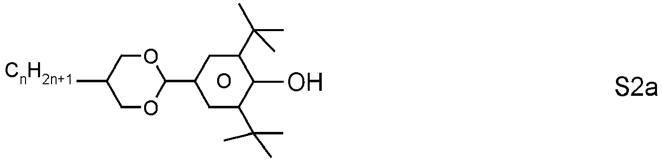 dans lesquelles les radicaux individuels, indépendamment les uns des autres et à chaque occurrence de manière identique ou différente, revêtent les significations suivantes :
R^{a} à R^{d} alkyle à chaîne linéaire ou ramifiée ayant de 1 à 10 atomes de C, préférablement ayant de 1 à 6 atomes de C, très préférablement ayant de 1 à 4 atomes de C, tout préférablement méthyle,
X H,
A alkylène à chaîne linéaire, ramifiée ou cyclique ayant de 1 à 20 atomes de C qui est éventuellement substitué, préférablement -(CH₂)₈-, et
n un nombre entier allant de 1 à 6,
et
b) un ou plusieurs composés choisis dans le groupe constitué par les composés de formules II et III 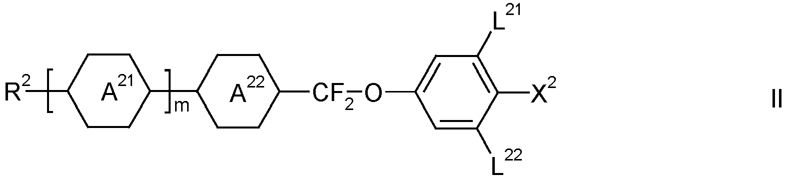 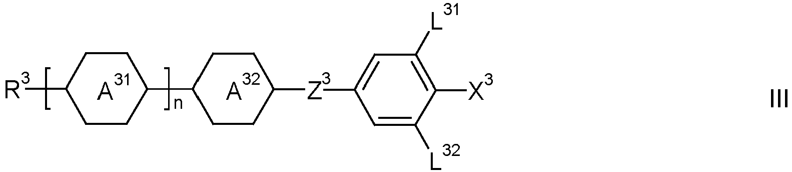 dans lesquelles
R² et R³, indépendamment l'un de l'autre, désignent alkyle, alcoxy, alkyle fluoré ou alcoxy fluoré ayant de 1 à 7 atomes de C, alcényle, alcényloxy, alcoxyalkyle ou alcényle fluoré ayant de 2 à 7 atomes de C, 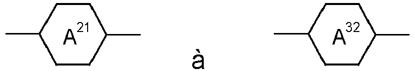 dans chaque cas, indépendamment les uns des autres, désignent 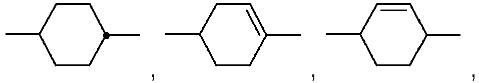 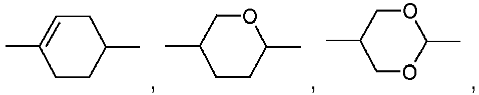 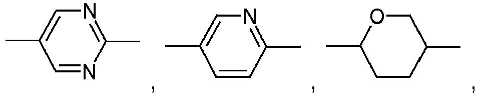 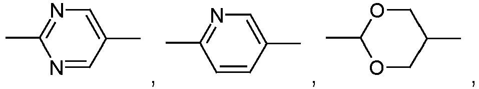 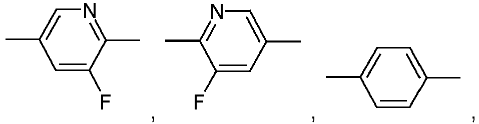 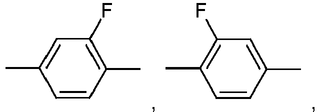 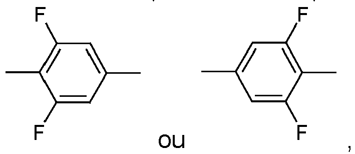
L²¹, L²², L³¹ et L³², indépendamment les uns des autres, désignent H ou F,
X² et X³, indépendamment l'un de l'autre, désignent halogène, alkyle ou alcoxy halogéné ayant de 1 à 3 atomes de C ou alcényle ou alcényloxy halogéné ayant 2 ou 3 atomes de C,
Z³ désigne -CH₂CH₂-, -CF₂CF₂-, -COO-, *trans*-CH=CH-, *trans*-CF=CF-, -CH₂O- ou une liaison simple, et
m et n, indépendamment l'un de l'autre, désignent 0, 1, 2 ou 3,
selon une concentration totale dans la plage allant de 3% à 35% en poids ;
et
c) une pluralité de composés choisis dans le groupe constitué par les composés de formules CY, PY, PYP et LY 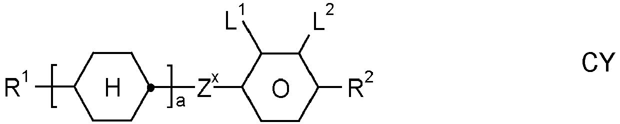 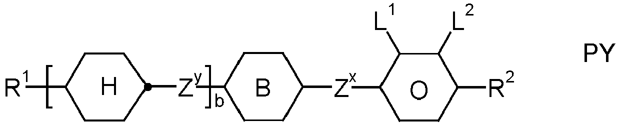 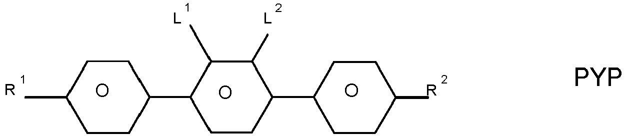 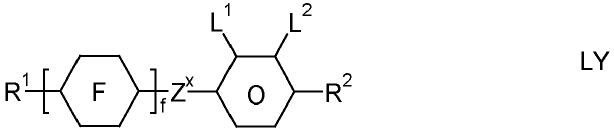 dans lesquelles les radicaux individuels, indépendamment les uns des autres et à chaque occurrence de manière identique ou différente, revêtent les significations suivantes : 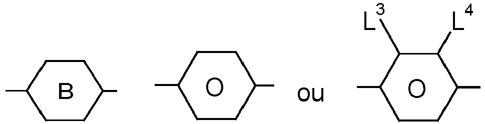 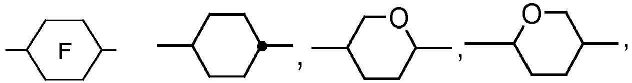 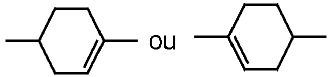 au moins un cycle F étant cyclohexénylène,
R¹ et R² alkyle ayant de 1 à 12 atomes de C, où, de plus, un ou deux groupements CH₂ non adjacents peuvent être remplacés par-O-, -CH=CH-, -CO-, -OCO- ou -COO- de telle sorte que les atomes de O ne soient pas liés directement les uns aux autres, préférablement alkyle ou alcoxy ayant de 1 à 6 atomes de C,
Z^{x} et Z^{y} -CH₂CH₂-, -CH=CH-, -CF₂O-, -OCF2-, -CH₂O-, -OCH2-, -CO-O-, -O-CO-, -C₂F₄-, -CF=CF-, -CH=CH-CH₂O- ou une liaison simple, préférablement une liaison simple,
L¹⁻⁴ F,
a 1 ou 2,
b 0 ou 1, et
f 1 ou 2
et
- un ou plusieurs composés de formule IV 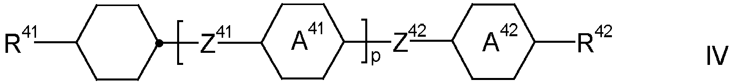 dans laquelle
R⁴¹ et R⁴², indépendamment l'un de l'autre, désignent alkyle, alcoxy, alkyle fluoré ou alcoxy fluoré ayant de 1 à 7 atomes de C, alcényle, alcényloxy, alcoxyalkyle ou alcényle fluoré ayant de 2 à 7 atomes de C, 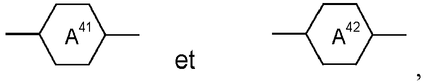 indépendamment l'un de l'autre, et, si 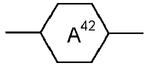 apparaît deux fois, ceux-ci de même indépendamment l'un de l'autre, désignent 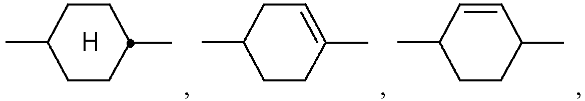 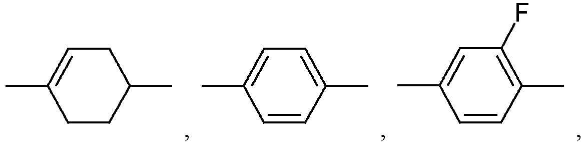 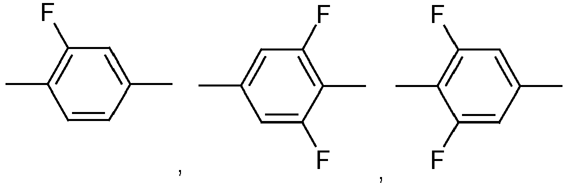 ou 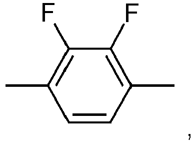
Z⁴¹ et Z⁴², indépendamment l'un de l'autre et, si Z⁴¹ apparaît deux fois, ceux-ci de même indépendamment l'un de l'autre, désignent -CH₂CH₂-, -COO-, *trans-*CH=CH-, trans-CF=CF-, -CH₂O-, -CF₂O-, -C≡C-ou une liaison simple, et
p désigne 0, 1 ou 2,
selon une concentration totale dans la plage allant de 40% à 60%,
et avec la condition selon laquelle les six milieux M1 à M6 ayant les compositions suivantes
| Composant : | Hôte H1 | Hôte H2 | S1b | S2a1 |
|---|---|---|---|---|
| Milieu | | Concentration / % | | |
| M1 | 99,92 | - | 0,03 | 0,05 |
| M2 | 99,90 | - | 0,05 | 0,05 |
| M3 | 99,85 | - | 0,10 | 0,05 |
| M4 | 99,80 | - | 0,15 | 0,05 |
| M5 | 99,75 | - | 0,20 | 0,05 |
| M6 | - | 99,85 | 0,10 | 0,05 |
avec 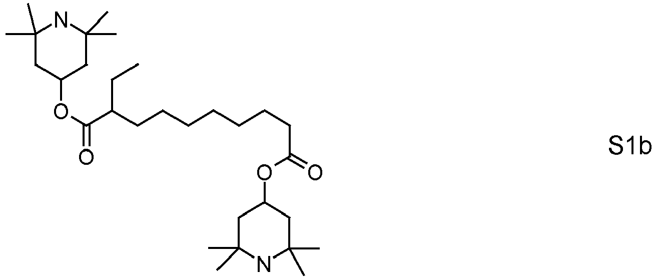 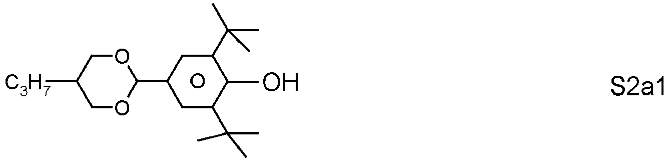 et
Hôte H1 :
| Composé | Concentration / % |
|---|---|
| CC-3-V | 42,0 |
| CC-3-V1 | 5,5 |
| CCP-V-1 | 4,0 |
| CCP-30CF₃ | 4,0 |
| PGP-2-2V | 5,0 |
| APUQU-2-F | 5,0 |
| APUQU-3-F | 12,0 |
| CPGU-3-OT | 3,0 |
| PGUQU-3-F | 5,0 |
| CPY-3-O2 | 3,0 |
| CY-5-O2 | 9,0 |
| PYP-2-3 | 3,0 |
Hôte H2 :
| Composé | Concentration / % |
|---|---|
| CC-3-V | 32,5 |
| CC-3-V1 | 12,0 |
| CC-3-2V1 | 10,5 |
| CCP-V-1 | 10,5 |
| CCP-V2-1 | 2,0 |
| PGP-2-2V | 7,0 |
| APUQU-2-F | 6,0 |
| APUQU-3-F | 7,5 |
| CY-5-O2 | 5,5 |
| B-2O-O5 | 3,5 |
| PP-1-2V1 | 2,5 |
| PPGU-3-F | 0,5 |
soient exclus.

2. Milieu selon la revendication 1, **caractérisé en ce qu'**il comprend
- un ou plusieurs composés de formule II et un ou plusieurs composés de formule III
| | |
|---|---|
| 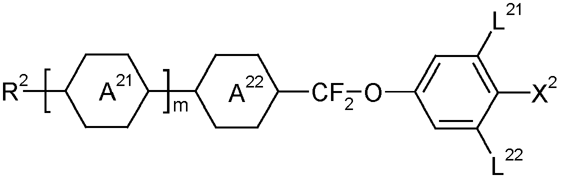 | II |

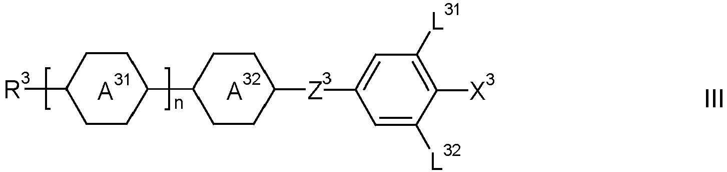
dans lesquelles
R² et R³, indépendamment l'un de l'autre, désignent alkyle, alcoxy, alkyle fluoré ou alcoxy fluoré ayant de 1 à 7 atomes de C, alcényle, alcényloxy, alcoxyalkyle ou alcényle fluoré ayant de 2 à 7 atomes de C, 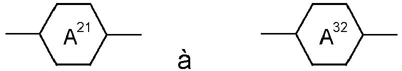 dans chaque cas, indépendamment l'un de l'autre, désignent 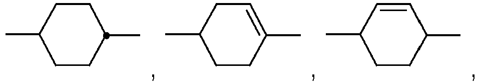 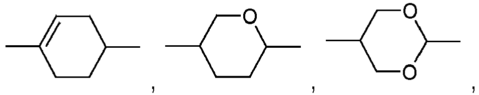 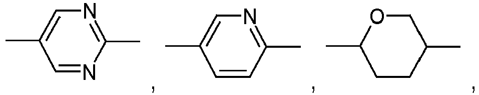 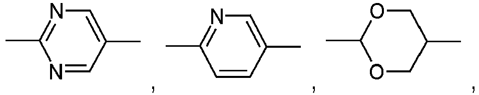 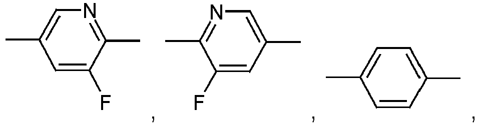 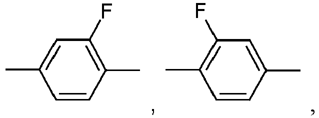 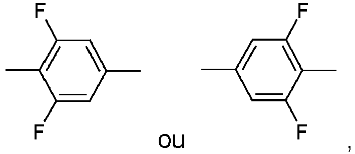
L²¹, L²², L³¹ et L³², indépendamment les uns des autres, désignent H ou F,
X² et X³, indépendamment l'un de l'autre, désignent halogène, alkyle ou alcoxy halogéné ayant de 1 à 3 atomes de C ou alcényle ou alcényloxy halogéné ayant 2 ou 3 atomes de C,
Z³ désigne -CH₂CH₂-, -CF₂CF₂-, -COO-, *trans*-CH=CH-, *trans*-CF=CF-, -CH₂O- ou une liaison simple, et
m et n, indépendamment l'un de l'autre, désignent 0, 1, 2 ou 3.

3. Milieu selon la revendication 1 ou 2, **caractérisé en ce que** la concentration totale en composés de formules S1 et S2a dans le milieu se trouve dans la plage allant de 1 ppm à 5000 ppm.

4. Milieu selon l'une ou plusieurs parmi les revendications 1 à 3, **caractérisé en ce que** les composés de formules S1 et S2a sont des composés choisis dans le groupe constitué par les composés de sous-formules S1a et S1b et S2a1, respectivement, 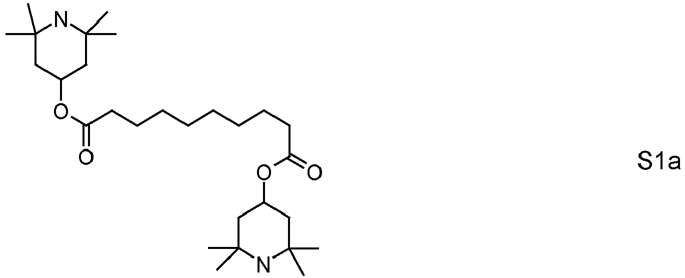 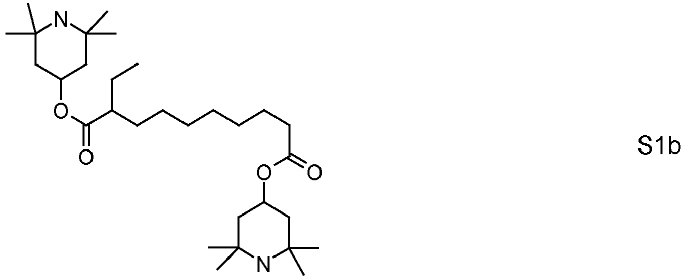 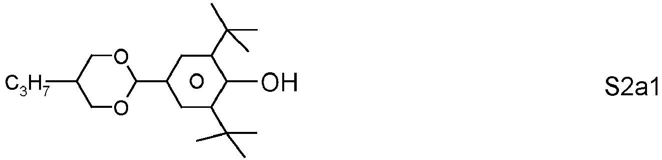 dans lesquelles
n désigne un nombre entier allant de 1 à 6

5. Milieu selon l'une ou plusieurs parmi les revendications 1 à 4, **caractérisé en ce qu'**il comprend le composé de formule S1a

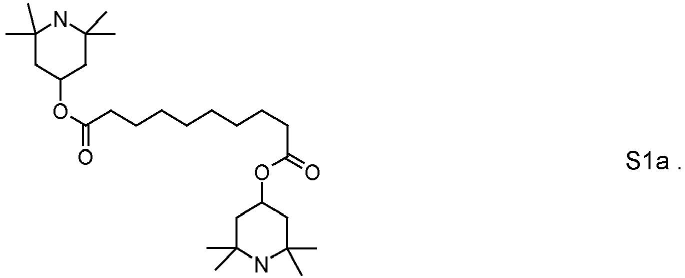

6. Milieu selon l'une ou plusieurs parmi les revendications 1 à 5, **caractérisé en ce qu'**il comprend le composé de formule S1b

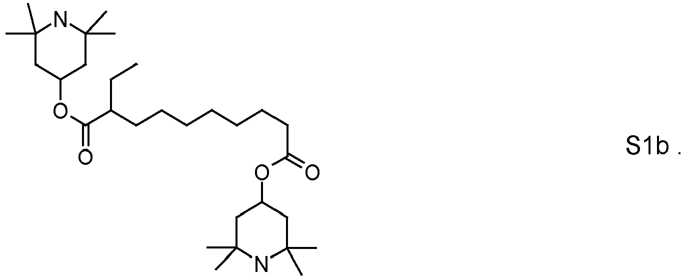

7. Milieu selon l'une ou plusieurs parmi les revendications 1 à 6, **caractérisé en ce qu'**il comprend un ou plusieurs composés diélectriquement neutres de formule V, 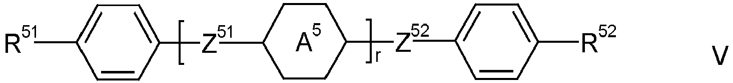 dans laquelle
R⁵¹ et R⁵², indépendamment l'un de l'autre, revêtent la signification indiquée pour R² dans la formule II selon la revendication 2, 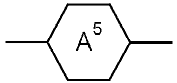 à chaque occurrence, indépendamment les uns des autres, désigne 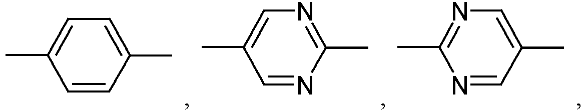 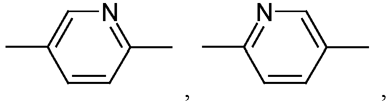 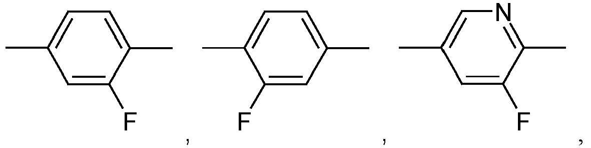 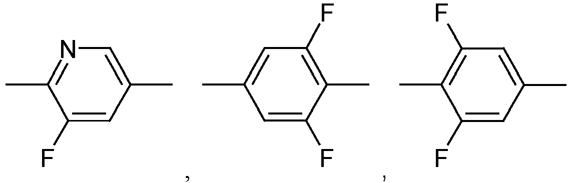 ou 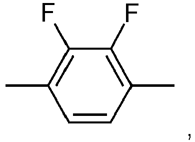
Z⁵¹ et Z⁵², indépendamment l'un de l'autre et, si Z⁵¹ apparaît deux fois, ceux-ci de même indépendamment l'un de l'autre, désignent -CH₂CH₂-, -COO-, *trans*-CH=CH-, *trans*CF=CF-, -CH₂O-, -CF₂O- ou une liaison simple, et
r désigne 0, 1 ou 2.

8. Milieu selon la revendication 1, **caractérisé en ce qu'**il comprend un ou plusieurs composés choisis dans le groupe constitué par les composés de formules CY-n-Om, CCY-n-Om, PY-n-Om et CPY-n-Om 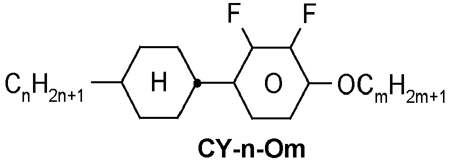 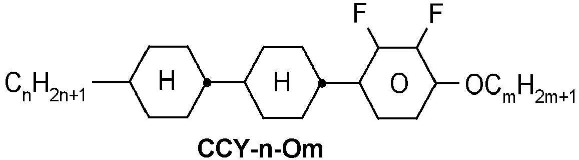 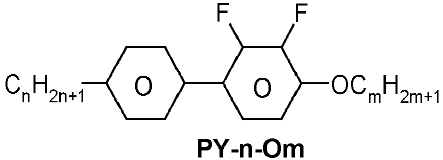 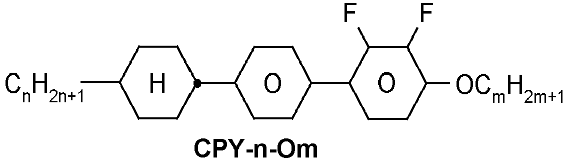 dans lesquelles
n et m désignent chacun des nombres entiers

9. Milieu selon la revendication 1, **caractérisé en ce qu'**il comprend un ou plusieurs composés de formule PYP-n-m 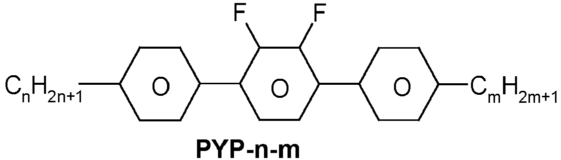 dans laquelle
n et m désignent chacun des nombres entiers

10. Affichage à cristaux liquides, **caractérisé en ce qu'**il contient un milieu selon l'une ou plusieurs parmi les revendications 1 à 9.

11. Affichage selon la revendication 10, **caractérisé en ce qu'**il est adressé par une matrice active.

12. Utilisation d'un milieu selon l'une ou plusieurs parmi les revendications 1 à 9, dans un affichage à cristaux liquides.

13. Procédé de préparation d'un milieu selon l'une ou plusieurs parmi les revendications 1 à 9, **caractérisé en ce qu'**un ou plusieurs composés de formules S1 et S2a, telles que données selon la revendication 1, sont mélangés avec un ou plusieurs parmi les composés mentionnés selon l'une ou plusieurs parmi les revendications 2 et 3 et/ou un ou plusieurs autres composés mésogènes et/ou un ou plusieurs additifs.
